# EUROPEAN PATENT APPLICATION

(11) **EP 1 542 112 A1**
(43) Date of publication of application: **15.06.2005**
(21) Application number: 02743883.7
(22) Date of filing: 09.07.2002
(51) Int. Cl.: G06F 1/00

(54) **OPEN TYPE GENERAL-PURPOSE ATTACK-RESISTANT CPU, AND APPLICATION SYSTEM THEREOF**

(71) Applicant: FUJITSU LIMITED, Kawasaki-shi, Kanagawa 211-8588 (JP)
(72) Inventor: HATAKEYAMA, Takahisa, c/o Fujitsu Limited, Kawasaki-shi, Kanagawa 211-8588 (JP); MURUYAMA, Hidefumi, c/o Fujitsu Limited, Kawasaki-shi, Kanagawa 211-8588 (JP); USHIWAKA, Keiichi, c/o Fujitsu Limited, Kawasaki-shi, Kanagawa 211-8588 (JP); HASEBE, Takayuki, c/o Fujitsu Limited, Kawasaki-shi, Kanagawa 211-8588 (JP); MAEDA, Naoaki, c/o Fujitsu Limited, Kawasaki-shi, Kanagawa 211-8588 (JP); SUGA, Atsuhiro, c/o Fujitsu Limited, Kawasaki-shi, Kanagawa 211-8588 (JP)
(74) Representative: Stebbing, Timothy Charles
(86) International application number: PCT/JP2002/006955
(87) International publication number: WO 2004/006075

(57) **Abstract**

A central processing unit (GT) 10 comprises a private key in secrecy, and an encryption engine 16. Before the GT 10 executes software, a license added to the software is entered into the GT 10. The license includes information obtained by encrypting a code encryption key used when the software is encrypted with a public key pairing with the private key. When the license is entered, the encryption engine 16 obtains the code encryption key by decrypting the license with the private key, and decrypts the software with the code encryption key.

## Description

### Technical Field

The present invention relates to a technology for coping with an attack which falsifies information within a device, or an attack which attempts to extract secret information.

### Background Art

With the promotion of a digital contents distribution, a technology (DRM: (Digital Rights Management)) for protecting a right of contents, such as a copyright, etc., has been provided in recent years. Examples of the DRM include UDAC (Universal Distribution with Access Control) jointly developed by three companies such as Sanyo Denki, Hitachi, and Fujitsu.

It is important to implement DRM as a TRM (Tamper Resistant Module) in a user system in order to make the security level of contents protection sufficient when the DRM such as UDAC is comprised (implementing the DRM as a TRM is referred to as DRM implementation as a TRM hereinafter). Currently, implementation as a TRM, which is normally made for a consumer product, is broadly classified into two methods such as a hardware TRM and a software TRM.

The hardware TRM is a TRM implemented by forming a structure where a read, etc. of secret information cannot be made from an external terminal of a semiconductor, and by applying special coating or microminiaturization. In contrast with the software TRM, the hardware TRM can be also called a "tamper resistant container" particularly. The software TRM is a TRM implemented by putting a code desired to be encrypted into a structure difficult to be analyzed, by encrypting the code, and by decrypting the code at the moment of execution.

However, the conventional TRMs have the following problems.
1. hardware TRM problems
   - Because a cost is stressed for a consumer use, DRM must be semiconductor-packaged. However, since resources that can be mounted on one chip have limitations, diverse functions cannot be provided. A hardware TRM cannot cope with the case where the size of a region to which a license key or a CRL (Certificate Revocation List) is recorded is desired to be expanded, the case where a contents usage condition is desired to be represented in an XrML (extensible rights Markup Language), or the like.
   - If safety is stressed, all of a used processor and recording medium must be included in a hardware TRM. This makes it difficult to expand a function once the hardware TRM is manufactured. Additionally, for this reason, limitations are imposed on a recording medium available to software. Therefore, it is difficult to make a processor simultaneously execute normal (not required to be protected) software applications, which consume a lot of resources. It is also difficult to make a processor execute a plurality of protection software applications whose encryption keys are different. That is, a hardware TRM does not have general versatility.
   - It is necessary to develop a new chip each time a contents type is added, or DRM is upgraded, and to newly set up a line for a semiconductor manufacturing process, etc. Therefore, a manufacturing cost increases.
   - A "successive evolution of information technology", which implements smooth bug fixing or functional expansion by providing many types of functions to users only with the development/instalation of respective software applications on a general-purpose CPU chip having compatibility, can be possibly impeded.
2. software TRM problems
   - A root private key cannot be encrypted, and can be easily found only with a software analysis in whatever manner the private key is distributed and stored.
   - Contents of execution is traced with a hardware ICE (In Circuit Emulator), so that various items of secret information including a private key can be found with ease.

### Disclosure of Invention

An object of the present invention is to provide a TRM that overcomes the above described problems, and has not only general versatility equivalent to a software TRM, but also safety equivalent to a hardware TRM.

To achieve the above described object, according to a mode of the present invention, a central processing unit comprises a first private key concealed in secrecy, and an encrypting unit performing encryption and decryption. The first private key pairs with a public key, and the encrypting unit obtains from a first license a code decryption key for decrypting a first program by decrypting with the first private key the first license of the first program, which is encrypted with the public key. The code decryption key may be the same as the code encryption key used when the first program is encrypted. Additionally, the first license may be buried in the first program, or the first license and the first program may be distributed separately.

With such a configuration, the private key required to obtain the key for decrypting the first program is recorded in secrecy within the central processing unit. Therefore, the private key is never distributed and stored. This overcomes the problem that the private key is easily found with a program analysis.

Additionally, the central processing unit may further comprise a cache, and the encrypting unit may decrypt an encrypted block in units of cache when the encrypted block which configures the first program is output from a memory region to the cache. An encrypted block is decrypted in units of cache, and recorded to the cache, so that safety can be improved more than ever.

Furthermore, the central processing unit may further comprise a tamper resistant buffer that a user cannot reference or falsify, and the code decryption key may be recorded to the tamper resistant buffer.

Because a user cannot reference or falsify the key recorded in the tamper resistant buffer even in a kernel mode, the code decryption key can be held safely.

Here, the tamper resistant buffer may further include unable-to-output information and cache lock information. The unable-to-output information indicates whether or not to output corresponding information within the tamper resistant buffer to the outside of the tamper resistant buffer, whereas the cache lock information indicates whether or not to output corresponding information to the outside of the cache. A move of the first license between the first program and a different program may be managed based on the unable-to-output information and the cache lock information. As a result, an unreplicatable private locker can be implemented in the central processing unit. Accordingly, for example, if a license is made movable among a plurality of programs, an illegal copy of the license by a retransmitted attack can be prevented.

Still further, in the central processing unit, the first license may include an access condition used when an execution process of the first program accesses a memory region, and a TLB (Translation Lookaside Buffer) recording an address of the memory region, to which the encrypted block which configures the first program is recorded, and the access condition to the memory region, a memory managing unit, a cache, and a processor core may be further comprised. In this configuration, the tamper resistant buffer is linked to the TLB, and the memory managing unit obtains the access condition to the memory region from the TLB based on the address of the memory region, to which the encrypted block is recorded, and further obtains the code decryption key corresponding to the memory region from the tamper resistant buffer. The processor core determines whether or not an access to the memory region is permitted to be made from the execution process based on the access condition obtained by the memory managing unit, and the access to the memory region is made from the execution process if the processor core determines that the access to the memory region is permitted to be made. The encrypting unit writes to the cache a code obtained by decrypting the encrypted block within the memory region with the code decryption key obtained by the memory managing unit.

A memory region is corresponded to the tamper resistant buffer via the TLB. A key for decrypting the block written to the memory region is obtained based on this correspondence. Also the access to the memory region is controlled according to an access condition within the TLB. Accordingly, the access control for a memory region, and loading of a block into the cache can be performed safely.

Here, if a memory region accessed from the execution process of the first program switches from a first memory region to a second memory region, the memory managing unit may further determine whether or not a code decryption key corresponding to the first memory region, which is obtained from the tamper resistant buffer, and a code decryption key corresponding to the second memory region match. If the memory managing unit determines that the code decryption keys match, an access may be made to the second memory region from the execution process. If the memory managing unit determines that the code decryption keys mismatch, the access to the second memory region may not be made from the execution process. As a result, if an address currently being executed is moved from a certain memory region to a different memory region to which a code decryption key different from that of the certain memory region is corresponded, an access to the different memory region from the execution process cannot be made. Consequently, an owner process can be prohibited from making an access to a memory region of a different owner process.

Still further, in the central processing unit, a different data encryption key may be recorded to the tamper resistant buffer for each code encryption key, and the encrypting unit may record data within the cache to the memory region that is corresponded to the data decryption key via the TLB after encrypting the data with the data encryption key, and may write encrypted data within the memory region to the cache after reading the encrypted data from the memory region, and decrypting the read data with the data encryption key. As a result, an operation for saving data in a memory region, or for loading data into the cache can be performed safely.

Still further, in the central processing unit, when working data obtained by executing a first code is used by a second code, the processor core may set the TLB so as to provide the second code with an access right to a memory region to which the working data is recorded, and may also set the tamper resistant buffer so that the second code uses a data encryption key for encrypting the working data when reading the working data from the memory region.

As a result, even if the code encryption key of the first code and that of the second code are different, the first code and the second code share the data encryption key, so that the second code can read the data obtained by executing the first code. Accordingly, even if the central processing unit executes two or more software applications while protecting them, a memory region can be shared safely as occasion demands.

Still further, the central processing unit may further comprise a register, and a register access control table for performing access control for the register, and the processor core may control sealing and release of the register with a sealing flag within the register access control table. As a result, if a process stores data in the register, the register can be sealed to disable an access to the data stored in the register from a process other than the process currently being executed.

Still further, in the central processing unit, when contents of the TLB is recorded to an external page table, the encrypting unit may affix a signature to the contents to be recorded, and may verify whether or not the signature is legal before contents of the page table is captured into the TLB. As a result, the contents of the TLB can be held in the page table safely.

Still further, in the central processing unit, when contents of the tamper resistant buffer is recorded to an encryption key table within an external storage device, the encrypting unit may encrypt the contents to be recorded. As a result, the contents of the tamper resistant buffer can be held in the external storage device safely.

Note that both a private key used when a signature of the contents of the TLB is generated, and a private key used when the contents of the tamper resistant buffer is encrypted may be generated by the processor within the central processing unit.

Still further, the central processing unit may be connected to a different central processing unit, and may obtain a session key by making mutual authentication with the different central processing unit. The encrypting unit within the central processing unit may encrypt the contents of the cache within the central processing unit with the session key, and may synchronously transfer the contents to the different central processing unit. As a result, in a multi-CPU comprising a plurality of central processing units having the above described configuration, contents of caches can be synchronized safely.

Still further, in the central processing unit, the encrypting unit may obtain a private key encryption key used when a second private key is encrypted by decrypting a second license added to a second program with the public key before the first program is executed, and may decrypt the second private key with the obtained private key encryption key.

At this time, an access condition indicating that only a read can be made from an execution process of the first program may be added to the second license, and the second private key may be made readable only from the execution process of the first program. The second private key can be read only from the execution process of the first program, whereby secret information can be held and managed safely.

Note that the first program may any software requested to be implemented as a TRM. For example, as the first program, a trusted computing module, a program for causing the central processing unit to implement an electronic wallet, software handling personal information, virus check software for a code installed in the central processing unit, a mobile agent which moves among a plurality of central processing units, a control program for a robot, a security program for an IC card, etc. can be cited.

Still further, in the central processing unit, a variety of forms can be considered as the block which configures the first program, and further means may be comprised according to the forms.

For example, the block may include hash verification requirement/nonrequirement information indicating whether or not verification of a hash value of the block is required, and the central processing unit may further comprise a hash unit calculating the hash value of the block, and adding the hash value to the block based on the hash verification requirement/nonrequirement information, and a hash verifying unit verifying the hash value of the block based on the hash verification requirement/nonrequirement information.

Still further, for example, the block may include encryption requirement/nonrequirement information indicating whether or not the block requires protection, and the central processing unit may further comprise a protection block selecting unit determining whether the block is output either to the encrypting unit or to the cache or a memory region unchanged based on the encryption requirement/nonrequirement information.

Or, the following configuration may be implemented to reduce the load on the protection block selecting unit selecting a block for each block,

For example, a header of an executable file of the first program includes an encrypted block bitmap indicating the configuration of the block which configures the first program, and the protection block selecting unit determines whether the block is output either to the encrypting unit or to the cache or a memory region unchanged based on the encrypted block bitmap.

Still further, for example, a start of a code of the first program is a code which specifies that a plurality of blocks configuring the first program are a repetition of a combination of a plain text block and an encrypted block, and also specifies a number of successive plain text blocks, and a number of successive encrypted blocks in the combination, and the processor core determines whether the block is output either to the encrypting unit or to the cache or a memory region unchanged by executing this code.

Still further, the central processing unit may further comprise a cache line via the encrypting unit, and a cache line not via the encrypting unit between the cache and a memory. As a result, the processing speed can be improved.

Still further, a program for causing a central processing unit to execute a process of a control for giving authorization to execute a protection program is configured as a further mode of the present invention. The process comprises: causing the protection program to be encrypted with a code encryption key; causing a license, which includes the code encryption key and is encrypted with a public key pairing with a private key comprised in secrecy within the central processing unit, to exist in correspondence with the protection program; entering the license into the central processing unit before the central processing unit executes the protection program; causing an encrypting unit comprised by the central processing unit to obtain the code encryption key from the license by decrypting the license with the private key; and causing the encrypting unit to decrypt the protection program with the code encryption key.

With this program, operativeness and effects, which are similar to those of the processes performed by the central processing unit having the above described configuration, can be obtained. Accordingly, also this program can overcome the above described problems. Furthermore, also with a recording device recording this program, which is executed by a central processing unit having the above described configuration, operativeness and effects, which are similar to those of the processes performed by the central processing unit, can be obtained.

Still further, also with a software execution authorization method including the operations performed by the respective units which configures the above described central processing unit, operativeness and effects similar to those of the process performed by the central processing unit having the above described configuration can be obtained

According to a still further preferred embodiment of the present invention, a program executed by a computer comprises a protection program encrypted with a code encryption key, and a license, which includes the code encryption key and is encrypted with a public key pairing with a private key concealed in secrecy within the central processing unit comprised by the computer to execute the program, exists in correspondence with the protection program. The license is entered into the central processing unit before the program is executed, and decrypted with the private key by the central processing unit. The program is decrypted by the central processing unit with the code encryption key obtained from the license. This program is software protected by the central processing unit, and executed by a computer comprising the above described central processing unit, so that safety equivalent to a hardware TRM can be obtained.

Still further, also with a computer-readable storage medium on which the above described program is recorded, operativeness and effects, which are similar to those of the above described program, can be obtained by loading the program from the storage medium, and by executing the program by a computer comprising the above described central processing unit.

According to a still further preferred embodiment of the present invention, a program generating device generating a program executed by a computer comprising a central processing unit having the above described configuration comprises: an inputting unit inputting a code object, a linker preprocessing unit dividing the input code object into a plurality of blocks, and adding an NOP instruction to each of the plurality of blocks, a linker unit making an address resolution, a protection code executable format generating unit generating a protection code executable format by encrypting each of the plurality of blocks with a code encryption key, and a license generating unit generating a license that includes the code encryption key and is encrypted with a public key pairing with the private key. The license is entered into the central processing unit before the computer executes the protection code executable format, and decrypted with the private key by the encrypting unit. The protection code executable format is decrypted with the code encryption key obtained from the license by the encrypting unit.

With this program generating device, a program that can be protected by the central processing unit can be generated from a code module having a format which cannot be protected by the central processing unit. The generated program is executed by a computer comprising the above described central processing unit, whereby safety equivalent to a hardware TRM can be obtained.

### Brief Description of the Drawings

The features and advantages of the present invention will be more clearly appreciated from the following description taken in conjunction with the accompanying drawings in which like elements are denoted by like reference numerals and in which:
Fig. 1 shows a usage relationship model of basic package software;
Fig. 2 shows a programming model;
Fig. 3 shows the configuration of a CPU which implements a GT according to a first preferred embodiment;
Fig. 4 shows the configuration of fields in each line within a TRB;
Fig. 5 shows the configuration of expanded fields in each line within a TLB;
Fig. 6 shows the correspondence between field values within the TLB and access rights for an FR architecture;
Fig. 7 shows the correspondence between field values within the TLB and access rights for an Intel architecture;
Fig. 8 shows the structure of an encryption key table;
Fig. 9 exemplifies a signature method;
Fig. 10 shows the relationship among the TRB, the TLB, the encryption key table and a page table;
Fig. 11 exemplifies the configuration of a field for storing a TRSS flag;
Fig. 12 exemplifies the configuration of fields in each line of a RACT;
Fig. 13 exemplifies the configuration of fields of an RSSL register;
Fig. 14 shows a policy used when data is accessed from a code execution process between a normal virtual segment space and a tamper resistant segment space;
Fig. 15 shows the state where a protection process runs on a GT;
Fig. 16 explains the authentication of the GT;
Fig. 17 shows access rights and authorized privileges, which can be set in a GT license;
Fig. 18 is a flowchart showing part of the GT authentication process;
Fig. 19 exemplifies a protection code executable format used as a superdistribution file format;
Fig. 20 explains the loading and execution procedures of a protection code, and the saving and the holding of protection data;
Fig. 21 explains an access control for a page to which a protection code is recorded, when the protection code is executed;
Fig. 22 is a flowchart showing the access control for a protection code and protection data, which is performed by a processor core;
Fig. 23 is a flowchart showing an exception/interrupt process;
Fig. 24 is a flowchart showing an instruction process;
Fig. 25 explains the operations of an OS kernel and a GT when a protection code file is invoked;
Fig. 26 explains the mechanism for accessing protection data from a process which executes a protection code;
Fig. 27 explains the procedures performed when a different protection code module is called from a parent process;
Fig. 28 is a flowchart showing the process performed by the OS kernel when the different protection code module is called from the parent process;
Fig. 29 exemplifies the sequence for preventing a sealed register illegal access, which is executed by a tamper resistant code restoration exception process;
Fig. 30 exemplifies the sequence when a protection context is switched, which is executed by the OS kernel;
Fig. 31 exemplifies the sharing of a protection data region;
Fig. 32 explains the setting procedures for authenticating a module, and for sharing a protection data decryption key;
Fig. 33 is a flowchart showing the process performed when a tamper resistant region sharing system call is made;
Fig. 34 exemplifies a construction model of a DRM software module;
Fig. 35 is a flowchart showing the process performed by a media DRM (No. 1);
Fig. 36 is a flowchart showing the process performed by the media DRM (No. 2);
Fig. 37 is a flowchart showing the process performed by a decoder DRM (No. 1);
Fig. 38 is a flowchart showing the process performed by the decoder DRM (No. 2);
Fig. 39 is a flowchart showing the process performed by the decoder DRM (No. 3);
Fig. 40 is a flowchart showing the process performed by a regeneration application;
Fig. 41 shows a method holding/managing secret information;
Fig. 42 shows a memory access method for license management;
Fig. 43 shows the configuration of a CPU which implements a GT according to a second preferred embodiment;
Fig. 44 shows the structure of a block in the second preferred embodiment;
Fig. 45 shows the structure of a block in the case where ebim is 4;
Fig. 46 is a flowchart showing the process performed by a protection block selector;
Fig. 47 is a flowchart showing the process performed by a hash engine;
Fig. 48 is a flowchart showing the process performed by a hash checker;
Fig. 49 explains an NOP process;
Fig. 50 shows the configuration of a multi-CPU;
Fig. 51 exemplifies a tool group outputting a protection code executable format from a code object; and
Fig. 52 exemplifies the system configuration in the case where a GT is comprised in a personal computer or a workstation.

### Best Mode for Carring Out the Invention

Preferred embodiments according to the present invention are described with reference to the drawings. The same devices, etc. are denoted with the same reference numerals, and their descriptions are omitted.

The present invention implements a CPU as a tamper resistant module having general versatility by arranging a generic TRM function in the CPU. In the following description, a CPU having a generic TRM function according to the present invention is referred to as a "Generic TRM", and abbreviated to GT.

### <configuration>

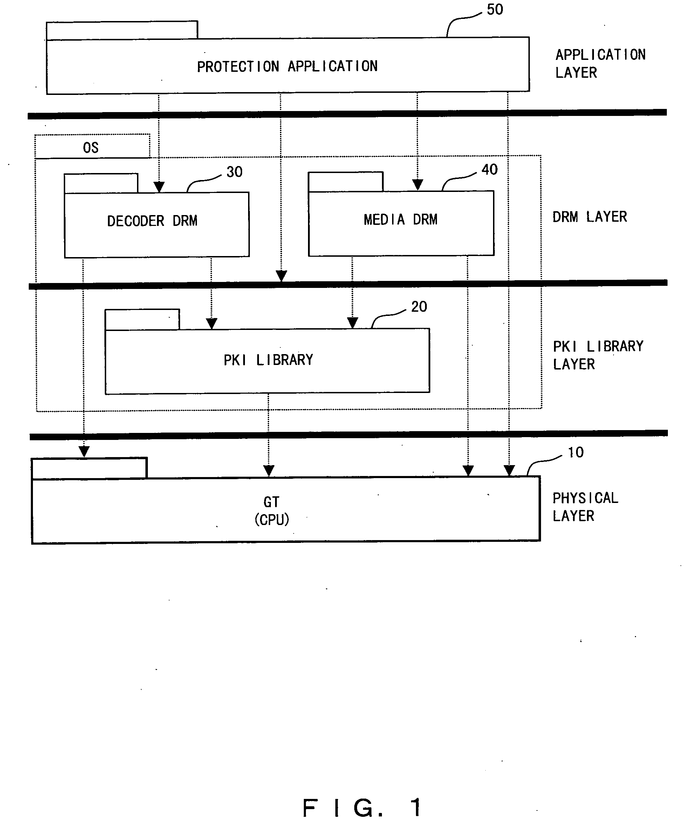

Before the configuration of a GT is described, the usage relationship between the GT and software executed by the GT is described. A usage relationship model between a CPU package which implements a GT, and GT basic software packages executed by the CPU package is shown in Fig. 1.

As shown in Fig. 1, the GT basic software packages can be divided into an application layer, a DRM layer, and a PKI library layer. The application layer includes a protected application (hereinafter referred to as a protection application). The DRM layer includes a decoder DRM 30 and a media DRM 40. The PKI library layer includes a PKI library 20. The decoder DRM 30, the media DRM 40, and the PKI library 20 are part of an OS (Operating System).

The respective basic software packages have the following functions. Since these functions are conventionally known, their descriptions are omitted. PKI library:
- standard PKIX (Public Key Infrastructure (X.509)) library
   media DRM (including Virtual Media DRM, and Trusted Server DRM):

- control for license generation/management/deletion/move/copy
- protection contents management
- UDAC-MB/LB/PI authentication/license management function
- license conversion function: conversion among MB (Media Base), PI (Protocol Independent), a GT, etc. decoder DRM:

- license obtainment from the media DRM
- authorized license decryption and holding of a contents decryption key
- contents decryption, general-purpose usage control, and a safe transfer to an application
- expanded function of a usage control function

As shown in Fig. 1, the respective DRMs 30 and 40 are implemented not as hardware but as software. A GT 10 is implemented as a CPU. The GT 10 (CPU) executes the DRMs 30 and 40, the PKI library 20, and the protection application 50.

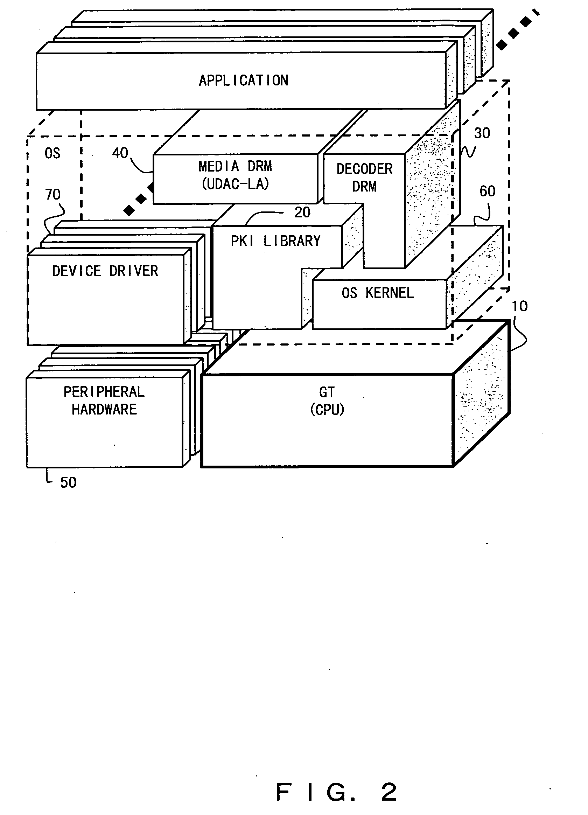

A programming model including modules other than the basic packages shown in Fig. 1 in the GT is depicted in Fig. 2.

As shown in Fig. 2, the OS comprises an OS kernel 60, and a device driver 70 in addition to the above described PKI library 20, decoder DRM 30, and media DRM 40. The device driver 70 is software required to operate peripheral hardware.

A plurality of applications including the protection application 50 and an unprotection application run on this OS. Namely, also a different application which runs on a conventional CPU operates in the GT 10 along with the protection application using the DRM function. As described above, the GT 10 is a tamper resistant module that has general versatility, and can execute an application, for which normal protection is not required, simultaneously with a protection application.

The OS kernel 60 performs processes (to be described later) specific to the GT 10, such as register sealing, etc. when performing memory management and switching control of context in the GT 10 in addition to conventional operations. However, making the OS kernel 60 perform these processes does not exert an influence on the security of the GT 10. That is, no influence is exerted on the security of protection made by the GT 10 even if a security hole exists in the OS kernel 60.

The decoder DRM 30, the media DRM 40, an encryption/decryption library within the PKI library 20 used by these DRMs, and an application for which implementation as a TRM is required must be distributed and executed as codes protected by the GT 10, and executed. Almost entire texts of these software modules must be encrypted.

Conventionally, a software TRM has expandability, but it can be destroyed with ease. According to the present invention, however, a DRM software module protected by the GT 10 is adopted, so that robustness equivalent to a hardware TRM can be provided to a DRM software module. In the meantime, a hardware TRM does not have expandability, and its resources are limited. The GT 10, however, adopts DRM software. Therefore, a functional expansion can be made by upgrading DRM software without changing a CPU implemented as the GT 10.

A DRM construction model may comply with the architecture and the specifications of UDAC-MB (Universal Distribution with Access Control-Media Base), UDAC-LA, or UDAC-PI.

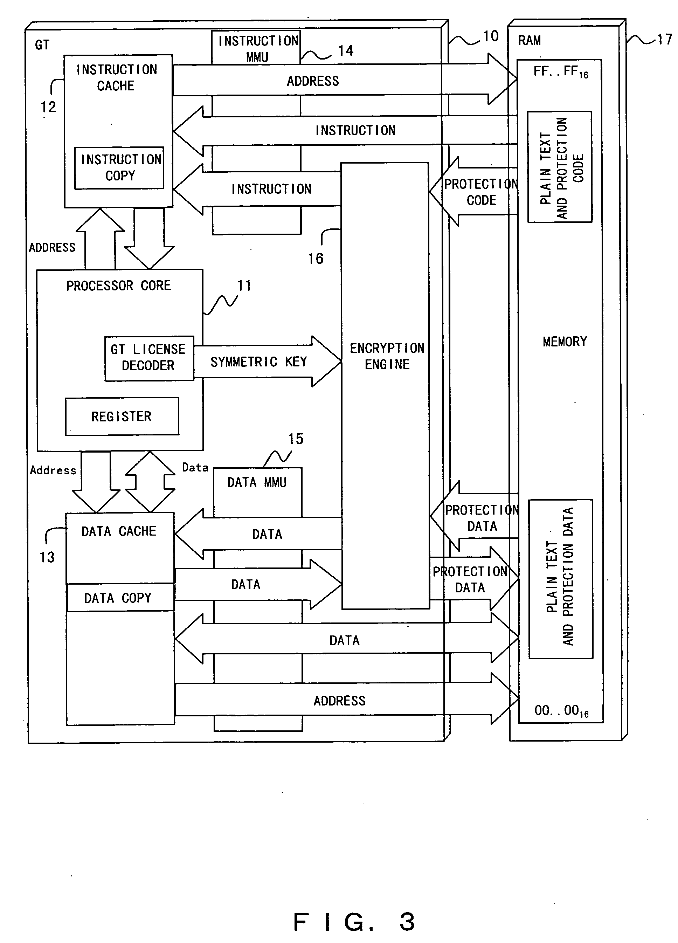

Configuration of the CPU which implements the GT according to the first preferred embodiment is described below while referring to a data exchange with reference to Fig. 3.

Configuration of circuit blocks within the GT, and a data exchange model among the circuit blocks in the case where a code block or a data block, which is composed of only an encrypted text or a plain text (when only ebim=0, 1 is supported), is assumed are shown in Fig. 3.

The GT 10 comprises a processor core 11, an instruction cache 12, a data cache 13, an instruction MMU (Memory Management Unit) 14, a data MMU 15, and an encryption engine 16, and is connected to a RAM (Random Access Memory) 17.

One of characteristics of the GT 10 according to the present invention is that the encryption engine 16 which encrypts/decrypts a code block or a data block is comprised, the code block or the data block, which is encrypted with the encryption engine 16, is held in the cache 12 or 13 within the GT 10 after being decrypted, and working data is output after being encrypted with the encryption engine 16 when being output from the data cache 13 to the RAM 17. A data exchange among the blocks in the GT 10 is described below.

Firstly, it is determined whether a code block input from the RAM 17 is either a code block to be protected by the processor core 11 and the instruction MMU 14 (hereinafter referred to as a protection code block) or a plain text code block. In the meantime, it is determined whether a data block input from the RAM 17 is either a data block to be protected by the processor core 11 and the data MMU 15 (hereinafter referred to as a protection data block) or a plain text data block.

To transmit the protection code block or the protection data block to the encryption engine 16, an address at a protection block transfer destination is specified from the instruction MMU 14 or the data MMU 15 to the RAM 17. The code block or the data block, which is output to the encryption engine 16, is decrypted, and output to the instruction cache 12 or the data cache 13. A key Kc used when a protection code block is decrypted, or a key Kd used when a protection data block is decrypted is output from the processor core 11 to the encryption engine 16. A plain text code block or a plain text data block is output to the instruction cache 14 or the data cache 15 unchanged.

Additionally, to ensure the safety of a protection code block and a protection data block, in the GT 10, working data is encrypted at the exit of the data cache 13 when being output from the data cache 13 to the RAM 17. Firstly, the working data is output from the data cache 13 to the encryption engine 16, and at the same time, a key Kd (the same as that used when a protection data block is decrypted) for decrypting the working data is output from the processor core 11 to the encryption engine 16. The encryption engine 16 encrypts the working data with the key Kd, and outputs the encrypted working data to a virtual memory region arranged in the RAM 17, etc. Additionally, a random number may be added to a data block when the working data is encrypted.

When the data block is output to the virtual memory region, the processor core 11 determines whether or not the data block is a data block to be protected based on a TLB (Translation Lookaside Buffer, which is not shown and will be described later), and decides whether or not to output the data block via the encryption engine 16 when an address specification is made from a data cache function based on a determination result. Additionally, the keys Kc and Kd, which are used for encryption and decryption, are obtained in such a way that the encryption engine 16 within the GT 10 decrypts a GT license, and are stored in a tamper resistant buffer (hereinafter abbreviated to TRB, which is not shown and will be described later).

Although the instruction MMU 14 and the data MMU 15 are respectively represented as separate blocks in Fig. 3, they may be integrated into one module. Also the instruction cache 12 and the data cache 13 are similar.

As described above, with the GT 10, a code block or a data block, which is encrypted at the entry/exit of a cache, is decrypted in units of cache. In the meantime, if each code is encrypted within a CPU, encryption is performed in units of 2 bytes or so. However, the current technology requires that 8 bytes or so is used as an encrypted block in order to obtain sufficient robustness. Therefore, sufficient robustness cannot be maintained in units of 2 bytes or so. However, with the GT 10, an encrypted code block or data block output from the RAM 17 is decrypted and held in units of cache, so that the protection code block and the protection data block can be kept safe.

If the GT 10 cannot comprise the instruction cache 12, a RAM region may be arranged within the GT 10, and all of executable codes may be executed after being internally decrypted and stored in the internal RAM region. In this way, safety equivalent to the above described configuration can be secured. Additionally, if the GT 10 cannot comprise the data cache 13, a RAM region is arranged within the GT 10, and working data for which protection is required is recorded to the RAM region within the GT 10. In this way, safety equivalent to the above described configuration can be secured.

Conventionally, data to be kept secret sometimes leaks out when working data within a CPU is temporarily output to a RAM. Additionally, a private key held in the CPU can be guessed by estimating an instruction code with monitoring of contents of the data. However, with the GT 10, since working data is encrypted when being output from the data cache to the RAM, and decrypted when being restored to the cache, such a problem can be avoided.

Note that a plurality of cache lines such as a cache line for a plain text code block, a cache line for a plain text data block, a cache line for decrypting a protection code block, a cache line for encrypting a protection data block, and a cache line for decrypting a protection data block may be comprised in parallel between the caches 12 and 13 and the RAM 17. As a result, the speed of the processes performed by the GT 10 can be increased, and the safety of a protection code block and a protection data block can be improved.

Additionally, as shown in Fig. 3, a register is comprised within the processor core 11. With the GT 10, a mechanism named as a tamper resistant region is added to a conventional virtual memory region, and a plurality of protection software applications can be executed without mutual influences of risks from a security viewpoint within the tamper resistant region. To implement this, the processor core 11 comprises a tamper resistant segment selector (hereinafter abbreviated to TRSS) flag, a register access control table (hereinafter abbreviated to RACT), and a register sealed state list (hereinafter abbreviated to RSSL) register (not shown).

The TRSS flag is recorded to a field within a segment specification register which specifies a segment-in a virtual memory region. The processor core 11 can determine whether a virtual address indicated by the register exists in either a tamper resistant segment space or a normal virtual segment space based on the TRSS flag. Additionally, the processor core 11 controls the sealing and the release of the register with the RACT so that an access cannot be made to the register from a process other than a process currently being executed, when a plurality of protection software applications are executed. Furthermore, information indicating whether the register is either sealed or released is recorded to the RSSL register. The tamper resistant segment space, the tamper resistant region, and the sealing and the release of the register will be described in detail later.

As described above, the GT 10 is implemented by using a 1-lot CPU implemented as a TRM. The GT 10 can implement a DRM software module or a different module required to be protected, which runs on the GT 10, as a TRM. Accordingly, a cost required to manufacture a hardware TRM, especially, a development cost of an initial lot can be reduced.

The TRB, the TLB, the TRSS register, the PACT, and the RSSL register are sequentially described below.

The TRB holds a key Kc for decrypting a program code (an instruction sequence), a key Kd for encrypting/decrypting data, and the like. The Kd and the Kc are sometimes called a software encryption key collectively. The TRB has a structure the contents of which cannot be referenced/falsified by a user even in a kernel mode, namely, a tamper resistant structure. A location in which the Kc or the Kd is held within the TRB is identified with a Key ID. Also within the TLB, a Key ID for identifying a linked key location is held. With the key ID, the TRB and the TLB are linked.

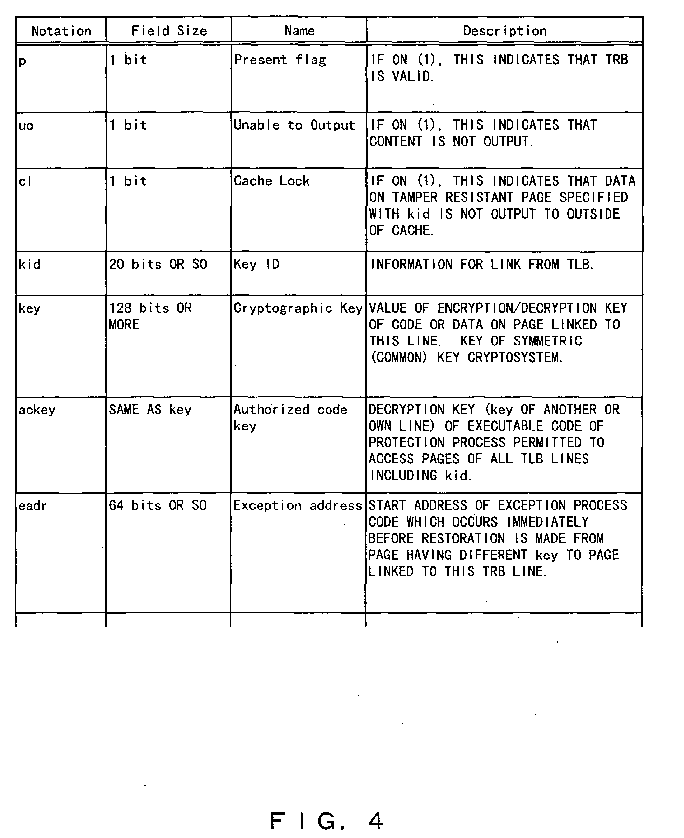

A configuration table of fields of each line within the TRB is shown in Fig. 4. As represented by the table of Fig. 4, each line within the TRB includes fields such as Present flag p, Unable-to-Output flag uo, Cache Lock flag cl, Key ID kid, Cryptographic Key key, Authorized Code Key ackey, and Exception address eadr, etc. Additionally, the sizes of these fields are cited as an example, and can be set to other optimum values depending on the architecture or the use purpose of the GT 10.

The present flag p is a flag indicating whether the TRB is either valid or invalid. If this flag is ON (1), it indicates that the TRB is valid.

The unable-to-output flag uo is a flag indicating whether or not to output the contents of a corresponding line to an encryption key table. If this flag is ON (1), the contents is not output to the encryption key table. However, p, uo, cl, and kid, which are required as management information, may be output also in this case. The default value of the unable-to-output flag uo is OFF (0), and the contents of a corresponding line is output to the encryption key table in that case. The contents of the TRB and those of the encryption key table must be synchronized in this case. The encryption key table is a storage means for storing the contents of the TRB within the GT 10. The encryption key table will be described in detail later.

The cache lock flag cl indicates whether or not to output data in a tamper resistant region specified by the key ID kid to the outside of the cache. If this flag is ON, the data or the code is not output to the outside of the cache. The GT 10 may further comprise a function for switching between the following two modes if cl is ON (1).
(a) mode in which protection data is output up to a CPU internal cache
(b) mode in which protection data is recorded up to an external (tertiary) cache in a plain text

(a) can be used also in the case where processing performance must be improved by reducing a region to which protection data is recorded, and by not performing an encryption/decryption process. With (b), an improvement in processing performance can be expected, but the level of protection robustness drops.

The key ID kid is information for identifying a key, and used to link the TLB and the TRB.

The cryptographic key key is the value of an encryption/decryption key for encrypting/decrypting a code or data written to a page linked to a corresponding line. The cryptographic key is, for example, a key of a symmetric key (common key) cryptosystem. Kc and Kd are recorded to this field.

The authorized code key ackey is a decryption key for decrypting an executable code of a protection process, which can access a linked page. Here, the protection process means the state where a protection code is executed. A page of the executable code is specified with a page number in a line within the TLB, which includes the same kid as the key ID kid in a line within the TRB, and also the type of an access right to that page is specified in the line within the TLB. Normally, the authorized code key ackey is a cryptographic key key of different and its own lines. However, if all of bits of ackey are "0", this indicates that an access right is authorized for all of processes by using a GT license. Additionally, if a value obtained by encrypting ackey with a public key KPgt (to be described later) is stored in ACgt.ackey (the value of the ackey field (to be described later) of ACgt) (namely, if ACgt.aef is ON), a result obtained by decrypting this value is stored in TRB.ackey.

The exception address eadr indicates the start address of an exception process code which occurs immediately before restoration is made from a page having a different key to a page linked to a line within the TRB. When a line is set within the TRB with an AUTHORIZE instruction which does not include ACgt.eadr (the value of the eadr field within the ACgt), all of bits of the exception address (eadr) are set to 0 as a default value. If a "tamper resistant code restoration exception address illegal exception" occurs when restoration is made to a protection process, the execution of the process is stopped, and the corresponding present flag (p) of the TRB must be set to OFF. If an access exception must be arranged for each data page in the future, TRB.eadr (the value of the eadr field within the TRB) may be defined as an address of the exception process code executed when a code encrypted with TRB.ackey (the value of the ackey field within the TRB) is executed.

The code decryption key Kc and the data encryption/decryption key Kd, which are stored in the key field, are, for example, an encryption key of a symmetric key cryptosystem, which is generated as a random number. A cryptosystem with which a data length becomes identical before and after encryption/decryption may be selected in the GT 10. The key may be generated with a random number generation algorithm, or with a thermal random number generation function, etc. within the GT 10. The latter generation method is safer than the former generation method in many cases. Kc and Kd are included in a GT license to be described later. A CPU instruction "access authorization command (AUTHORIZE command)" (to be described later) is executed by using as parameters a code decryption key Kc or a data decryption key Kd, and a GT license in which an access right, etc. are buried, so that values are set in the respective fields in a line within the TRB, which is linked to the TLB (to be described later) in a tamper resistant region.

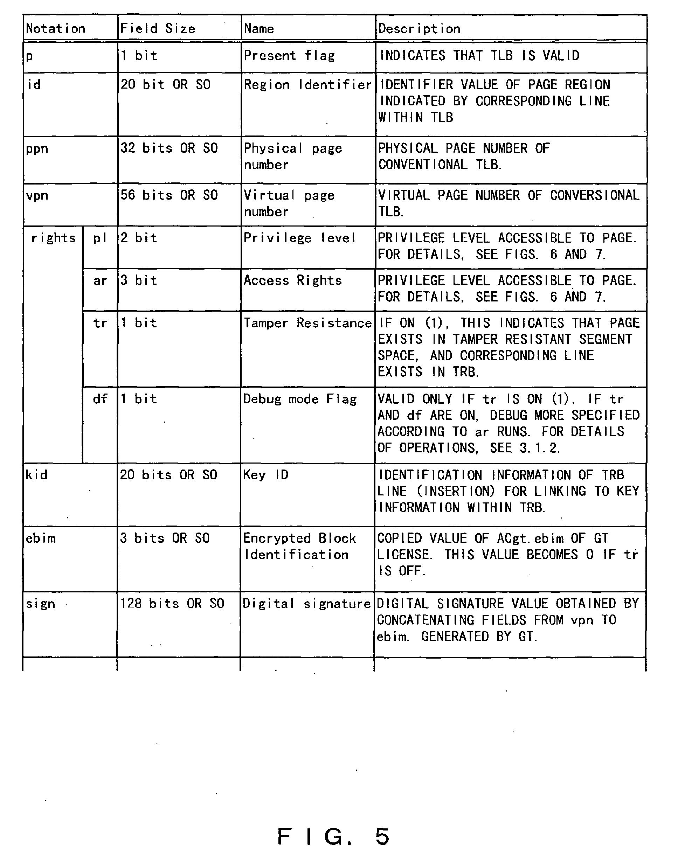

The TLB manages addresses at which a protection code and protection data are stored, and an access right to a page. A configuration table of expanded fields of each line within the TLB is shown in Fig. 5. As shown in this figure, each line within the TLB for the GT 10 includes fields such as Present flag p, Region Identifier id, Physical page number ppn, Virtual page number vpn, access right rights, Key ID kid, Encrypted Block Identification method ebim, and Digital signature sign, etc. in addition to fields possessed by a conventional TLB. The access rights (rights) field is divided into Privilege level pl, Access Rights ar, Tamper resistance flag tr, and Debug mode Flag df. All of these fields must be included within a tamper resistant region in the GT 10. Additionally, the sizes of the fields shown in Fig. 5 are cited as an example, and may be set to other optimum values depending on the architecture or the use purpose of the GT 10.

The present flag p indicates that the TLB is valid.

The region identifier id is an identifier of a page region indicated by a corresponding line within the TLB.

The physical page number ppn indicates a physical page number, whereas the virtual page number vpn indicates a virtual page number.

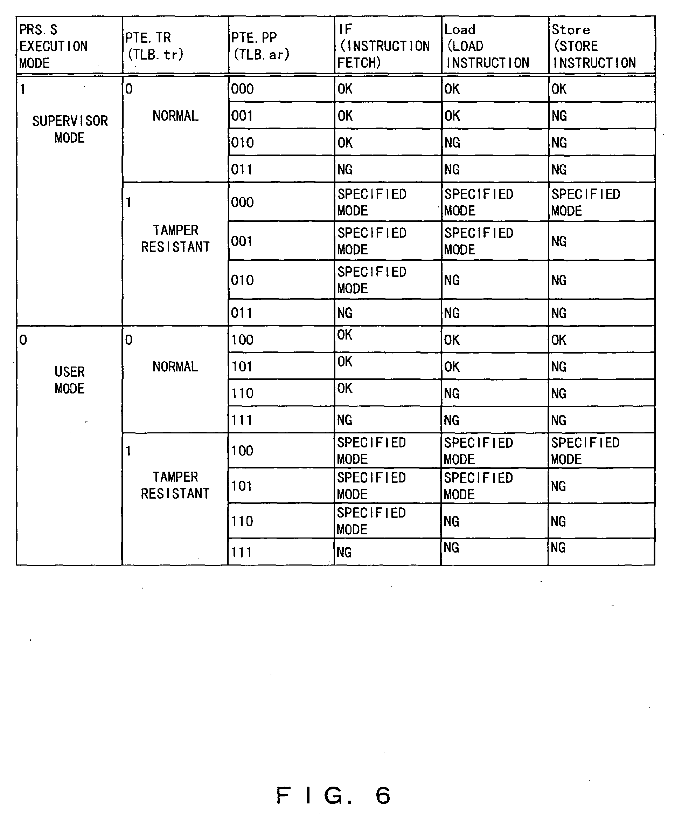

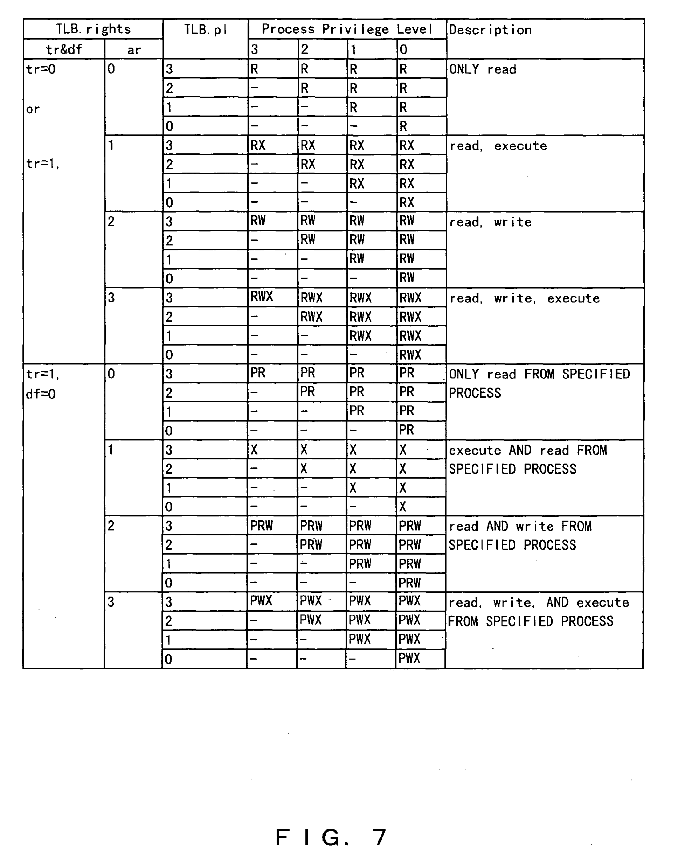

The access rights rights indicates an access right to a page indicated by a corresponding line. The privilege level pl indicates the level of a privilege accessible to a page. The access rights ar indicates the type of an access right to a page. The privilege level pl and the access right ar are decided based on the values of the respective fields within the TLB as shown in Figs. 6 and 7, and set in the TLB. Fig. 6 shows the case of an FR architecture, whereas Fig. 7 shows the case of an Intel architecture.

The tamper resistance flag tr indicates whether or not a page indicated by a corresponding line exists in a tamper resistant segment space (to be described later). If this flag tr is ON (1), it indicates that a page exists in the tamper resistant segment space, and a line corresponding to that line exists in the TRB. The tamper resistance flag is set to ON/OFF when the GT 10 makes authentication.

The debug mode flag df indicates whether a debug mode is either valid or invalid. If the debug mode flag df is ON (1), the debug mode is valid. If the tamper resistance flag tr and the debug mode flag df are ON (1), the debug mode according to the value specified by the access rights ar runs. The values of ar mean as follows.
(a) If PR, only a read can be made from all processes: R
(b) If X, a read and execution can be made from all processes: RX
(c) If PRW, a read/write can be made from/to all processes: RW
(d) If PWX, a read/write and execution can be made from/to all processes: RWX

The key ID kid is information for identifying a line (insertion) within the TRB so as to link to key information within the TRB.

The encrypted block identification method ebim is information for identifying an encrypted code or data block.
a) If ebim=0, a block is a plain text.
b) If ebim=1, a block is an encrypted text (this is a default value. If the ebim field is omitted, ebim is handled as 1.)

The digital signature sign is a digital signature obtained by concatenating data of the above described fields from vpn to ebim, and generated by the GT 10.

The values of the access rights in a line (insertion) within the TLB, which indicate regions where a protection code and protection data are stored, are managed by the OS only if TLB.tr to be described later is OFF. As conventional, the values of the access rights are represented by 3 bits or so also in the present invention. According to the present invention, also a "tamper resistance flag tr" field is arranged in the TLB as a field which indicates that a page exists in a tamper resistant region. Furthermore, code execution state that can use the tamper resistant region is defined to be called "tamper resistant mode".

An address at which a protection code or protection data is stored is set in the TLB before a corresponding page is used. The access rights rights, the encrypted block identification method ebim, and the authorized code key ackey are decided based on a GT access condition ACgt (to be described later) included in a GT license.

A CPU instruction "access authorization command" (to be described later) is executed by using as parameters a GT license in which a code decryption key Kc or a data encryption/decryption key Kd, and an access right are buried, so that Key ID is specified for each protection page in a line within the TLB, and a decryption key is set in the key field in a line within the TRB, which corresponds to each key ID.

Locations where the TRB and the TLB are stored are described below.

The TRB is stored in the GT 10. However, the case where the storage capacity comprised in the GT 10 becomes full is expected. In this case, at least part of the contents of the TRB within the GT 10 is encrypted, and the encrypted contents is recorded to the RAM 17 or an external storage device such as a hard disk, etc. A list of lines within the TRB, which are externally recorded, is called encryption key table. The GT 10 manages the contents of the TRB in an encrypted state while recording the contents to the encryption key table within the external storage device. The GT 10 extracts necessary information from the encryption key table, and decrypts and uses the information within the GT 10 itself. A key Ktrb, which is used when the contents of the TRB is encrypted or decrypted, is, for example, a private key of a symmetric key cryptosystem. It is sometimes desirable that this encryption key Ktrb is continuously held even if input power of the GT 10 is disconnected, or the GT 10 is reset.

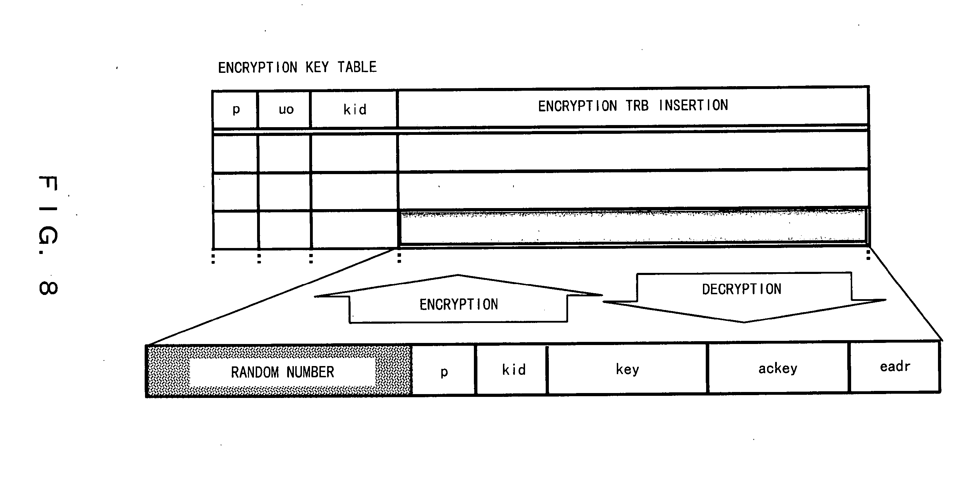

The structure of the encryption key table is described below with reference to Fig. 8. As shown in this figure, the encryption key table includes a present flag p, an unable-to-output flag uo, a key ID kid, a field for storing encrypted contents of the TRB, and the like.

As shown in Fig. 8, when recording is made to the encryption key table, TRB.p (the value of the present flag p field in the TRB) unchanged as a plain text, and TRB.kid (the value of the key ID kid field in the TRB) unchanged as a plain text are added to each line as a header. As a result, the encryption key table can be managed by the OS (supervisor mode), but encrypted contents other than the Key ID can be neither referenced nor falsified. p and kid among the fields within the TRB in a plain text state may be seen from a particular register, etc.

The contents of the TRB is recorded to an external recording device via an encryption line of the data cache 13 likewise other protection data blocks. Additionally, as shown in Fig. 8, each line within the TRB must be encrypted after a random number is added to the start of each line. Therefore, a software developer who specifies a Kc (code encryption key) generates a large number of pairs of plain and encrypted texts by intentionally inputting the value of the cryptographic key key field within the TRB again and again, so that the encryption key Ktrb, which encrypts the TRB, can be prevented from being decrypted with ease.

Furthermore, the encryption key table may be recorded on a hard disk not shown from the RAM 17, and reused after the GT 10 is restarted. Especially, there may be a case where Kd (data encryption key) which is left encrypted with an encryption key Ktrb must be stored and managed on a hard disk, in a flash memory, etc. so as to construct software DRM having robustness equivalent to a hardware TRM level. Therefore, the encryption key Ktrb of the TRB may be continuously held in a nonvolatile memory such as an FeRAM (Ferroelectric Random Access memory), etc., in a tamper resistant region even after the power of the GT 10 is disconnected.

As a method for synchronizing the contents of the encryption key table and those of the TRB, the following methods are considered. The present invention, however, is not limited to these methods.
(a) A write of the contents of the TRB to the encryption key table, and recapturing of the contents from the encryption key table to the TRB are made via an RW instruction for a particular register, or the like.
(b) The start address and the number of lines of the encryption key table are set (by executing a special instruction), so that the GT 10 automatically synchronizes the encryption key table and the TRB as occasion demands. Furthermore, a user sets a flush command in the GT 10 so as to make synchronization when necessary.

In the meantime, the contents of the TLB is recorded to an external storage device as a page table also in the GT 10 similar to a normal CPU, and the contents of the TLB within the GT 10 and those of the page table are synchronized and managed. The GT 10 may capture necessary information from the page table, and use the information when necessary.

Passing of contents between the TLB and the page table is described below. When the contents of the TLB is recorded to the page table, the GT 10 generates TLB.sign (the value of the signature (sign) field within the TLB), and affixes the TLB.sign to the contents desired to be recorded if TLB.tr (the value of the tr field within the TLB) is ON. When the contents of the page table is captured in the TLB within the GT, the GT 10 verifies the signature affixed to the contents. If the signature is not legal, the GT 10 makes a TLB signature illegal exception (to be described later) occur, and invalidates (sets to OFF) the present flag (TLB.p). and the tamper resistance flag (TLB.tr) of that line.

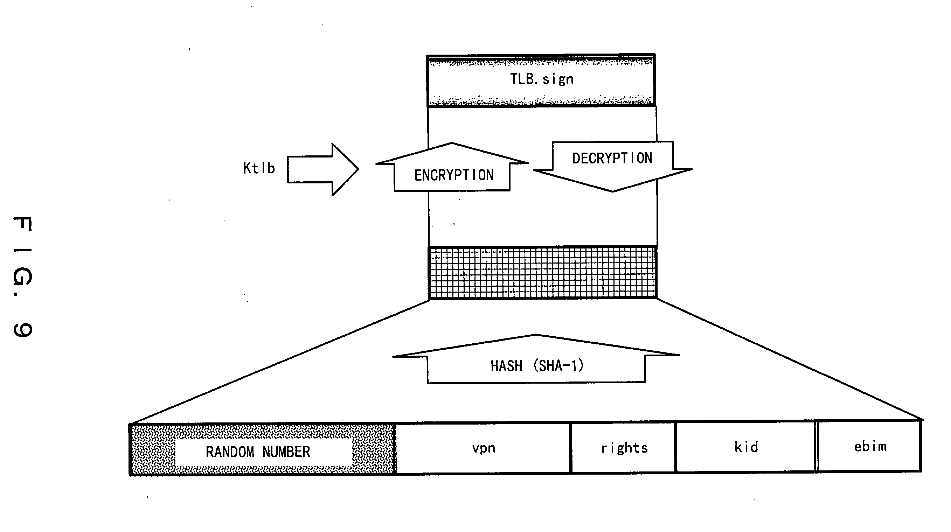

An example of the signature method is shown in Fig. 9. As shown in this figure, the GT 10 first concatenates a fixed random number within the GT 10 to data which includes TLB.vpn, TLB.rights, TLB.kid, and TLB.ebim. Then, the GT 10 hashes the concatenated data with SHA-1, and encrypts the data with a private key ktlb within the GT 10. As a result, a signature TLB.sign is generated. If contents to which a signature is to be affixed is less than 160 bits, for example, a random number field as a filler may be added to the contents.

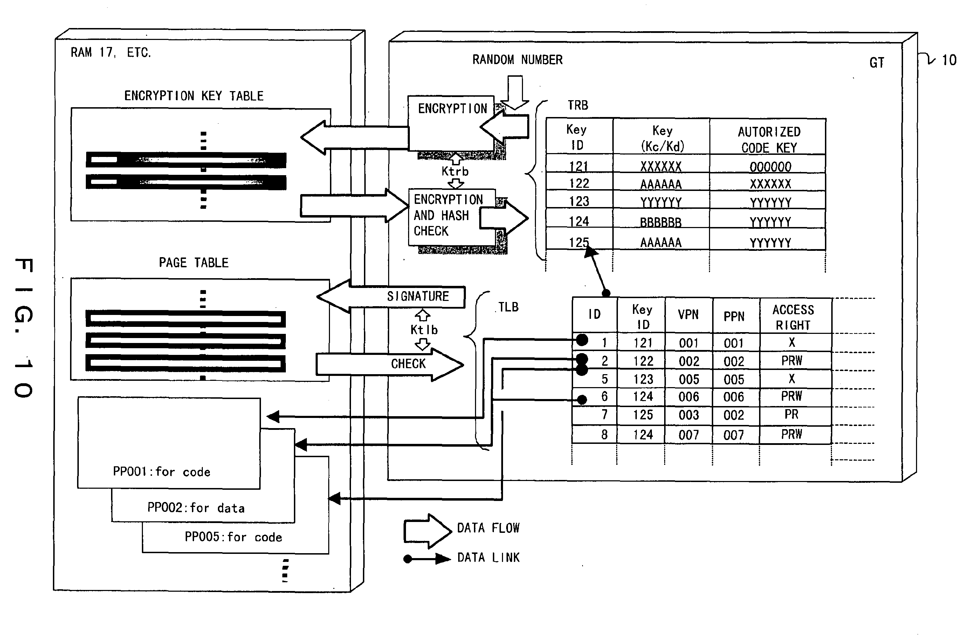

The relationship among the TRB, the TLB, the encryption key table, and the page table is described below with reference to Fig. 10.

As shown in this figure, the TRB and the TLB are held in the GT 10. To the TRB, a key ID kid, Kc used when a code block is decrypted, Kd used when a data block is encrypted/decrypted, and the like are recorded. To the TLB, a region identifier id, a key ID kid, a virtual page number vpn, a physical page number ppn, access rights rights, and the like are recorded. The region identifier id corresponds to a page within the RAM 17, to which a code block or a data block is recorded. Additionally, the contents of the TRB and those of the TLB are corresponded to each other by the key ID kid.

When the contents of the TRB is recorded to the encryption key table, the contents is encrypted with an encryption key Ktrb after a random number is added to the contents. If the contents of the encryption key table is captured in the GT 10, the contents is decrypted with an encryption key Ktrb. In the meantime, if the contents of the TLB is recorded to the page table, the GT 10 generates a signature TLB. sign with the encryption key Ktlb based on the contents, and affixes the signature to the contents.

Synchronization of the cache, the TLB, and the TRB within the GT 10 is described next. As described above, information about the access control for a protection code or protection data, which is recorded to a page, is recorded to the TLB or the TRB. Therefore, an attack which attempts to access the protection code or the protection data by disguising two TLBs having identical virtual addresses with hardware or software can be possibly considered. To cope with such an attack, the processor core 11 may determine the access control while synchronizing the contents of the cache, the TLB, and the TRB in the GT 10. More specifically, contents of the protection code within the instruction cache 12 or the protection data within the data cache 13 may be linked not only to a virtual address (TLB.vpn) in a TLB line, but also to a pair of the value of a digital signature (TLB. sign) and the virtual address of the TLB line. In this case, the processor core 11 determines the access control as a different page if this pair mismatches.

As described above, a code decryption key (Key) of an access permission protection code is buried in a GT license as an authorized code key, so that a protection code that can access a protection region can be specified. Additionally, an access to a protection code and protection data is enabled only from a code which executes a code on a virtual page having the Key specified by the authorized code key field (ackey) of the TRB. However, if all of values of ackey on the page are 0 only when a code whose access right is X or PWX is executed, execution from all of codes is authorized.

If a page B has the value of key, which matches the key specified as ackey of a page A, execution state of a protection code on the page B is called an "owner process" of (a code or data on) the page A.

The execution right (X) in the GT means a right to execute an instruction code on a tamper resistant page, which has a value in TRB.ackey (the ackey field of the TRB) . This right is given to an instruction code which is executed immediately before the instruction code, and the following cases exist.
(a) The case where an instruction to be executed currently succeeds an instruction executed immediately before.
(b) The case where an instruction executed immediately before is a branch instruction such as CALL, JUMP, etc.

Especially, if the virtual page of a preceding instruction and that of the next instruction are different, the GT 10 must again verify whether or not the instruction specified to be executed next is authorized to be executed. This verification will be described later.

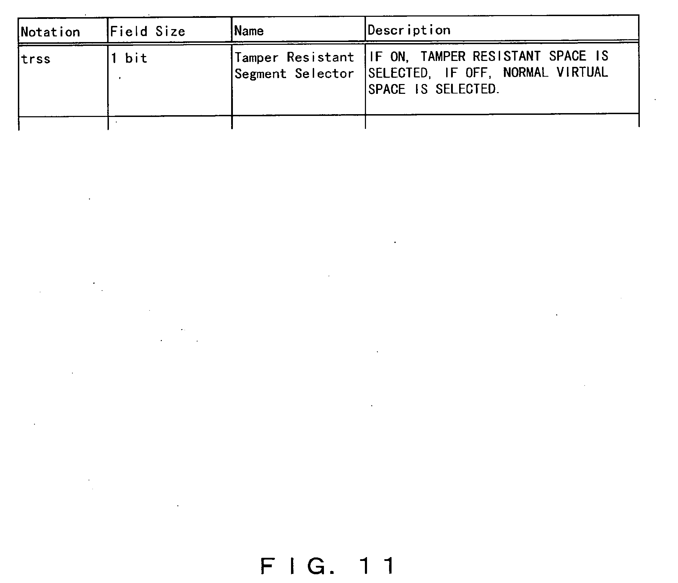

The TRSS flag is described next. An example of the configuration of a field for storing the TRSS flag is shown in Fig. 11. The GT 10 has a TRSS flag in a segment specification register in its virtual memory space. This flag respectively exists in a code segment, a data segment, and a stack segment. They are respectively called a tamper resistant code segment selector (TRCSS), a tamper resistant data segment selector (TRDSS), and a tamper resistant stack segment selector (TRSSS). If the TRSS flag is ON, a page is set in a tamper resistant space. If the TRSS flag is OFF, the page is set in a normal virtual space.

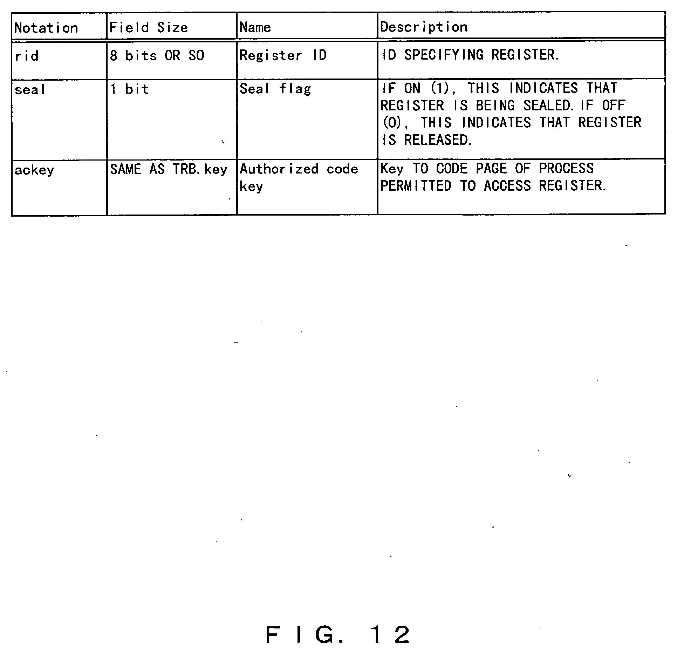

The RACT is described next. An example of the field configuration of each line of the PACT is shown in Fig. 12. With the GT 10, the RACT is comprised in a tamper resistant module so as to implement a function for sealing/releasing a register. Each line of the RACT includes fields such as Register ID rid, Seal flag seal, Authorized code key ackey, etc.

The register ID rid is an ID for specifying a register. The seal flag seal indicates whether or not a register is being sealed. If this flag is ON (1), it indicates that the register is being sealed. If the flag is OFF (0), it indicates that the register is released. The authorized code key ackey is similar to that of the TRB, and is a key to a code page of a process which is permitted to access the register.

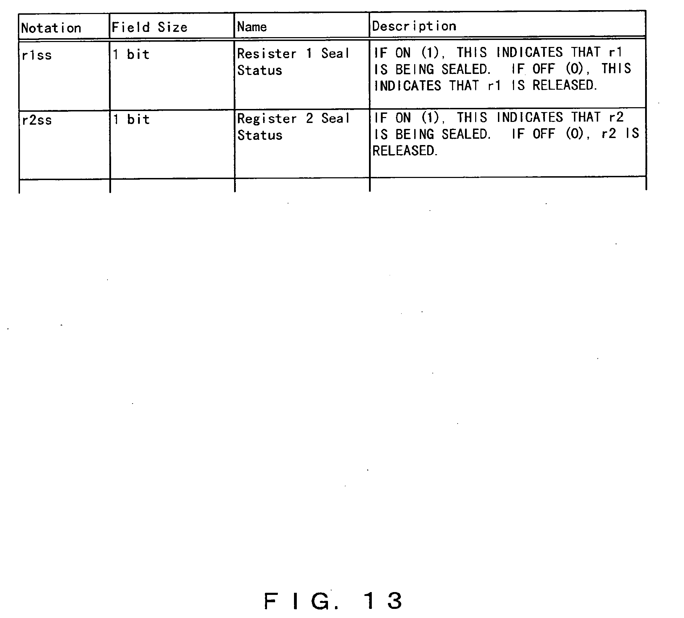

The RSSL register is described next. Although the RSSL register is not an essential function for the GT, it may be comprised as an optional function. The RSSL register stores information indicating the sealing state of each register. An example of the field configuration of the RSSL register is shown in Fig. 13. As shown in this figure, the RSSL register has the same bit length as the number of registers that can be sealed, and each of the bits indicates the sealing state of a register corresponding to each of the bits. If a bit is ON (1), this indicates that a corresponding register is being sealed. If the bit is OFF (0), this indicates that the corresponding register is released. For example, if the first bit is ON in the case where first bit of the RSSL register is set to indicate the sealing state of a register r1, this indicates that the register r1 is being sealed.

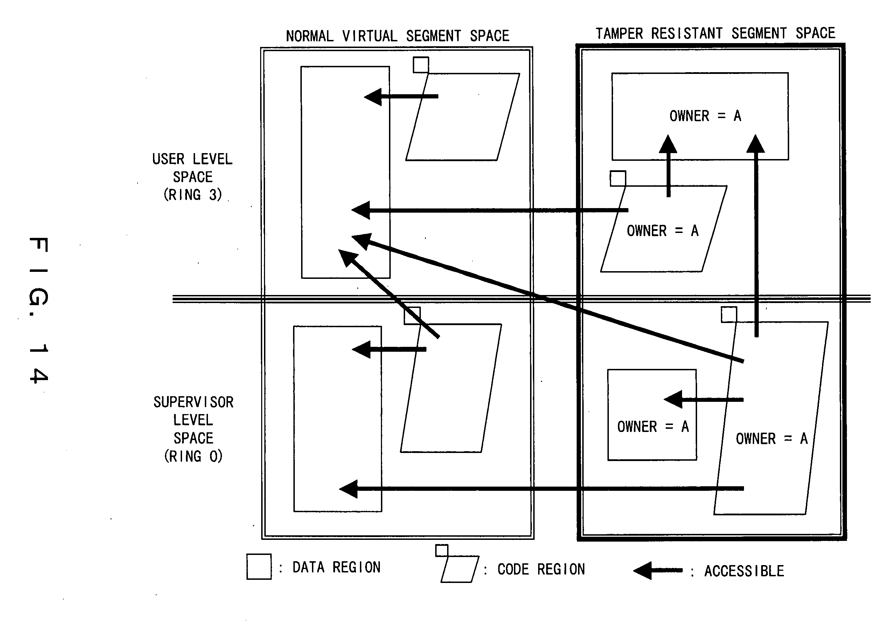

A tamper resistant segment space and a tamper resistant region are described next. As described above, a page whose tamper resistance flag tr within the TLB is ON (1) is a tamper resistant region within a tamper resistant segment space. Additionally, in a line of the segment specification register corresponding to this page, the TRSS flag is ON. On the page in the tamper resistant region, protection data is stored. A policy applied when an access is made to data from a code execution process between a normal virtual segment space and a tamper resistant segment space is shown in Fig. 14. The normal virtual segment space is space to which data and a code, which are not required to be protected, are recorded, whereas the tamper resistant segment space is space to which protection data and a protection code are recorded.

A code executed in the tamper resistant segment space can access data in the normal virtual segment space. However, a process executed in the normal virtual segment space cannot access data in the tamper resistant segment space. Additionally, for an access control relationship between a user level space and a supervisor level space, a policy applied in the case of the normal virtual space is maintained if a license owner is the same even in the tamper resistant segment space.

Furthermore, even in the tamper resistant space, a mutual access cannot be made between protection code and protection data regions whose license owners are different. However, with a tamper resistant region sharing function to be described later, a mutual access is enabled.

With the above described access policy, a protection process in the GT 10 is not influenced by another process. In the GT 10, the protection process has a tamper resistant page that the process itself generates, and the page is normally managed by the OS.

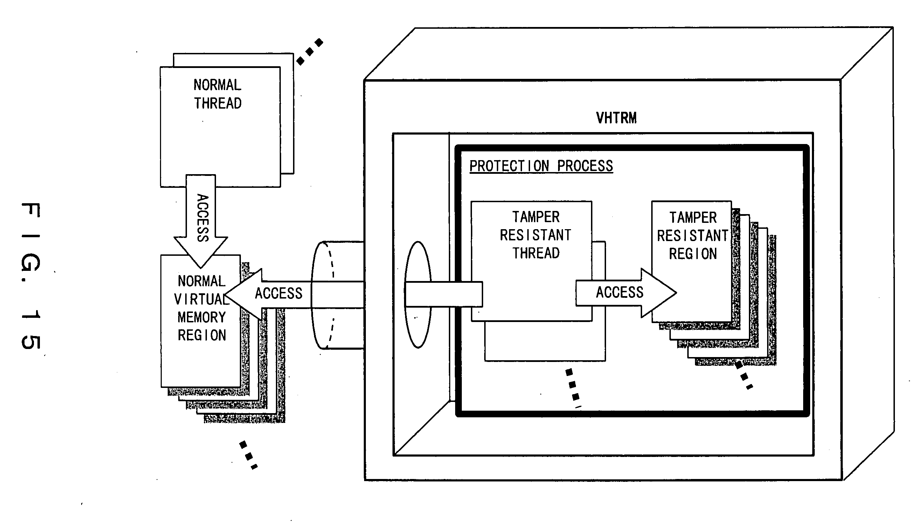

State where a protection process is running in the GT 10 is shown in Fig. 15. As shown in this figure, a plurality of protection processes run in the GT 10, and each of the plurality of protection processes generates a page in a tamper resistant region. Working data is stored in the tamper resistant region (virtual memory region) after being encrypted by the encryption engine 16 within the GT 10. Accordingly, the range of a virtual hardware TRM expands and shrinks up to the RAM 17, the hard disk, etc., and does not have a fixed shape. Accordingly, it can be said that a protection process which is generated and operated by the GT 10 runs within a "virtual hardware TRM (Virtual Hardware Tamper resistant Module: VHTRM)". Therefore, the GT 10 can overcome the problem of resources limitations imposed on a hardware TRM while implementing a software TRM having robustness equivalent to a hardware TRM.

Furthermore, a protection process can freely move also in a worldwide CPU (GT 10) space (GRID calculation to be described later) . As described above, a protection process within a VHTRM, which is resistant to any attack, fulfills its own mission, and returns to the source GT 10, can be impersonated and called a "tamper resistant agent".

### <instruction set>

An instruction set given to the GT 10 is described next.

Firstly, basic commands that a CPU implemented as the GT comprises to realize the functions as the GT 10 in addition to the instruction set of a conventional CPU are described. The basic commands include the following (1) to (9). The respective commands are sequentially described below.
(1) Store GT certificate command
   command format: STR_GT_CERT (certNum, certAdr)
   input register:
   certNum: A certificate number locally assigned within the GT 10. If N certificates exist, values from 0 to N-1 become valid.
   crtAdr: An address at which contents of a certificate is written.
   output (exception process):
   errorCode: Set, for example, when a certificate having a specified number does not exist.
   operation: Extracting the certificate specified by certNum from the GT 10, and writing the extracted certificate to the address specified by certAdr.
   operable privilege: All levels.
(2) Access authorization command
   command format: AUTHORIZE (licenseAdr, resultAdr, startVPN, numOfVP, kid)
   input register:
   licenseAdr: An address at which a GT license (to be described later) is stored.
   resultAdr: An address at which a result is stored.
   startVPN: A start virtual page number in a tamper resistant region.
   numOfVP: The number of successive pages in a tamper resistant region.
   kid: An identifier that the OS assigns to manage the relationship between the TLB and the TRB.
   output:
   result: [GT license| |startVPN| |numOfVP]| | signature resultant from the above described field values] is recorded at resultAdr.
   errorCode (exception process) : Set, for example, if authentication is unsuccessfully made.
   operation: Authenticating a GT license in a memory of a specified register, and setting a code or data decryption key key (Kc or Kd), kid and ackey in a tamper resistant region, which are extracted from the GT license, in a TRB linked to the TLB within the tamper resistant-region. Also setting a "tamper resistance flag" (tr), access rights (PR, X, PRW, PWX), ebim, kid, and sign. If settings are properly made, input data are concatenated, a resultant digital signature is affixed, and the data is recorded at the address specified by resultAdr. At this time, the concatenated input data is hashed, a hash result is encrypted with Kgt, and its result is adopted as a digital signature. If settings are unsuccessfully made, for example, if authentication is unsuccessfully made or if the TLB does not exist, an exception is made to occur.
   operable privilege: Only a supervisor level (privilege level 0).
(3) Set Tamper resistant Rights command
   command format: SET_TR_RIGHTS (rights, startVPN, numOfVP)
   input register:
   rights: An access right (ACgt.ar to be described later is specified).
   startVPN: A start virtual page number in a tamper resistant region.
   numOfVP: The number of pages in a tamper resistant region.
   output (exception process):
   errorCode: Set if a line corresponding to an input does exist in the TLB or the TRB, or if the range of a specified access right is wider than an already set access right, or the like.
   operation: Setting the access right specified by rights in the TLB in a region, if the virtual region specified by startVP and numOfVP is a tamper resistant space. However, the access right specified by rights must be within the range of the access right already set in the TLB.
   operable privilege: Only a supervisor level (privilege level 0).
(4) Set Tamper resistant Exception command
   command format: SET_TR_EXCEPTION (startAdr)
   input (only immediate or direct addressing):
   startAdr: A virtual address in a tamper resistant space, which is set in the TRB. Specified as a jump destination of register release/restoration exception, etc. Since startAdr must be executed in secrecy before a register desired to be sealed is used, the register cannot use this address as an input parameter.
   output (exception process):
   errorCode: Set if a line corresponding to the address specified by startAdr does not exist in the TRB (not in a tamper resistant mode), or if an access right to the address is not possessed.
   operation: Setting specified startAdr in TRB.eadr (the eadr field in the TRB) of a code page currently being executed.
   operable privilege: All levels.
(5) Seal Register command
   command format: SEAL_REG (registerList)
   input register: registerList: A list of registers to be sealed (flag list). ON (1) of a flag corresponding to each register indicates that the register is sealed, and OFF (0) indicates that the register is not sealed. output (exception process):
   errorCode: Set if a specified register does not exist, or if the register is already sealed.
   operation: Disabling an access to a specified register from a process other than a process of a code page having the same key as an encryption key Kc of a code page of the process (code execution state) which issues this command. By executing this command, the value of the key encrypting the code that executes this command is recorded to RACT.ackey (the ackey field of the PACT) of the corresponding register.
   operable privilege: All levels.
(6) Release Register command
   command format: RELEASE_REG (registerList)
   input register:
   registerList: A list of registers the sealing of which is released.
   output (exception process):
   errorCode: Set if a specified register does not exist, or if the specified register is already released. operation: Clearing the values of registers within a specified range to 0, and releasing the sealing.
   operable privilege: All levels.
(7) Store Stack to Unauthorized Area command
   command format: STMEA_TO_UA (registerList)
   input:
   registerList: A list of registers recorded to a stack. A list of flags. If a flag corresponding to each register is ON (1), this indicates that the register is recorded to the stack. If the flag is OFF (0), this indicates that the register is not recorded.
   output (exception process):
   errorCode: Set if a register specified with registerList is not sealed.
   operation: If the value of RACT.ackey (the ackey field within the RACT) of a specified register matches TRB.ackey (the ackey field within the TRB) corresponding to an unauthorized tamper resistant region even when a stack pointer points to the unauthorized tamper resistant region, the specified register is recorded to the location pointed to by the stack pointer.
   operable privilege: All levels.
(8) Load Stack from Unauthorized Area command
   command format: LDMEA_FROM_UA (registerList)
   input:
   registerList: A list of registers read from the stack.
   output (exception process):
   errorCode: Set if a specified register is sealed. operation: If a stack pointer points to a tamper resistant region, the value of TRB.ackey in the region of the stack pointer is copied to RACT.ackey of a specified register, and RACT.seal (the seal field within the RACT) of the specified register is set to ON (1). Furthermore, data in the location pointed to by the stack pointer is loaded into the specified register.
   operable privilege: All levels.
(9) Delete License command
   command format: DELETE_LICENSE (kid)
   input:
   kid: An identifier that the OS assigns to manage the relationship between the TLB and the TRB. A value used as a parameter of the AUTHORIZE command.
   output (exception process):
   errorCode: Set if kid is erroneous, or if deletion is unsuccessfully made.
   operation: Deleting a TRB having a specified kid, and all of TLBs linked to the TRB, and setting the corresponding present flags of the page table and the encryption key table to OFF. Also releasing the cache lock of the virtual region indicated by the TLBs.
   operable privilege: Only a supervisor level (only a privilege level 0).

In addition to the above described basic commands (1) to (9), commands from (10) to (15), and the like are considered as expanded commands for improving performance or functions. The expanded commands are sequentially described below.
(10) Protected Block Start command
   command format: PRT_BLOCK_START (encryption_flag)
   input (direct parameter):
   encryption_flag: If this flag is ON, it indicates that a block is encrypted.
   operation: If a particular bit position of command data is set to a particular pattern, this is recognized as an encryption block start command. A particular bit string (7 bits or so) within this command is used to specify the length of an encrypted block. A unit for specifying a value is assumed to be the same as a minimum value of a cachable instruction length. A specifiable maximum value is defined to be a maximum value of the cachable length. A random number must be filled in the other bytes of this command. The boundary of the start of this command data must match that of each instruction cache.
   If the length of a random number is not sufficient from a security viewpoint, this command is made successive two or more. If this command is made successive, 0 is filled in the value of a block length in commands other than the last command.
   After the Protected Block Start command is decrypted within the GT 10, it becomes a NOP command having the same length.
   If the second bit of TLB.ebim is ON, a hash or a signature (in case of a plain text), which is included in a block, must be checked. The location of the hash or the signature is defined to be, for example, the end of the block. If the block does not include a hash or a signature, a hash unincluded exception is made to occur.
(11) Refresh TRB Key command
   command format: REFRESH_TRB_KEY
   input/output register: None.
   operation: Replacing an encryption key Ktrb of a symmetric cryptosystem, which is always used when the TRB is externally recorded, and an encryption key Ktlb used to verify the signature of a page table with a new random number value.
   This command is used when Ktlb or Ktrb can possibly leak out. However, if license information, etc. is encrypted and managed with the TRB, previous encryption information cannot be decrypted after this command. Therefore, attention must be given. In such a case, for example, a process for encrypting information with another key and for saving the information before refresh becomes necessary. Details of a usage example will be described later.
(12) Command to give precedence to a cache in a protection region
   Used when the encryption/decryption speed of protection data is stressed.
(13) Command to generate a thermal random number that does not leak out between processes.
(14) Internal encryption/decryption command
   By making the encryption/decryption command of a symmetrical key cryptosystem or a public key cryptosystem, which is included in a CPU to implement the GT 10, open to a software developer, hardware resources use efficiency is improved.
(15) Command to set a periodical interrupt interval
   Setting an interval of an internal interrupt generated by a crystal oscillator within the GT. Available when a secure clock that is safely synchronous with an external reliable clock is implemented as a tamper resistant process.

### <exception process>

A CPU that implements the GT 10 comprises the following exception processes in addition to conventional exception processes. The exception processes are broadly classified into exceptions associated with a tamper resistant page access right, exceptions associated with a tamper resistant region restoration, exceptions associated with register sealing, exceptions associated with a hash, and the like. The exception processes are sequentially described below.
- exceptions associated with a tamper resistant page access right
   (1) certificate specification error
      This exception occurs if a GT certificate (Cgt) having a specified number or identification information does not exist.
   (2) GT license authentication fault
      This exception occurs if a GT license is unsuccessfully authenticated.
   (3) tamper resistant space page fault.
      This exception occurs if attempts are made to execute an access instruction to a tamper resistant region although a tamper resistance flag tr within the TLB is OFF (not in a tamper resistant mode), or a line corresponding to its page does not exist within the TRB.
   (4) TLB signature mismatch exception
      This exception occurs if the value of TLB.sign (the sign field within the TLB) mismatches a signature included in a block. If this exception occurs, the GT 10 automatically stops the loading of a corresponding TLB line from the page table (Furthermore, the GT 10 sets the present flag (TLB.p) and the tamper resistance flag (TLB.tr) in the corresponding line within the TLB to OFF.
   (5) access right illegal expansion exception
      This exception occurs if the range of a specified access right is wider than an access right authorized by the AUTHORIZE command. If this exception occurs, the GT 10 automatically rejects an access right set command.
   (6) encryption key table access fault
      This exception occurs if kid or a different search key which does not exist within the TRB is specified, or if the TRB is unsuccessfully page-out.
   (7) license deletion fault
      This exception occurs if a license is unsuccessfully deleted.
- exceptions associated with tamper resistant region restoration
   (8) tamper resistant code restoration exception:
      RETURN_TO_TAMPER_RESISTANT_CODE_EXCEPTION
      A tamper resistant code restoration exception always occurs when an address currently being executed moves from a normal virtual region or a tamper resistant region to a tamper resistant region whose code decryption key Kc is different. In a process of this exception, contents of TRB.eadr (the eadr field within the TRB), which is an exception address of the tamper resistant region at a move destination, is verified, and the processor core accesses the exception address if the exception address exists in that field. If the exception address does not exist, the corresponding TRB line is deleted, and a tamper resistant code restoration exception address illegal exception occurs.
   (9) tamper resistant code restoration exception address illegal exception
      This exception occurs if space specified by a tamper resistant code restoration exception address does not exist in a tamper resistant space. If this exception occurs, for example, when restoration is made to a protection process, the present flag (p) of a TRB line, which corresponds to the address, is set to OFF, and a forcible jump is made to an address specified by the OS, etc.
- exceptions associated with register sealing
   (10) register sealing exception
      This exception occurs if a specified register is already sealed by a code having an identical Kc.
   (11) register releasing exception
      This exception occurs if a specified register is not sealed.
   (12) sealed register access fault:
      SEALED_REGISTER_ACCESS_FAULT_EXCEPTION
      This exception occurs if a specified register is already sealed by a code having a different Kc.
- exceptions associated with hash
   (13) hash unincluded exception
      This exception occurs if the GT 10 does not have a hash generation function or a check function.
   (15) hash mismatch exception
      This exception occurs if a hash value mismatch occurs when the GT 10 caches a protection code or protection data.

### <operation>

Processes performed by the GT 10 are described below.

### <GT authentication>

Authentication procedures used by the GT 10 are described first. The following description assumes the understanding of the contents of PKI.

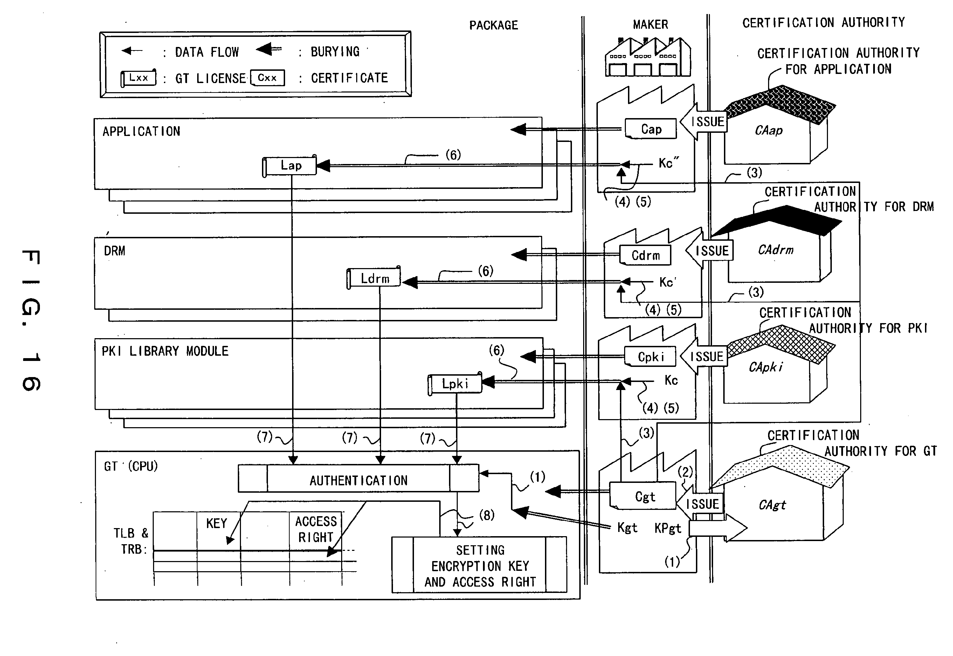

A schematic explaining the authentication made by the GT is shown in Fig. 16. As shown in this figure, development makers that create respective software packages of the protection application 50, the DRMs 30 and 40, each development maker that manufuctures each software package of an encryption module (included in the PKI library 20), a development maker that manufactures the GT 10, a certification authority CApki for a PKI library module, a certification authority CAdrm for DRM, a certification authority CAap for an application using DRM, and a certification authority CAgt for authenticating a GT are interposed for the authentication made by the GT 10. In Fig. 16, thin arrows indicate a data flow, whereas thick arrows indicate the burying of a license or a certificate in a software package. Additionally, numerals enclosed by parentheses indicate a process order. Here, assume that each TRM software is encrypted with an encryption key of a symmetric key cryptosystem, which is generated in secrecy by each TRM software development maker.

Generation and usage of a GT license are implemented by the following system operations, and program software execution authorization procedures.
(1) A GT maker passes an individual public key KPgt of the GT 10 to be commercialized to the certification authority CAgt for a GT. Furthermore, the GT maker buries a private key Kgt within the GT 10.
(2) The certification authority CAgt for a GT issues a public key certificate Cgt of the GT 10 to the GT maker. A signature may be affixed to the public key certificate Cgt of the GT 10 with a class private key Kcgt, and a class public key KPcgt may be open to the public in the form of a certificate to which a signature is affixed with a root private key Kagt of the certification authority CAgt for a GT. Furthermore, not both but either of individual and class keys may be used for the public key certificate Cgt. If the class key does not exist, a signature may be directly affixed to the public key certificate Cgt with the root private key Kagt.
(3) The GT maker copies the public key certificate Cgt, and distributes the copied certificate to a TRM software development maker.
(4) Each TRM software development maker creates a protection code file by encrypting a developed software executable code with a key Kc.
(5) Each TRM software development maker encrypts the key Kc with the public key KPgt of the GT 10, which is extracted from the public certificate Cgt, and generates a GT license Lxx (which is immobile) . Structure of the GT license will be described later.
(6) Each TRM software development maker buries the GT license Lxx, which is to be entered into the GT 10 by an initiator of the OS before software is executed, in the software package.
(7) The GT license is entered into the GT 10 immediately before each software is executed. The GT 10 decrypts the GT license with the private key Kgt, which pairs with the public key. Namely, the GT 10 is authenticated by each software development maker within the GT 10. In this way, the software is authorized to be executed in the GT 10. If software protected by the GT is desired to be distributed as freeware, or the like, a class public key KPcgt may be used to generate a GT license. Or, if software protected by the GT is desired not to be used by a GT other than a particular GT 10, an individual public key KPgt may be used to generate a GT license.
(8) The GT 10 sets the key Kc and the access rights, which are extracted from the GT license, in the TRB and the TLB within the GT 10. A user cannot reference the Kc set in the TRB even in a kernel mode (supervisor level/ring 0).

As described above, a GT license for giving an execution authorization to the GT 10 is buried in a TRM software package, and entered into the GT 10 before an encrypted program code is executed. The GT 10 decrypts the GT license with an individual private key Kgt, extracts a decryption key Kc of the program code from the GT license, and holds the decryption key Kc for each protection code in the TRB linked to the internal TLB. In the GT 10, the encrypted code is executed while being decrypted with the decryption key Kc.

A certification authority for a TRM software package, which is configured by the certification authority CApki for a PKI library module, the certification authority CAdrm for DRM, and the certification authority CAap for an application using DRM, issues a certificate that a software process of each package uses to authenticate a package at a data transfer destination when exchanging protection data. Furthermore, the certification authority for DRM among these authorities may be used to authenticate DRM at a license transfer destination.

The four types of certification authorities, which are referred to here, are used in different ways, so that risks of contents (information) distribution business can be reduced. However, such usages are not essential. Note that the PKI library 20, the decoder DRM 30, and the media DRM 40 may be collectively evaluated as one OS, a GT license may be generated and a public key certificate may be issued for the whole of this OS product.

Furthermore, the GT license may be inserted in the same file as that of a protected executable code. However, considering the sake of convenience of package superdistribution, it is recommended that the GT license is managed as a file different from that of an encrypted executable code.

The structure of a GT license is described next.

A license generation side obtains a certificate Cgt of an individual public key KPgt of a GT (tamper resistant module) at a license authorization destination, and generates a GT license with this certificate. The certificate Cgt may be a format in compliance with X.509. After a signature of the certificate Cgt of the individual public key KPgt and that of a certificate Cgt of a class key KPcgt are checked respectively with a class key KPcgt and a root public key KPagt, the certificates are used. The format of the GT license generated by the license generation side is as follows.
LicenseID| | ACgt.ar| |
E(KPgt, Ks)| |E(Ks, key| |LicenseID| |ACgt| |Is)| |CgtID| |
CgtIDackey| |else

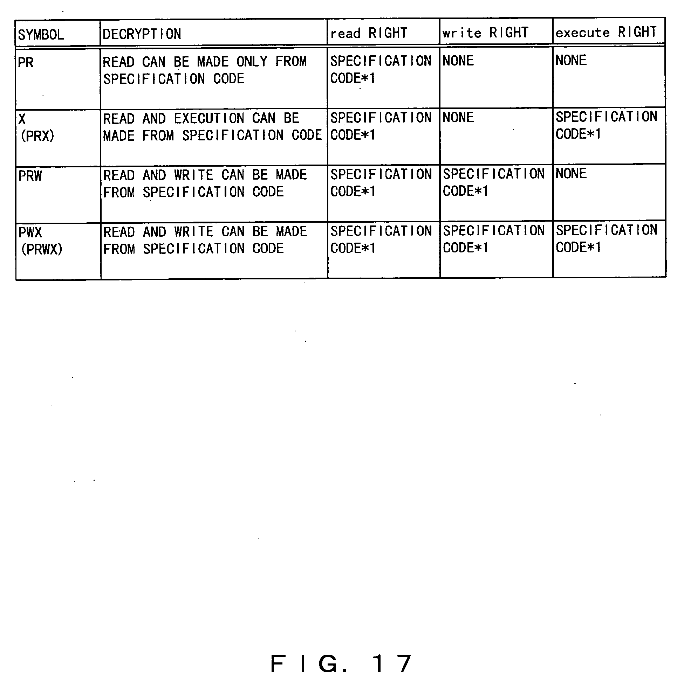

Here, meanings of the respective fields are as follows.
E (K, D) : A result obtained by encrypting data D with a key K.
A| |B: Data concatenation. Indicating that data A and B are concatenated.
Ks: Session key (random number) . A key of a symmetric (common key) cryptosystem.
Key: A code decryption key/data encryption/decryption key. Kc/Kd.
LicenseID: A license serial number. A license generation side generates a number unique to each license. A license generator ID may be put in a high-order portion, and a contents ID may be put in a mid-order portion.
ACgt: A GT access condition. Indicating a code/data usage condition forcible within a GT, and having the following fields.
ebim: An encryption block identification method. Copied to the TLB.ebim field shown in Fig. 5. The meanings of respective values are already described as TLB fileds.
aef: An authorized code key encryption flag (ackey encryption flag). If this flag is ON (1), it indicates that an authorized code key ackey is encrypted with an individual public key KPgt. If this flag is OFF (0), it indicates that the value of ackey is stored in ACgt.ackey (the ackey field of ACgt) unchanged.
ackey: An authorized code key. A value obtained by encrypting an encryption key key on a protected page, to which a process code accessible to an object decrypted with an encryption key Kc or Kd is recorded, with an individual public key KPgt. If a GT has a plurality of KPgts when the encryption key is encrypted with the invidual public key KPgt, information for identifying which KPgt is used is added. The type of an access right to that process is specified with ar.
eadr: An exception process address. This field is an option. The start address of an exception process code which occurs immediately before restoration is made from a page having a different key to a page on which the contents of a GT license is set.
ar: A basic access right. Taking the following values. Details will be shown in Fig. 17.
(a) PR: Only a read from a process specified with ackey can be made.
(b) X: A read and execution from a process specified with ackey can be made.
(c) PRW: A read/write from/to a process specified with ackey can be made.
(d) PWX: A read/write and execution from/to a process specified with ackey can be made.
uo: An unable-to-output flag. If this flag is ON (1), a TRB line in which key information of a license is stored is not output (page-out) to the encryption key table. This flag defaults to OFF (0), which indicates that an output can be externally made.
cl: A cache lock flag. An optional function. If this flag is ON, data of a tamper resistant region, whose protection is specified with a GT license, is not output to the outside of the cache. However, if ar does not include a write right (PR or X), this flag becomes invalid. This flag defaults to OFF, which indicates that an output can be externally made.
df: Debug mode Flag. If this flag is ON, it indicates an operation according to a specification with ar. See the description of the TLB. By setting df of Acgt within a GT license to ON, a protection code can be executed in a debug mode. Additionally, if a protection code file is sold in the form of superdistribution, etc., the file may be sold by setting this flag to OFF.
CgtID: An identifier value of an X.509 certificate of KPgt. A value obtained by concatenating issuer and serialNumber.
CgtIDackey: An option. An identifier value of an X.509 certificate of KPgt which encrypts ackey. A value obtained by concatenating issuer and serialNumber. If ACgt.aef is OFF, this value is omitted. Also omissible if this value is the same as CgtID.
Is: Other information.

A table of access rights and authorized privileges, which can be set in a GT license, is shown in Fig. 17. In the tamper resistant mode, an access right of a protection data or code region when viewed from a process (code execution state) is selected from the table shown in Fig. 17, and set in the TLB. "specification code" in Fig. 17 indicates a code that can be decrypted with a key specified with the Key field or the Ackey field in a corresponding TRB line.

Additionally, in Fig. 17, a privilege that can make only execution does not exist. However, also a CPU like an FR, which can specify both of a privilege that can make only execution and a privilege that can make a read and execution, exists. Tamper resistant privileges in this case can be represented respectively as PX and PRX. Similarly, both of PWX and PRWX may be specified also for a privilege that can make a write.

Since a GT license is based on a condition that a move cannot be made, it does not comprise a move function, a CRL (Certificates Revocation List), and an LRL (License Revocation List). Since there is no need to control the CRL and the LRL, a GT can be implemented as a CPU with ease. The CRL control and the LRL control of DRM are performed by the OS or an application. As a result, high expandability can be maintained.

Additionally, if a software TRM is desired to be implemented as freeware, etc., a class public key may be used to generate a GT license as described above. Inversely, if only a particular GT is desired to use software, a public key corresponding to a GT individual key may be used.

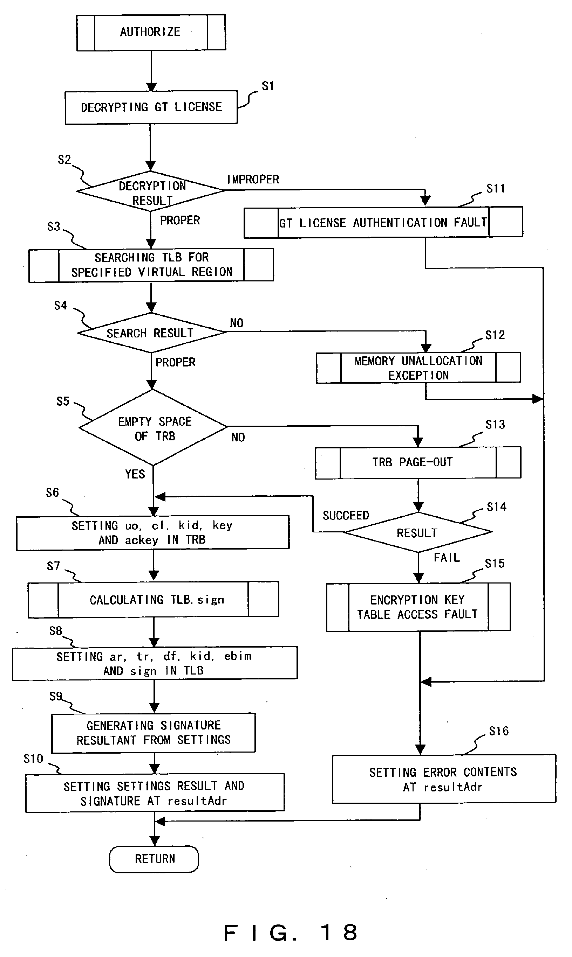

The procedure (8) in the above described GT authentication process is described in detail below with reference to Fig. 18. In the GT authentication process, the GT 10 sets a key Key, access rights, etc. in the TLB and the TRB based on a GT license by executing the access authorization (AUTHORIZE) command.

To implement this, the GT 10 first decrypts the GT license with a private key Kgt, which pairs with a public key of the GT (S1). Then, the GT 10 determines whether or not the GT license can be properly decrypted (S2). If the GT license can be properly decrypted ("PROPER" in S2), the GT 10 searches the TLB for a specified virtual region (S3) . If the GT license cannot be properly decrypted ("IMPROPER" in S2), the GT 10 makes a GT license authentication fault occur (S11), and the process proceeds to S16. In S16, the GT 10 sets the contents of the error at resultAdr, and the process restores to the main flow.

If the specified virtual region is obtained as a result of searching the TLB in S3 ("YES" in S4), the GT 10 determines whether or not an empty space exists in the TRB (S5) . If the specified virtual region is not obtained as a result of searching the TLB in S3 ("NO" in S4), the GT 10 makes an unallocation exception indicating that a memory is not allocated occur (S12). The process then proceeds to S16.

If there is an empty space in the TRB in S5 ("YES" in S5), the GT 10 sets values in uo, cl, kid, key, and ackey fields within the TRB based on the GT license. If there is no space in the TRB ("NO" in S5), the GT 10 outputs (page-outs) some lines within the TRB to the encryption key table (S13). If the GT 10 successfully page-outs the lines ("SUCCEED" in S14), the process proceeds to S6. If the GT 10 unsuccessfully page-outs the lines ("FAIL" in S14), the process proceeds to S16 after the GT 10 makes an encryption key table access fault occur (S15).

After S6, the GT 10 calculates a signature sign to be stored in the TLB (S7), and sets ar, tr, df, kid, ebim, and sign in the TLB (S8). Then, the GT 10 generates a signature resultant from the settings (S9), and sets settings results and the signature generated in S9 at resultAdr (S10) . The process then restores to the main flow.

### <structure of a protection code file>

The structure of a protection code file is described below. An encrypted protection code file (executable format) has a structure where a header is added to the start of a repetitive structure of a protection code block and a plain text code block. Additionally, if the protection code file is structured as a file available to superdistribution, the following items of information must be further included in the header of the file.
- contents ID: Required as link information to a GT license having a contents decryption key for decrypting an encrypted protection code.
- contents cryptosystem: Required as a value for identifying the cryptosystem of a protection code. This value may include the length of a decryption key.

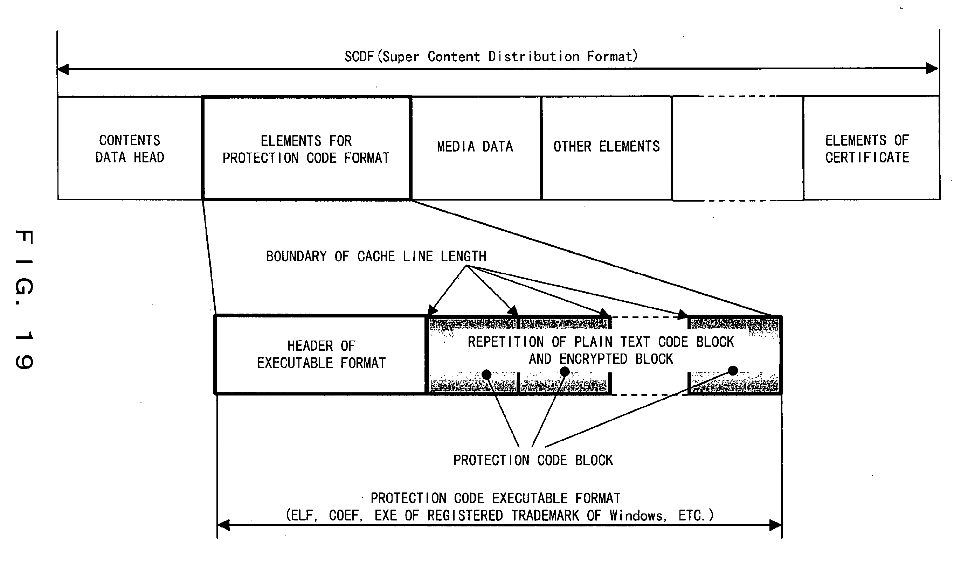

An example of a protection code executable format when used as a superdistribution file format is shown in Fig. 19. In this figure, contents of a protection code executable format is stored as SCDF (Super Content Distribution Format) elements in an SCDF file.

### <loading and execution of a protection code, and saving and holding of protection data>

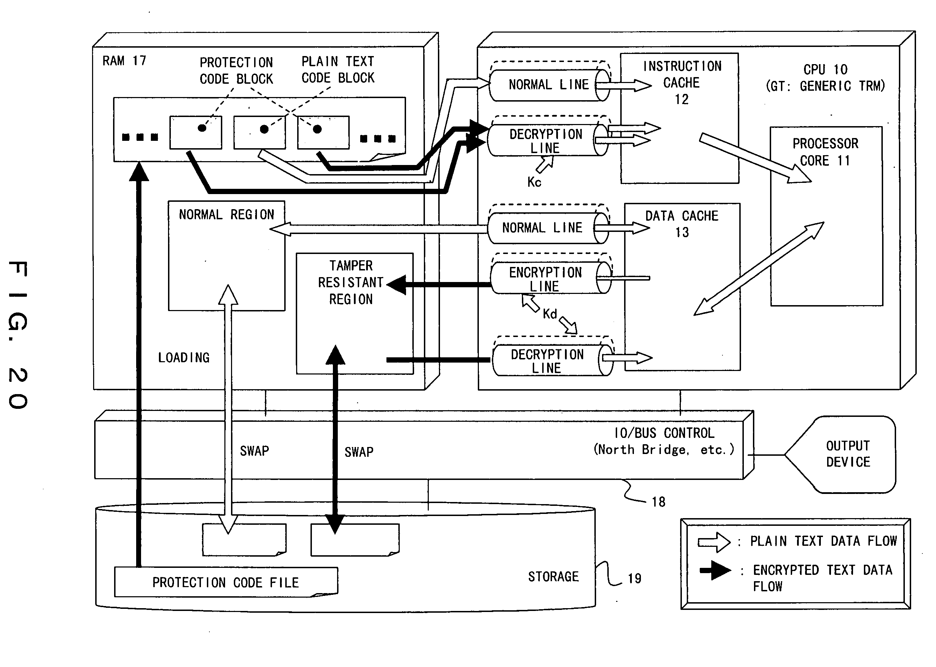

Loading and execution procedures of a protection code, and saving and holding of protection data are described below with reference to Fig. 20.

As described above, an encrypted protection code file is configured by a header, a protection code block, and a plain text code block. The protection code file is loaded into the RAM 17 when being executed, and copied to the instruction cache 12 in blocks according to a prediction made within the GT 10 (CPU). Only a hit instruction among the blocks is interpreted and executed by the processor core 11. As shown in Fig. 20, a protection code block among the code blocks is recorded to the instruction cache 12 after being decrypted by a decryption cache line.

In Fig. 20, two types of cache lines such as a decryption cache line that decrypts an encrypted block and writes the decrypted block to the instruction cache 12, and a plain text cache line that writes a plain text block to the instruction cache 12 are comprised between the instruction cache 12 and the RAM 17. A plurality of cache lines are comprised as described above, whereby processing speed can be increased.

Additionally, as shown in Fig. 20, when protection data is output to the RAM 17 by executing a protection code, it is output to a tamper resistant region preset as a virtual memory. A key Kd of a symmetric key cryptosystem, which is intended to encrypt and decrypt protection data, is associated with the tamper resistant region, and held within the GT 10 in secrecy. The key Kd is assigned to each code decryption key Kc as a different random number. After the protection data is once recorded to the data cache 13 within the GT 10 (CPU), it is output to the RAM 17 after being encrypted. Furthermore, the protection data in the RAM 17 is decrypted within the GT 10 (CPU), and recorded to the data cache 13. Hit data among the protection data is used by the processor core 11.

In Fig. 20, three types of cache lines such as a decryption cache line that decrypts an encrypted block and writes the decrypted block to the instruction cache 12, an encryption cache line that encrypts the contents of the data cache 13 and writes the encrypted contents to a tamper resistant region within the RAM 17, and a plain text cache line that writes a plain text block to the instruction cache 12 are comprised between the data cache 13 and the RAM 17. Also with this configuration, processing speed can be increased.

Remember that encrypted protection data can be saved from the RAM 17 to a storage 19. Namely, the tamper resistant region can be expanded not only within the RAM 17, but also up to the storage 19 connected via a bus 18.

### <page access control>

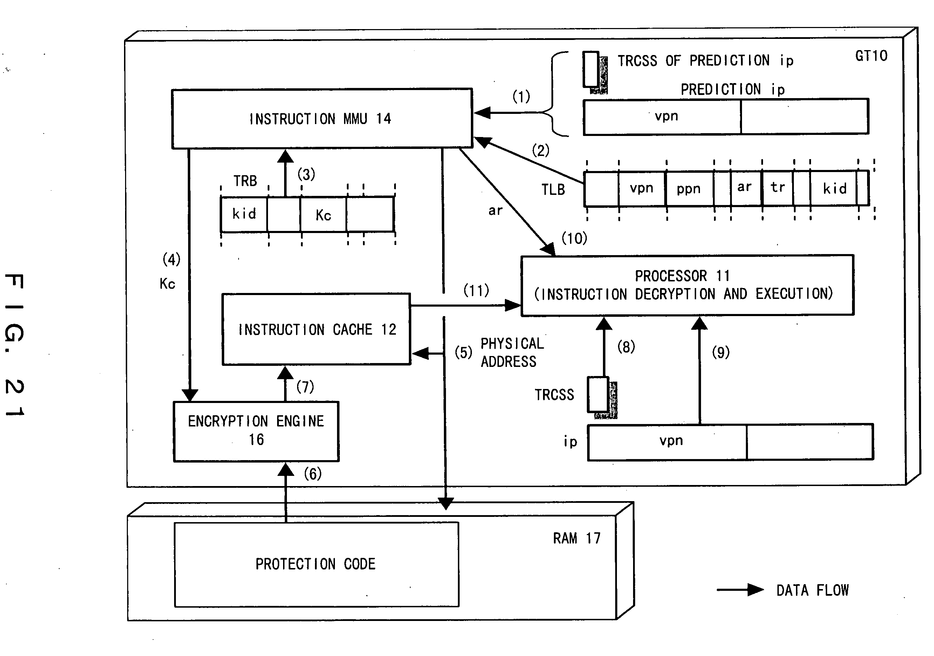

As described above, after the GT 10 obtains authorization to execute a TRM program code and loads a code block that configures a protection code file into the RAM 17, it decrypts and executes the protection code block. Access control for a page (an instruction page or a code page) to which a protection code is recorded when being executed is described below with reference to Fig. 21. In this figure, arrows indicate a data flow, and numerals enclosed by parentheses indicate a process order and corresponds to a procedure number in the following description.

The access control for a page to which a protection code is recorded is performed as follows.
(1) The instruction MMU 14 reads a virtual address stored in a prediction instruction pointer (ip).
(2) The instruction MMU 14 reads a physical page number ppn, a tamper resistance flag tr, and an access right ar of the tamper resistant mode, which correspond to the virtual address, from the TLB.
(3) If the tamper resistance flag is ON, the instruction MMU 14 extracts a code decryption key (Kc) from the TRB.
(4) The instruction MMU 14 sets Kc in the encryption engine 16.
(5) The instruction MMU 14 sets an address of a protection code block to be cached in the instruction cache 12 and the RAM 17.
(6) The protection code block is entered from the RAM 17 to the encryption engine 16.
(7) The protection code block decrypted by the encryption engine 16 is recorded to the instruction cache 12.
(8) If the virtual address stored by the instruction pointer matches the prediction instruction pointer (namely, if a cache hit occurs), the processor core 11 reads a TRSS flag from a register for the ip. The process then proceeds to the following procedure. Or, if a cache hit does not occur, the process goes back to the above described procedure (2).
(9) The processor core 11 reads the virtual address from the register for the ip.
(10) The processor core 11 extracts the access right ar from the instruction MMU 14, and verifies the access right.
(11) The processor core 11 reads and executes the protection code block from the instruction cache 12 to which the content of the virtual address is recorded.

If an instruction page to which an instruction to be executed is recorded is switched in the procedure (10), the processor core 11 makes the following verifications before reading the protection code block in the procedure (11).
(a) Whether or not an encryption key (TRB. key) or an authorized code key (TRB.ackey) of the page to which a protection code block to be executed next is recorded matches the encryption key (TRB.key) to which a code block executed immediately before is recorded.
(b) Whether or not an access condition recorded to TLB.ar for the protection code block to be executed next matches an access to be made next.

If a mismatch is found in at least either of (a) and (b), the processor core 11 stop executing the instruction, and makes an access right exception occur.

Access control for a page to which a protection data block is recorded is described next. The access control for a protection data block is forced by setting the contents of a GT license in the TRB and the TLB. An access to the protection data block is controlled according to an authorized code key ackey, an encryption/decryption key Kd, and access rights ar, which are held in the TRB and the TLB.

The above described access control procedures for a protection code block, and those for a protection data block, which are performed by a protection process currently being executed, are similar. Furthermore, when a page to which an instruction to be executed is recorded is switched, or when a page to which protection data to be accessed is recorded is switched in the above descried procedure (10), the processor core 11 makes the following verifications before accessing protection data.
(a) Whether or not an encryption key (TRB.key) or an authorized code key (TRB.ackey) of a page to which protection data to be accessed is recorded matches an encryption key (TRB. key) of a page to which an executable code is recorded.
(b) Whether or not an access right (TLB.ar) of the page to which the protection data to be accessed is recorded matches an access to be made next.

If a mismatch is found in at least either of (a) and (b), the processor core 11 stops the access to the protection data, and makes an access right exception occur.

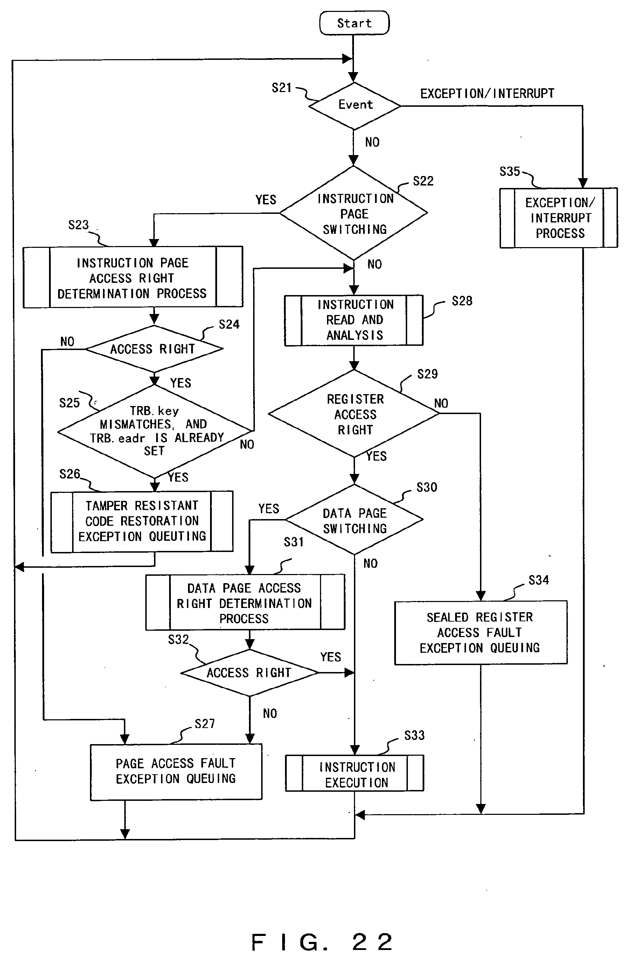

The above described access controls for a protection code and protection data, which are performed by the processor core 11, are described below in further detail with reference to Fig. 22.

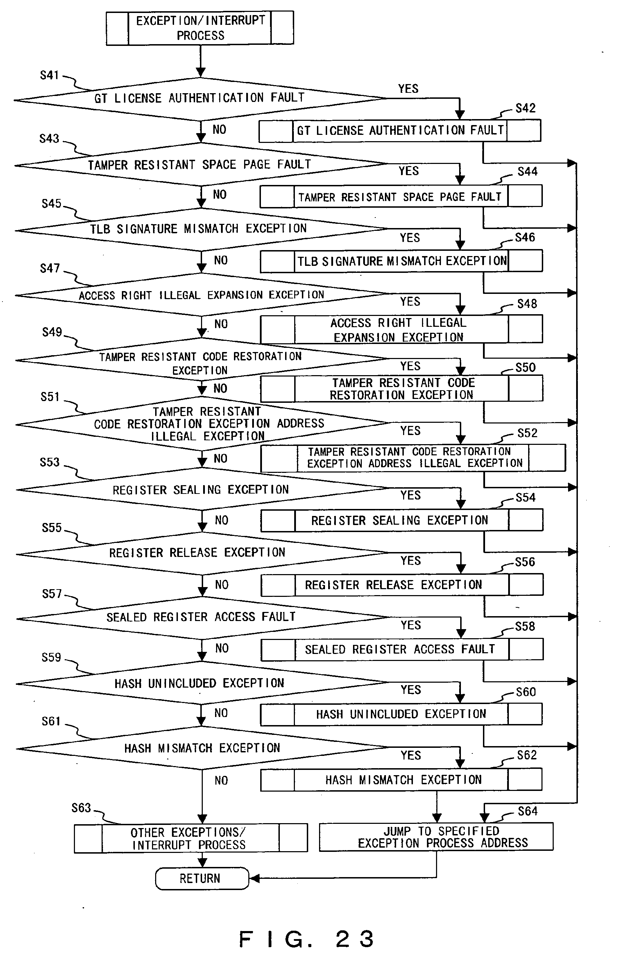

Firstly, the processor core 11 waits for an occurrence of an exception/interrupt event (S21). If the exception/interrupt event occurs, the processor core 11 performs an exception/interrupt process (S35). The process then goes back to S21. The exception/interrupt process will be described in detail with reference to Fig. 23. Since the respective types of exception processes shown in Fig. 23 are already described in detail as the <exception processes> stated earlier, their descriptions are omitted.

If the exception/interrupt event does not occur ("NO" in S21), the processor core 11 determines whether or not instruction page switching occurs (S22).

If the instruction page switching occurs ("YES" in S22), the processor core 11 performs a process for determining whether or not an access right to the instruction page exists (S23) . If the instruction page switching does not occur ("NO" in S22), the process proceeds to S28.

In the determination process performed in S23, the processor core 11 determines whether or not the encryption key (TRB.key) or the authorized code key (TRB.ackey) of a page to which a protection code block to be executed next is recorded matches the encryption key (TRB.key) of a page to which the code block executed immediately before is recorded, and whether or not an access to be made next is permitted by an access condition recorded to TLB.ar for the protection code block to be executed next. If the above described two conditions are satisfied, the processor core 11 determines that the access right to the switched instruction page exists for the code to be executed next ("YES" in S24). The process then proceeds to S25. Otherwise ("NO" in S24), the processor core 11 queues a page access fault exception (S27). The process then goes back to S21.

In S25, the processor core 11 determines whether or not the encryption key (TRB.key) of the page to which the protection code block to be executed next is recorded matches the encryption key (TRB. key) of the page to which the code block executed immediately before is recorded, and further determines whether or not a value is already set in the eadr field in a TRB line corresponding to the page. If the encryption keys (TRB.keys) mismatch, and if the value is already set in the eadr field ("YES" in S25), the processor core 11 queues a tamper resistant code restoration exception (S26) . The process then goes back to S21. If the encryption keys match, or if the value is not set in the eadr field ("NO" in S25), the process proceeds to S28.

In S28, the processor core 11 reads the instruction from the instruction page, and analyzes the instruction. Then, the processor core 11 verifies whether or not a code currently being executed has an access right to a register specified in the instruction (S29) . If the code has the access right to the specified register ("YES" in S29), the process proceeds to S30. If the code does not have the access right to the specified register ("NO" in S29), the processor core 11 queues a sealed register access fault exception (S34). The process then goes back to S21.

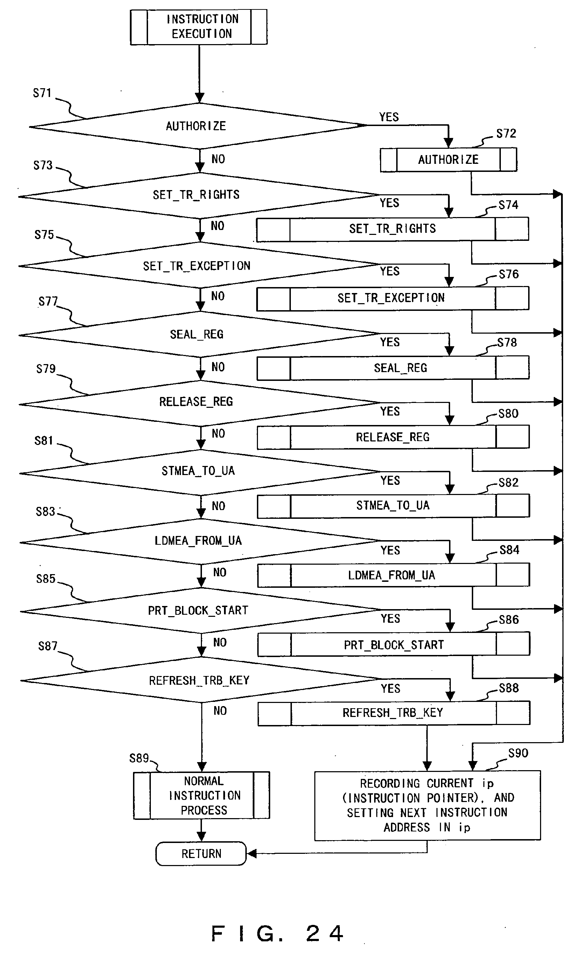

In S30, the processor core 11 determines whether or not the data page indicated by the register is switched to the preceding data page. If the data page is not switched ("NO" in S30), the processor core 11 executes the instruction (S33). The process then goes back to S21. The instruction execution process will be described in detail with reference to Fig. 24. Since commands shown in Fig. 24 are already stated in detail in the above described <instruction set>, their descriptions are omitted.

If the data page is determined to be switched ("YES" in S30), the processor core 11 performs a process for determining whether or not an access right to the data page exists (S31). Because the process in S31 is similar to that for a protection code, which is described in S23, its description is omitted. If the processor core 11 determines that the access right to the switched data page exists for the code to be executed next as a result of the determination made in S31 ("YES" in S32), the process proceeds to S33. Otherwise ("NO" in S32), the process proceeds to S27.

### <invocation of protection software>

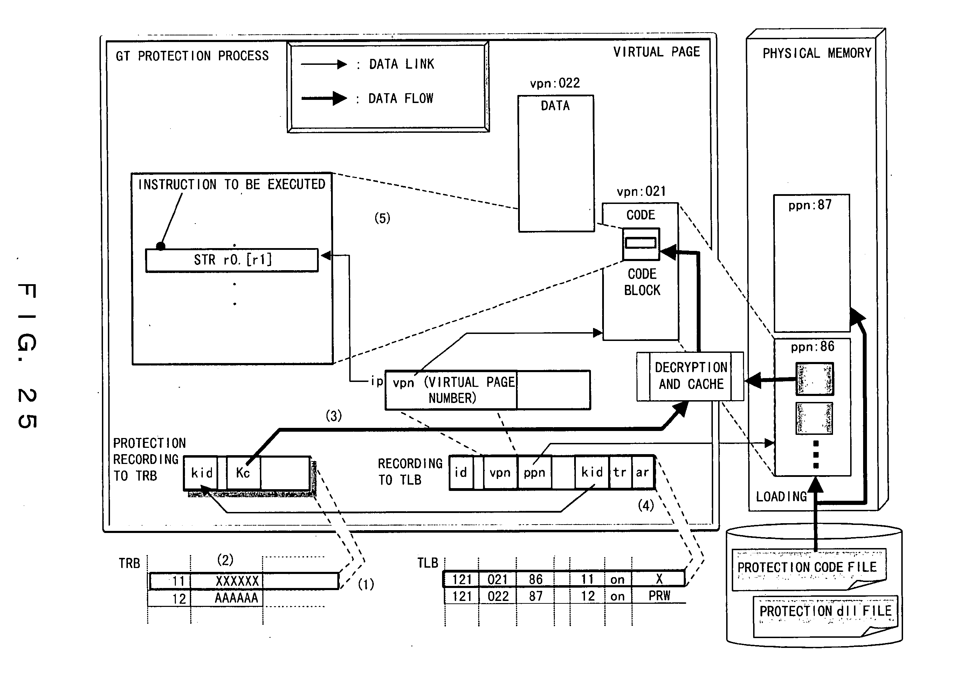

Operations of the OS kernel 60 and the GT 10, which are performed when software protected in the GT 10, namely, a protection code file is invoked, are described next with reference to Fig. 25. In this figure, thin arrows indicate a data link, whereas thick arrows indicate a data flow. Additionally, numerals enclosed by parentheses indicate a process order and corresponds to a procedure number in the following description.

Procedures for invoking a protection code file are as follows.
(1) The OS kernel 60 secures a virtual memory region and a physical memory region, into which a protection code and protection data are loaded, by setting the TLB, and links the virtual memory region and the physical memory region.
(2) The GT 10 sets a TRB line linked to the TLB based on the AUTHORIZE command from the OS kernel 60.
(3) The GT 10 sets the ip register based on a code module call instruction such as CALL, etc. issued from the OS kernel 60 (if the call instruction does not hit an instruction at a call destination, the GT 10 decrypts a corresponding code block, and copies the decrypted code to the cache).
(4) The GT 10 verifies a right to execute the instruction at the address specified by ip based on the contents of TLB.ar (the ar field within the TLB).
(5) If the right to execute the instruction can be verified, the GT 10 reads, decodes, and executes the instruction (STR instruction in Fig. 25) at the address specified by ip.

### <access to protection data>

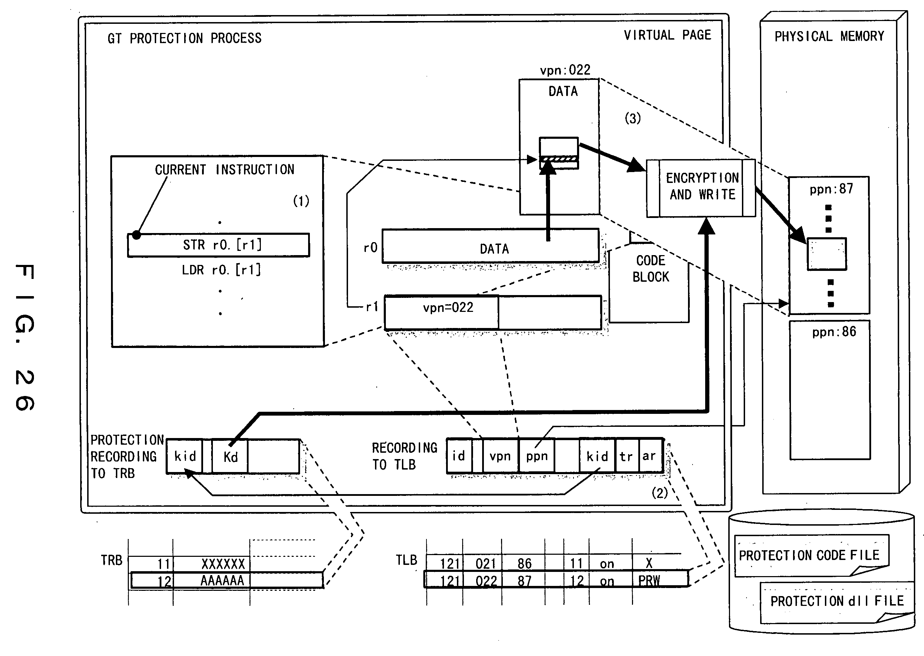

A mechanism for accessing protection data from a process that executes a GT protection code is described next with reference to Fig. 26. In this example, it is assumed that a protection data region is secured before a protection code is executed, and also initial values are loaded from a protection code file. It is also assumed that access authorization and access right setting for a protection data region are already made with the AUTHORIZE command that is issued from the OS 60, and executed by the GT 10.

Procedures that a protection process uses to access protection data, and corresponding operations of the GT 10 in the case where an instruction "STR r0, [r1]" (instruction to write the contents indicated by the value of a register r0 to an address indicated by the value of a register r1) is executed are described below as an example. In Fig. 26, meanings of arrows and numerals enclosed by parentheses are similar to those in Fig. 25.
(1) A protection code executes a memory access instruction (STR, LDR, etc.).
(2) The GT 10 verifies access right information TLB.ar (the ar field within the TLB) in a TLB line corresponding to an address to be accessed.
(3) The protection code accesses data of a page having a virtual page number which matches TLB.vpn (the vpn field within the TLB) (If data does not exist in the cache, the protection code decrypts the data from a physical page corresponding to the virtual page, and copies the decrypted data to the cache).

### <protection module call from a protection process>

Procedures for calling a protection module from a protection process are described next. Following two cases exist for invoking another protection code module (DLL (Dynamic Link Library), etc.) from a protection process.
(a) The case where a code decryption key Kc of a called protection code module is the same as that of a protection process (referred to as a parent process hereinafter) which calls the module.
(b) The case where a code decryption key Kc of a called protection code module is different from that of a parent process.

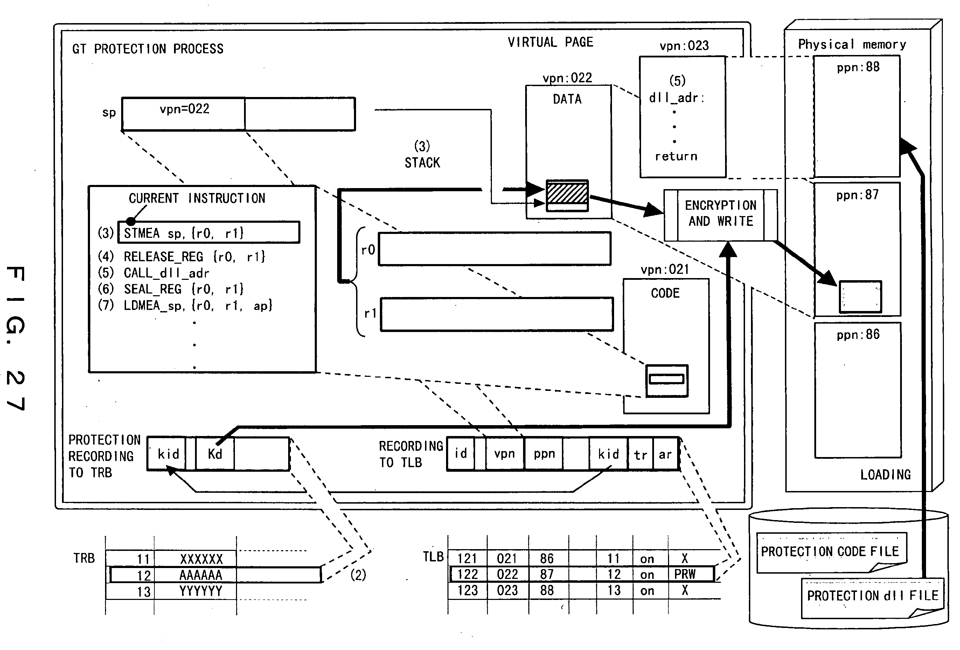

Procedures for calling another protection code module from a protection parent process in the case (b) are shown in Fig. 27. Also in this figure, contents of arrows and numerals enclosed by parentheses are similar to those in Fig. 25. Although the protection code module is represented as a DLL in Fig. 27, this is merely one example.
(1) The parent process secures a virtual region for loading the protection code module, and a physical region corresponding to the virtual region with TLB settings, etc.
(2) The parent process generates a TRB linked to the TLB with the access authorization (AUTHORIZE) instruction, sets a'code decryption key Kc in the TRB, and also sets an access condition in the TLB.
(3) The parent process stores a used register for secret information, which the parent process itself uses, in a stack region within a protection data region of the parent process itself (stack data within the protection data cache is encrypted and recorded to an external memory depending on need).
(4) The parent process executes a release register (RELEASE_REG) command.
(5) The parent process calls the protection code module with a CALL instruction, etc.
(6) The parent process executes a seal register (SEAL_REG) command.
(7) When the call is returned, the parent process restores a saved stack to the original register.

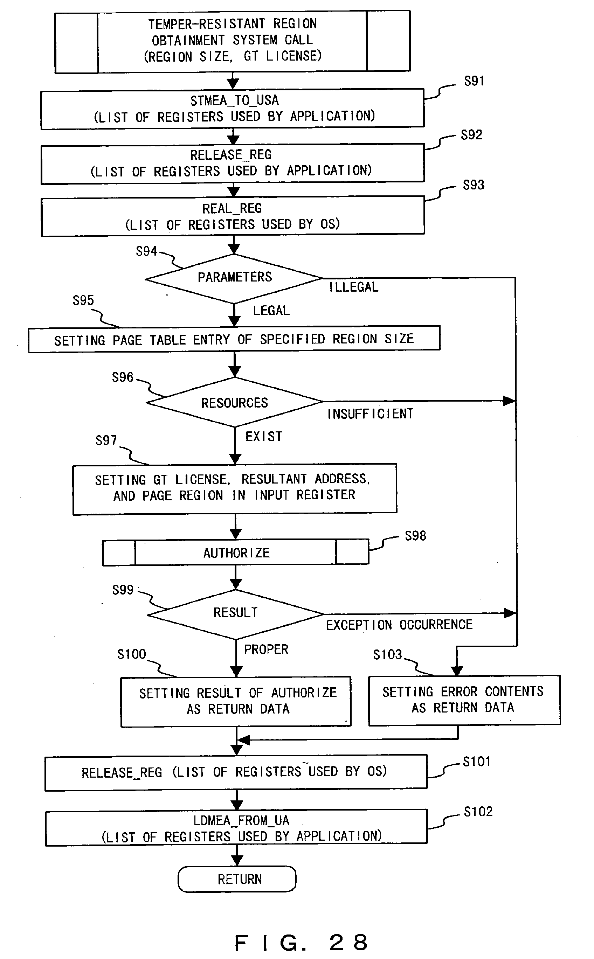

A flowchart showing the process performed by the OS kernel in the above described procedures is shown in Fig. 28.

If the parent process makes a request to secure a virtual region for loading the protection code module, and a physical region corresponding to the virtual region in the procedure (1) of Fig. 27, a tamper resistant region obtainment system call is made. The parent process notifies the OS kernel 60 of the sizes of the required regions and a GT license, when making this request. In this system call, the OS kernel 60 first outputs a store stack to unauthorized area (STMEA_TO_UA) command that utilizes a list of registers used by an application as input parameters to the processor core 11 (S91). step S91 corresponds to the procedure (3) of Fig. 27.

Then, the OS kernel 60 issues a release register release (RELEASE_REG) command that utilizes the list of registers used by the application as input parameters to the processor core 11 (592) . As a result, a specified register is released. step S93 corresponds to the procedure (4) of Fig. 27.

The OS kernel 60 issues a seal register (SEAL_REG) command that utilizes a list of registers used by the OS as input parameters to the processor core 11 (S93). If the parameters of these commands are legal ("LEGAL" in S94), the commands are executed by the processor core 11. The process then proceeds to S95. If the parameters are illegal ("ILLEGAL" in S94), the process proceeds to S103.

In S95, the OS kernel 60 sets an entry of a region size specified by the parent processor in the page table. If the resources of a tamper resistant region for setting the region of the specified size exist ("EXIST" in S96), the process proceeds to S97. If the resources of the tamper resistant region are insufficient ("INSUFFICIENT" in S96), the process proceeds to S103.

In S97, the OS kernel 60 sets the GT license, the set address, and the page region in an input register, and issues the access authorization (AUTHORIZE) command to the processor core 11. step S97 corresponds to the procedure (2) of Fig. 27. If the processor core 11 properly executes the command ("PROPER" in S99), the process proceeds to S100. If the processor core 11 cannot execute the command properly ("EXCEPTION OCCURRENCE" in S99), the process proceeds to S103.

In S100, the OS kernel 60 sets a result of the access authorization (AUTHORIZE) command as return data Thereafter, the procedure (5) of Fig. 27 is executed, and a protection code module is called. Then, the OS kernel 60 issues a release register (RELEASE_REG) command to the processor core 11, and makes the processor core 11 release the register used by the OS (S101). Lastly, the OS kernel 60 issues a load stack from unauthorized area (LDMEA_FROM_UA) command to the processor core 11, makes the processor core 11 load the stacked data into the register, so that restoration is made to the normal state. This step S95 corresponds to the procedure (7) of Fig. 27.

If an illegal parameter, insufficient resources, or an exception occurs, the OS kernel 60 sets the content of an error as return data in S103. The process then proceeds to S101.

### <exception process when a tamper resistant code is restored)

When an address currently being executed moves from a normal virtual region or a tamper resistant region to a tamper resistant region having a different code decryption key Kc due to an instruction such as CALL, JUMP, RETURN, etc., a tamper resistant code restoration exception occurs. The following two processes must be performed in this exception process.
(a) Verifying the sealing of a register, and resetting the sealing if the register is already released.
(b) Verifying the value of a tamper resistant segment selector, and resetting the value depending on need.

The GT 10 sets the start address of a release/restoration exception in the TRB before a protection code seals the register. Additionally, the protection code must include a release/restoration exception process so that secret information recorded to the register does not leak out due to the continuation of execution while the register is being released by an external interrupt. In this release/restoration exception process, the GT 10 again verifies whether or not the register that should be sealed is actually sealed. If the register is not sealed, the GT 10 must again seal the register, or stop the execution of the protection code.

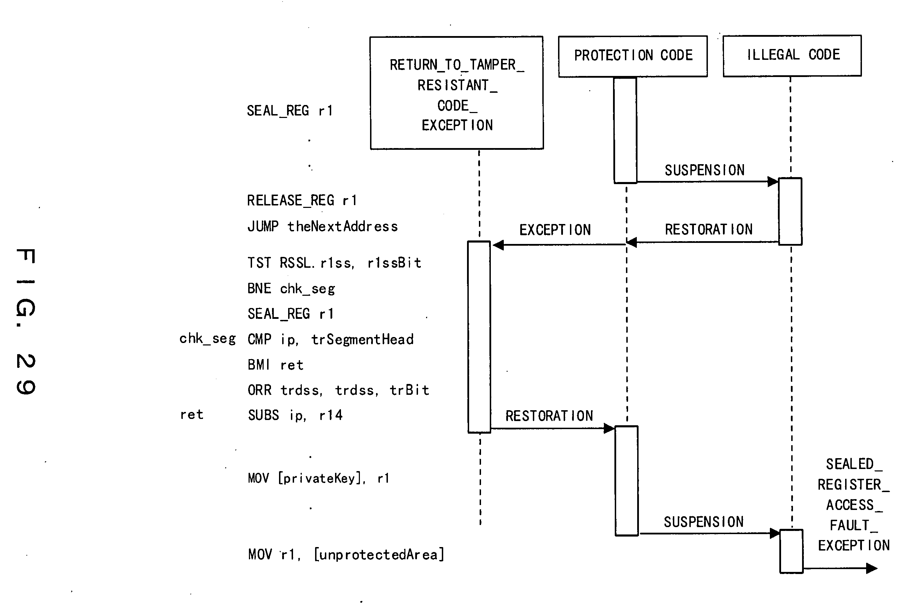

An example of a sequence for preventing a sealed register illegal access, which is executed by the tamper resistant code restoration exception process, is shown in Fig. 29. This figure shows the case where an exception occurs when a protection code is restored after being suspended by an illegal code. In Fig. 29, a seal register (SEAL_REG r1) command is executed before the protection code is suspended. However, the register that should be sealed at the time of restoration is not sealed, since a release register (RELEASE_REG r1) command is executed while the illegal code is being executed.

The initial three lines of the sequence for the tamper resistant code restoration exception, which is shown in Fig. 29, are as follows.
TST RSSL, rlss, rlssBit
BNE chk_seg
SEAL_REG rl

These three lines indicate a process for verifying the sealing state of the register r1 used by the protection code by examining the value of a bit rlss, which corresponds to the register r1 within the RSSL register.

Furthermore, the illegal code can possibly steal the process with an interrupt, etc., and set a data or stack TRSS flag to OFF (0). If a protection code is continued despite the OFF state of the TRSS flag, protection data is written not to a tamper resistant region but to a normal virtual region.

To prevent such a situation, a tamper resistant data/stack segment selector for each virtual address pointed to by ip (instruction pointer. Also referred to as a PC (program counter) depending on a CPU) must be reset in the tamper resistant code restoration exception process. The fourth to the sixth lines of the sequence for the tamper resistant code restoration exception shown in Fig. 29 are as follows.
chk_seg CMP ip, trSegmentHead
BMI ret
ORR trdss, trdss, trBit

These three lines indicate a process for resetting a tamper resistant data/stack segment selector for each virtual address pointed to by ip. Upon termination of the tamper resistant code restoration exception process, the process restores to the protection code. At the end of the sequence shown in Fig. 29, the illegal code again suspends the process, and attempts to write the content of the register r1 used by the protection code to a normal virtual region (MOV r1, [unprotectedArea]). However, since the register r1 is again sealed in the tamper resistant code restoration exception process, a sealed register access fault (SEALED_REGISTER_ACCESS_FAULT_EXCEPTION) occurs.

As described above, with the sequence for the tamper resistant code restoration exception, the GT 10 protects the secret data of a protection code at the time of restoration.

### <management of protection context switching>

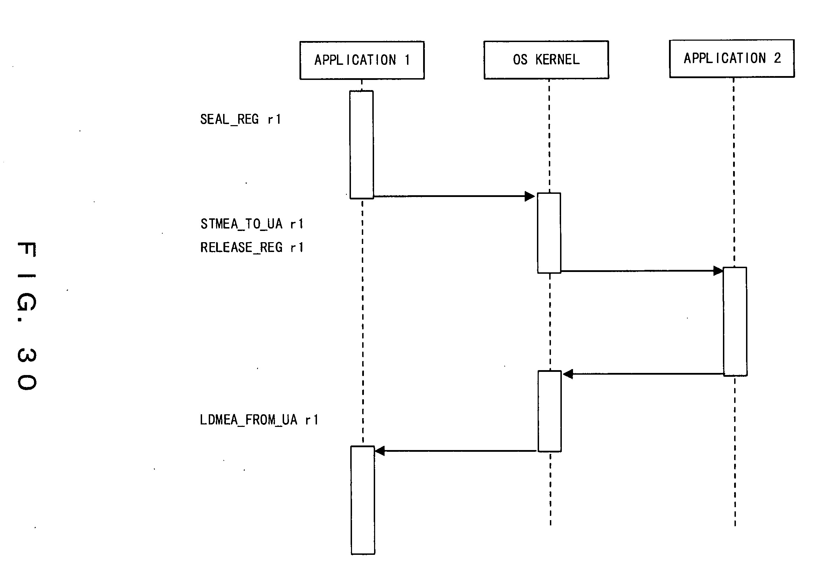

The case where context switching from a tamper resistant user process to an OS kernel process occurs, and all of registers are saved to a stack is assumed below. An example of a sequence at the time of protection context switching, which is executed by the OS kernel, is shown in Fig. 30.

Fig. 30 assumes that a protection context is switched from an application 1 to an application 2. Originally, the register r1 used by the application 1 is sealed. Thereafter, the OS kernel 60 executes a store stack to unauthorized area (STMEA_TO_UA) command when the protection context is switched, so that the value of the register r1 is saved after being encrypted with a data encryption/decryption key Kd. Furthermore, the stacked register r1 is cleared to 0 by the release register (RELEASE_REG) command. The register r1 is released, whereby a process of the application 2 can use the register r1.

Thereafter, the OS kernel 60 executes a load stack from unauthorized area (LDMEA_FROM_UA) command when the protection context restores to the original process, so that the value of the saved register is decrypted, and returned to the register r1. Thereafter, the register r1 is again sealed. Ensuring the holding and the restoration of registers including a sealed register with such protection context management at the time of context switching is positioned as a process of the OS kernel 60.

When the OS kernel 60 makes an unprotected system call, a scheme such as making a call after switching an SP to an address in a normal virtual space, or the like is required. The OS records a return value of the system call to a normal virtual region as conventional.

In the meantime, when the OS kernel 60 makes a protected system call, it passes a GT license for sharing a stack region in which a return value is stored as a parameter, or the like. The OS executes the AUTHORIZE command by using the received GT license as parameters, whereby a tamper resistant stack region can be shared with an application process.

### <safe sharing of a protection data region>

As described above, even processes in a tamper resistant space cannot make a mutual access between code or data regions having different license owners. However, with the following tamper resistant region sharing function, protection data can be exchanged safely among protection code modules such as a software package, a library, an object, a process, and the like, which are protected by the GT 10 and have different code decryption keys Kcs.

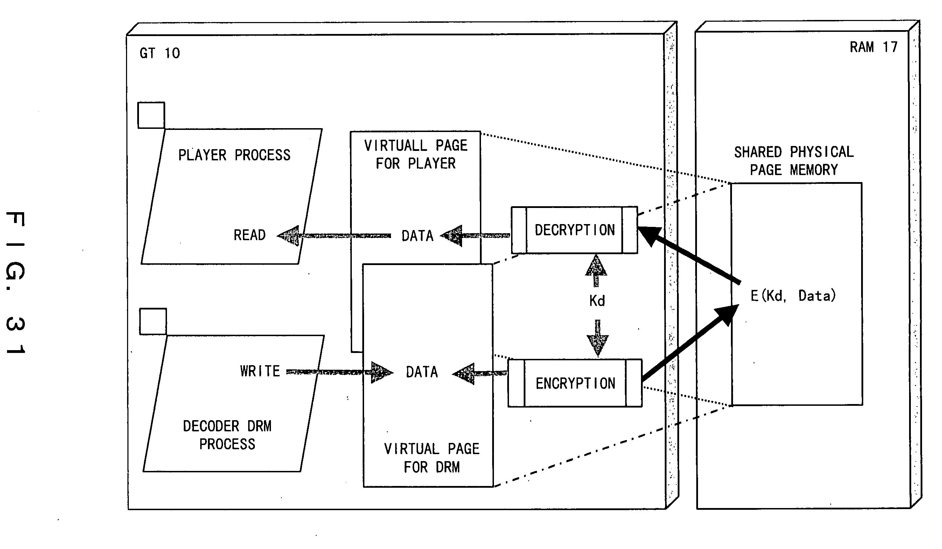

An example of the sharing of a protection data region is shown in Fig. 31. This figure explains the case where a player process and a decoder DRM process are running on the GT 10.

Data decoded by the decoder DRM process is written to a virtual page for a DRM process. The decoded data is recorded to a shared physical page within the RAM 17 after being encrypted with a data encryption key Kd. The data recorded to the shared physical page within the RAM 17 is decrypted with the decryption key Kd, and written to the virtual page for a DRM process. The player (reproduction application) process reads and reproduces this data.

Procedures for setting such sharing of protection data are described in detail below.

Firstly, a generation source module that generates a protection data region to be shared, and a sharing destination module that shares the protection data region with the generation source module are assumed to share protection data.

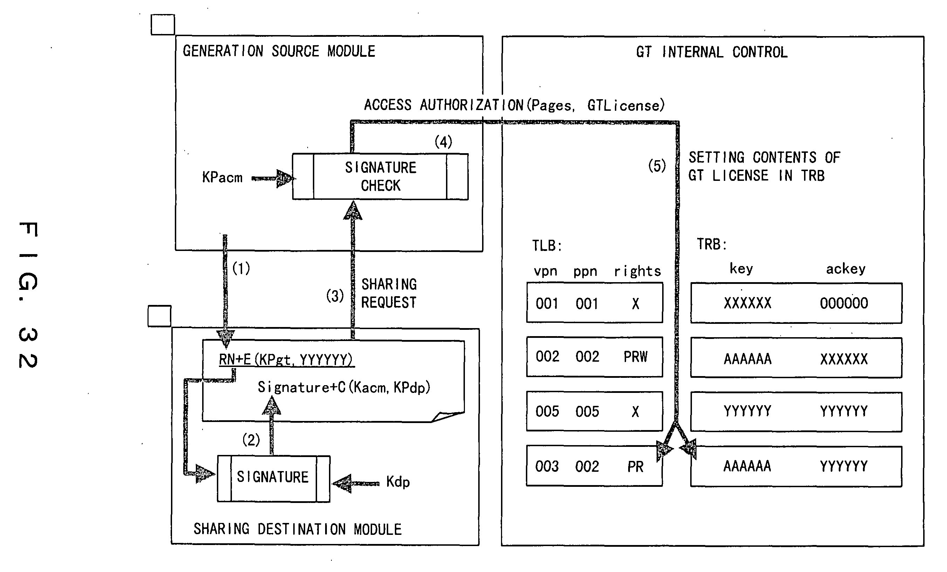

To enable the sharing destination module to read the protection data region of the generation source module although the generation source module and the sharing destination module are different packages (namely, Kcs are different), the generation source module must authenticate the sharing destination module in a manner shown in Fig. 32. After the authentication is properly completed, the TLB and the TRB must be set so that the sharing destination module can use the encryption key Kd of the protection data region of the generation source module within the GT 10.

Procedures for authenticating a module and for sharing a protection data decryption key are described below with reference to Fig. 32. In this figure, numerals enclosed by parentheses indicate a process order, and correspond to a procedure number in the following description. Additionally, meanings of respective symbols in Fig. 32 are as follows.
RN: A random number that a generation source module temporarily generates.
KPacm: A root public key of a certification authority for a software module.
Kacm: A root private key of a certification authority for a software module.
Kdp: A private key of a sharing destination module.
KPdp: A public key of a sharing destination module.
C (KPdp, Kacm): A public key certificate of a sharing destination package.
Kc1: A code decryption key of a sharing source module.
Kc2: A code decryption key of a sharing destination module.
(1) The generation source module passes a temporarily generated random number to the sharing destination module.
(2) The sharing destination module adds a digital signature of data, and a certificate of a public key corresponding to a private key used for the signature to the data where an ID of a virtual region generated by a process of the sharing destination module, a value obtained by encrypting Kc2 with KPgt, and a random number are concatenated. This certificate must be issued by a reliable third party such as a certification authority (CApki) for a PKI library, a certification authority (CAdrm) for DRM, a certification authority (CAap) for an application, or the like. This description assumes that a decryption key Kc="YYYYYY" is encrypted with KPgt for the certificate.
(3) The sharing destination module passes the data generated in (2) to the generation source module via a normal data sharing/interprocess communication, or the like.
(4) The generation source module checks the signature, and executes the access authorization (AUTHORIZE) command by using as parameters a GT license in which an accepted authorized code key, an access right PR (dedicated to a read in a tamper resistant mode), and an encryption/decryption key Kd are buried, and a specified virtual region, if the legality of the signature can be verified. This description assumes that the encryption/decryption key Kd="AAAAAA" is buried in the GT license.
(5) As a result of executing the access authorization command, contents of the GT license is set in a line within the TRB, which is linked to the TLB of the sharing destination module. Consequently, data that the sharing destination module reads from the shared protection region is cached in a state of being properly decrypted with the key Kd.

As a result, in the example shown in Fig. 32, the access right "PR" to a physical page number "002" is set in the fourth line of the TLB, and the data key Kd="AAAAAA" is set in a Key field in the fourth line of the TRB, which corresponds to the line of the TLB. In this way, the sharing destination module can decrypt the protection data region (corresponding to the second line of the TLB) of the generation source module with the data key Kd="AAAAAA", and can read the region.

If mutual authentication is made with a different modules, the sharing destination module may encrypt a generated transmission message with a public key of the generation source module or a key of a symmetric key cryptosystem, which is encrypted with the public key, and pass the message to the generation source module in the procedure (2). As a result, this message cannot be decrypted by a module other than the generation source module.

Note that lines having IDs 2 and 7 within the TLB in Fig. 10 are shown by taking as an example the case where a protection region is shared.

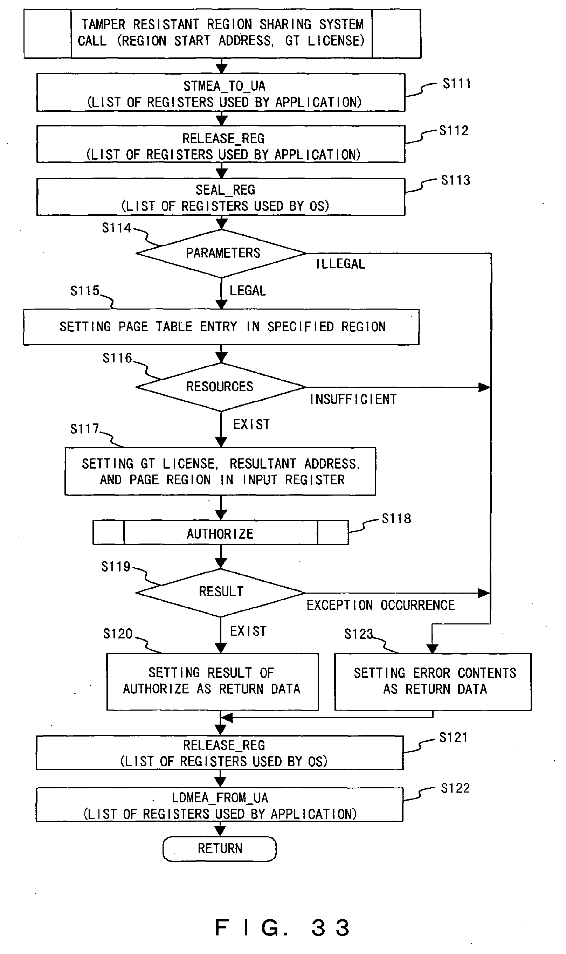

Procedures for a process performed when a tamper resistant region sharing system call is made are shown in Fig. 33. These procedures (S110 to S123) are similar to those (S90 to S103) shown in Fig. 28 except that the start address of a region is used as an input parameter instead of the size of the region at the time of a system call. Therefore, their descriptions are omitted.

A contents reproduction (Player) application may obtain data from the decoder DRM 40 with the above described local data sharing method, and may reproduce and edit the data. Editing of data and recording of its result must comply with an access condition specified in a GT license. Furthermore, the reproduction application must generate these processes as GT protection codes.

To force a reproduction time or a term limitation on the reproduction application, a secure timer is required. The secure timer may be constructed as an independent hardware TRM outside the GT 10. Or, if the GT 10 can include a crystal oscillator, etc., the secure timer may be constructed as tamper resistant software with the above described periodical interrupt interval setting command. In either case, a function for synchronizing with an external trusted secure timer must be comprised, since the secure timer can possibly stop due to some reason.

### <DRM software construction model>

A DRM software module construction model is described below. The decoder DRM 30, the media DRM 40, the encryption/decryption library within the PKI library 20, which is used by these DRMs, and other applications that must be implemented as a TRM are distributed and executed as codes protected by the GT 10. By implementing almost entire texts of these modules as encrypted texts, they are protected by the GT 10.

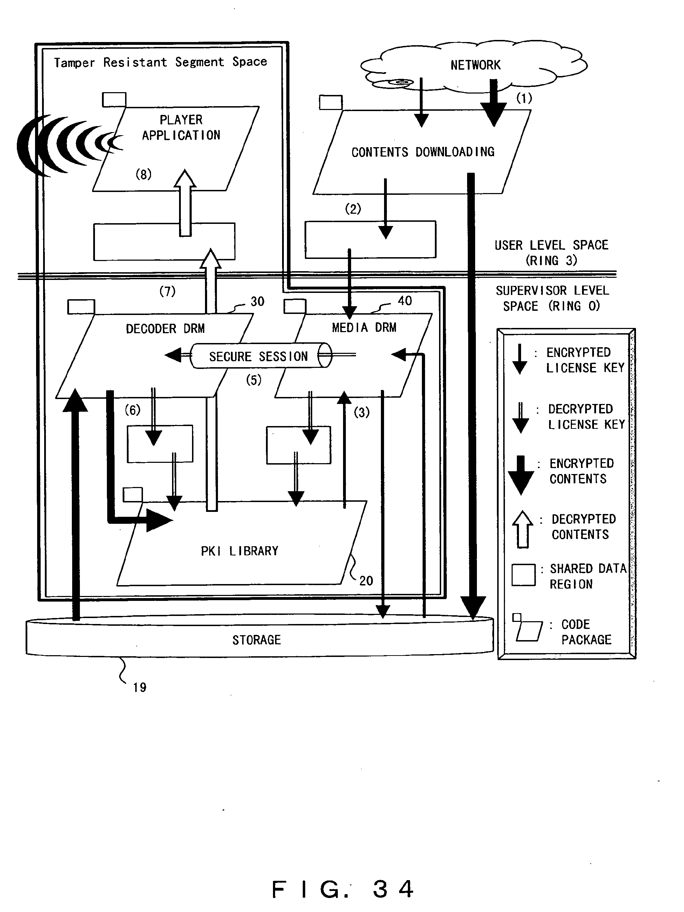

An example of the DRM software module construction model is shown in Fig. 34. In this model, it is assumed that the above described four modules are developed by different development makers, and encrypted with different code encryption keys (Kcs) . In Fig. 34, thin black arrows indicate an exchange of an encrypted license key, thin hollow arrows indicate an exchange of a decrypted license key, thick black arrows indicate an exchange of encrypted contents, and thick hollow arrows indicate an exchange of decrypted contents. Numerals enclosed by parentheses indicate a procedure number. Procedures for downloading, managing, and reproducing contents and its license key are described below with reference to Fig. 34.
(1) An encrypted license key and encrypted contents are recorded from a network such as the Internet, etc. to a recording medium via a downloader application.
(2) The license key is transferred to the media DRM 40 via the downloader in an encrypted state.
(3) The license key decrypted within the media DRM 40 is safely managed with a method to be described later, and recorded to the recording medium in an encrypted state. The license key is again encrypted with the PKI library 20 protected by the GT 10.
(4) If a user reproduction request is made, the media DRM 40 extracts the license key from the recording medium, and decrypts the license key.
(5) The media DRM 40 authenticates the decoder DRM 30, encrypts the license key with a session key shared with the decoder DRM 30, and transfers the encrypted license key to the decoder DRM 30. Sharing of this key, and the sharing of protection data in a procedure (7) are described earlier in the <safe sharing of a protection data region>.
(6) The decoder DRM 30 requests the PKI library 20 to perform a decryption process by using as parameters the encrypted contents extracted from the recording medium, and the license key obtained from the media DRM 40.
(7) The decrypted contents is passed to a reproduction application such as Player, etc. via a shared protection data region.
(8) The reproduction application reproduces the contents.

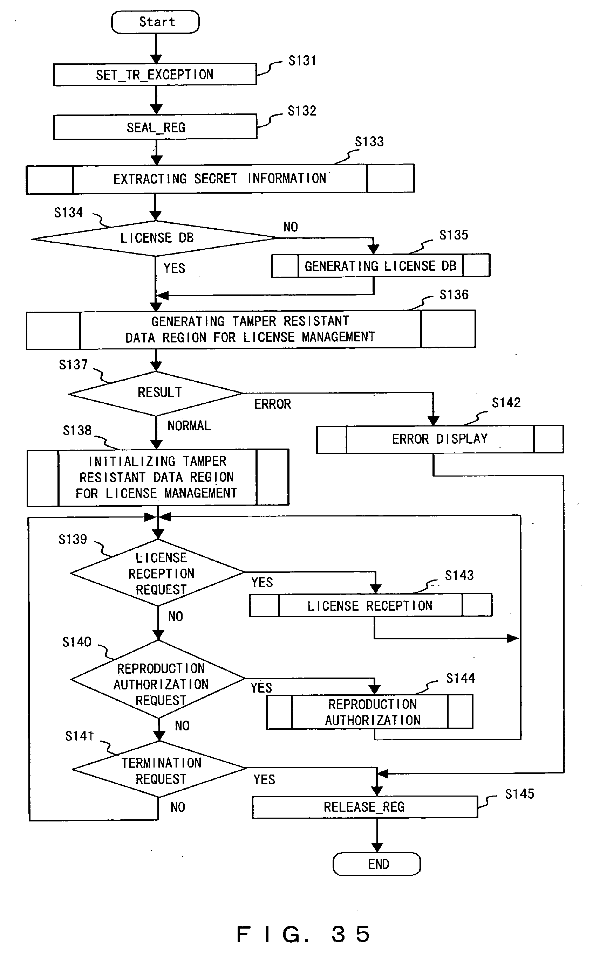

The above described procedures are described in further detail with reference to Figs. 35 to 40.

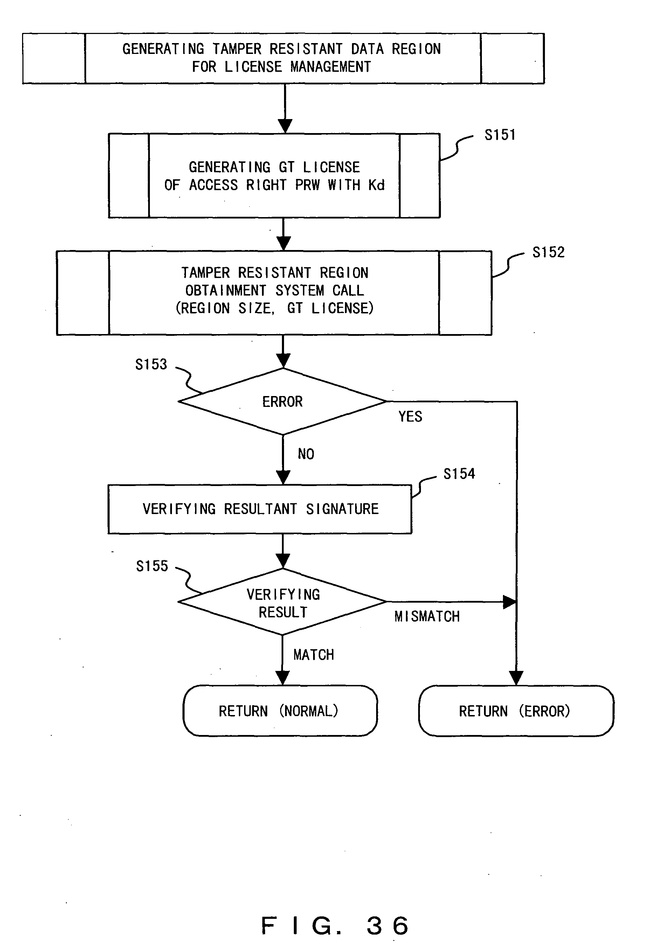

A process performed by the media DRM is described first with reference to Figs. 35 and 36.

Firstly, the media DRM 40 executes a set tamper resistant rights (SET_TR_RIGHTS) command and a seal register (SEAL_REG) command (S131 and S132). Then, the media DRM 40 extracts secret information buried in the media DRM 40 itself (S133). The media DRM 40 then determines whether or not a GT license corresponding to the extracted secret information is stored in a license DB to which licenses are recorded (S134). If the GT license is already stored in the license DB ("YES" in S134), the process proceeds to S136. If the GT license is not stored yet ("NO" in S134), the media DRM 40 records the GT license to the license DB (S135). The process then proceeds to S136.

In S136, the media DRM 40 generates a tamper resistant data region- for license management. The process in S136 will be described in detail later with reference to Fig. 36.

If the tamper resistant data region for license management can be generated ("NORMAL" in S137), the process proceeds to S138. If the tamper resistant data region for license management cannot be generated ("ERROR" in S137), the process proceeds to S142.

In S138, the media DRM 40 initializes the tamper resistant data region for license management (S138), and waits for a license reception request, a reproduction authorization request, or a termination request. If the license reception request is received ("YES" in S139), the media DRM 40 receives the license (S143). The process then goes back to S139. If the reproduction authorization request is received ("YES" in S140), the media DRM 40 makes reproduction authorization (S144). The process then goes back to S139. If the termination request is received ("YES" in S141), the media DRM 40 executes a release register (RELEASE_REG) command, and terminates the process.

If the tamper resistant data region for license management is unsuccessfully generated ("ERROR" in S137), the media DRM 40 makes an output device (not shown) display an error (S142). The process then proceeds to S145.

S136 of Fig. 35 is described next with reference to Fig. 36. When a tamper resistant data region for license management is generated, the media DRM 40 first generates a GT license of an access right PRW by using a code decryption key Kd (S151). Then, the media DRM 40 makes a tamper resistant region obtainment system call (S152). The process in S152 is already described.

If an error does not occur when a tamper resistant region is obtained ("NO" in S153), a signature generated on the way is verified (5154) . If the signature is legal ("MATCH" in S155), the process restores to the main flow properly. If an error occurs when the tamper resistant region is obtained ("YES" in S153), or if the signature is illegal ("MISMATCH" in S155), the error is returned to the main flow.

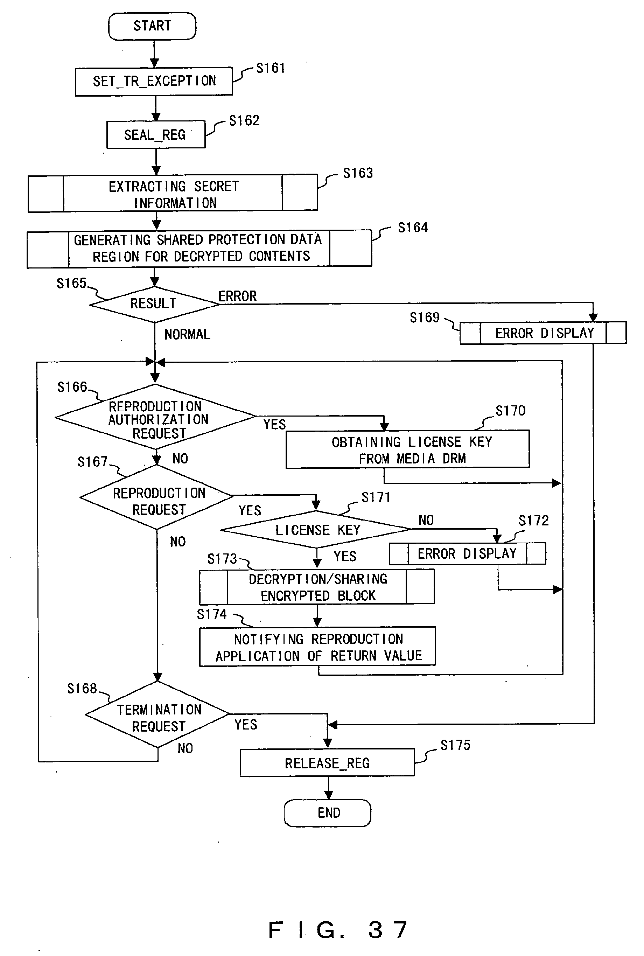

A process performed by the decoder DRM is described next with reference to Figs. 37 to 39. Firstly, the decoder DRM 30 executes the set tamper resistant rights (SET_TR_RIGHTS) command and the seal register (SEAL_REG) command (S161 and S162) . Then, the media DRM 40 extracts secret information buried in the decoder DRM 30 itself (S163).

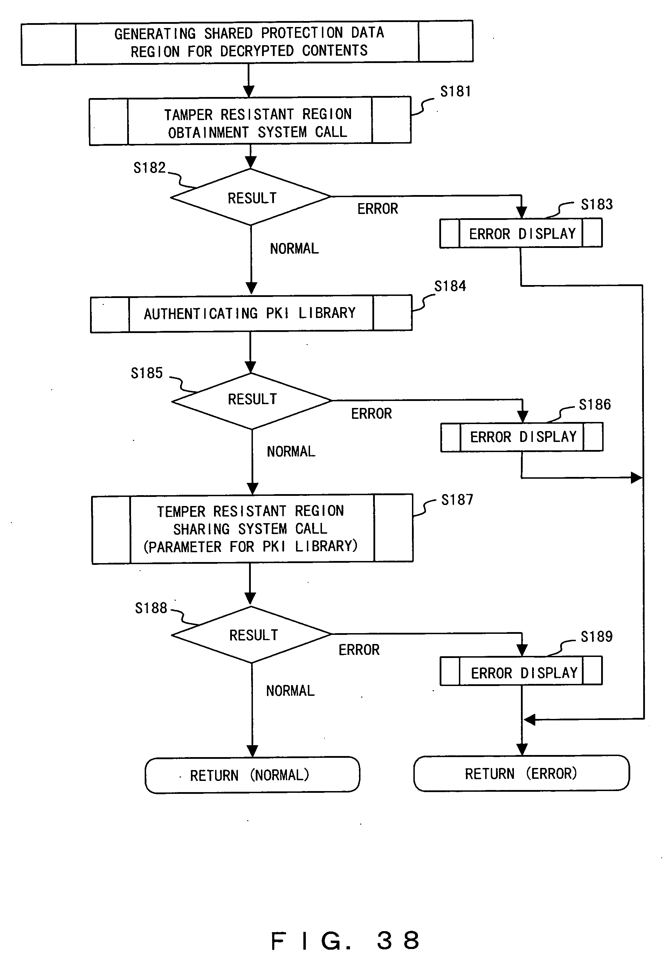

Furthermore, the decoder DRM 30 generates a shared protection data region for decrypted contents (S164). S164 will be described in detail later with reference to Fig. 38.

If the process in S164 is properly performed ("NORMAL" in S165), the decoder DRM 30 waits for the reception of any of a reproduction authorization request, a reproduction request, and a termination request. If the process in S164 is not properly performed ("ERROR" in S165), the decoder DRM 30 makes the output device (not shown) display an error (S169). The process then proceeds to S175.

If the reproduction authorization request is received ("YES" in S166), the decoder DRM 30 obtains a license key of the contents from the media DRM 40 (S170). The process then goes back to S166.

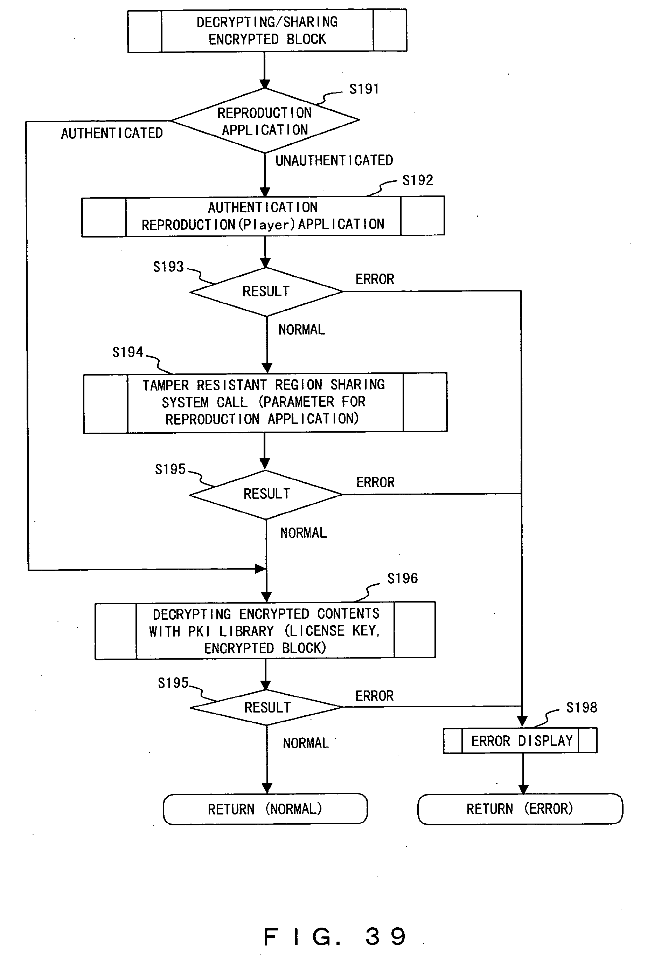

If the reproduction request is received ("YES" in S167), the decoder DRM 30 determines whether or not the license key of the contents is already obtained (S171). If the contents key is already obtained ("YES" in S171), the decoder DRM 30 decrypts an encrypted block, and performs a process for sharing this block (S173) . S173 will be described in detail later with reference to Fig. 39. Then, the decoder DRM 30 notifies a reproduction application of a return value (S174). The process then goes back to S166. If the license key is not obtained yet in the determination made in S171 ("NO" in S171), the decoder DRM 30 makes the output device (not shown) display an error. The process then proceeds to S175.

If the termination request is received ("YES" in S168), the process proceeds to S175, in which the decoder DRM 30 executes a release register (RELEASE_REG) command, and terminates the process.

S164 of Fig. 37 is described in detail with reference to Fig. 38. To generate a shared protection data region for decrypted contents, the decoder DRM 30 first makes a tamper resistant region obtainment system call so as to obtain a tamper resistant region for recording contents decoded by the decoder DRM 30 (S181) . This process is already described. If the tamper resistant region can be generated ("NORMAL" in S182), the process proceeds to S184. If the tamper resistant region cannot be generated ("ERROR" in S182), the decoder DRM 30 makes the output device (not shown) display an error (S183). The process then restores to the main flow.

In S184, the decoder DRM 30 makes the GT 10 authenticate the PKI library used to decrypt encrypted contents. These authentication procedures are similar to those described in the <safe sharing of a protection data region> with reference to Fig. 32.

If the authentication in S184 is properly made ("NORMAL" in S185), the process proceeds to S187. If the authentication in S184 is not properly made ("ERROR" in S185), the decoder DRM 30 makes the output device (not shown) display an error (S186). The process then restores to the main flow.

In S187, the decoder DRM 30 makes a tamper resistant region sharing system call. If the process in S184 is properly performed ("NORMAL" in S188), the process restores to the main flow. In this way, the decoder DRM 30 and the PKI library can share the protection data written to the tamper resistant region. If the process in S184 is not properly performed ("ERROR" in S188), the decoder DRM 30 makes the output device (not shown) display an error. The process then restores to the main flow.

S173 of Fig. 37 is described next in further detail with reference to Fig. 39. Firstly, the decoder DRM 30 determines whether or not a reproduction application is already authenticated (S191). If the reproduction application is already authenticated ("AUTHENTICATED" in S191), the process proceeds to S196. If the reproduction application is not authenticated yet ("UNAUTHENTICATED" in S191), S192 to S195 are executed. Since these operations are similar to S184 to S188 of Fig. 38, their descriptions are omitted. If an error occurs in the operations in S192 to S195 ("ERROR" in S193 and S195), the decoder DRM 30 makes the output device (not shown) display an error. The process then restores to the main flow. If S192 to S195 are properly executed, the reproduction application and the decoder DRM 30 share a tamper resistant region, and the reproduction application can read the contents that the decoder DRM 30 writes to the tamper resistant region.

In S196, the decoder DRM 30 decrypts the encrypted contents with the PKI library 20. The decrypted contents is written to the shared tamper resistant region. If the decryption is properly performed ("NORMAL" in S197), the process restores to the main flow. If the decryption is not properly performed ("ERROR" in S197), the process proceeds to S198.

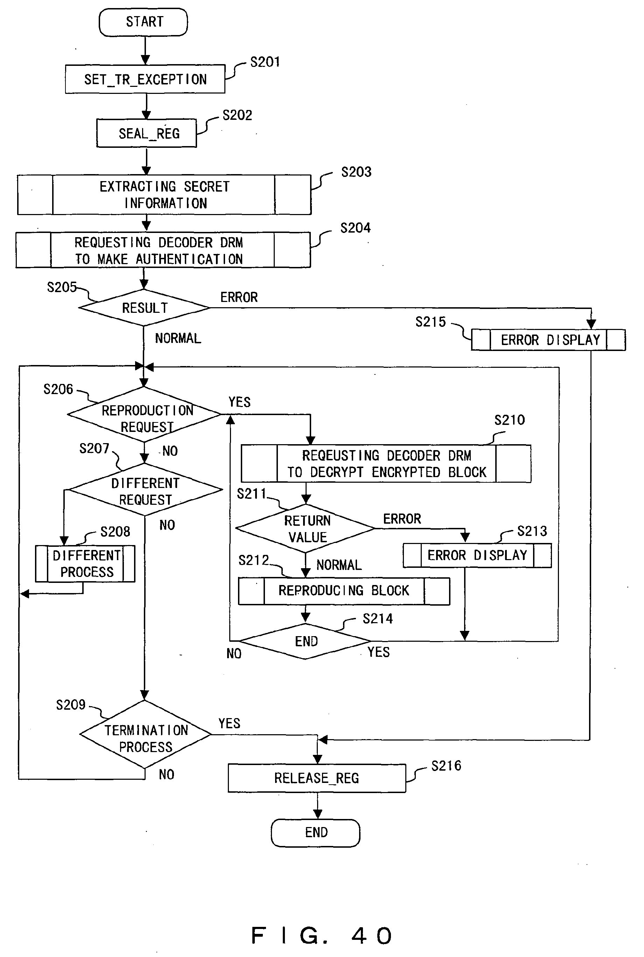

A process performed by the reproduction application is described next with reference to Fig. 40.

Firstly, the reproduction application executes the set tamper resistant rights (SET_TR_RIGHTS) command and the seal register (SEAL_REG) command (S201 and S202). Next, the reproduction application extracts secret information buried in the reproduction application itself (S203). Then, the reproduction application requests the decoder DRM 30 to make authentication (5204) . The above described S192 is performed based on this authentication request.

If the authentication is properly made ("NORMAL" in S205, the reproduction application waits for the reception of a reproduction request, a different request, or a termination request. If the authentication is not properly made ("ERROR" in S205), the reproduction application makes the output device (not shown) output an error display (S214). The process then proceeds to S216.

If the reproduction request is received ("YES" in S206), the reproduction application requests the decoder DRM 30 to decrypt an encrypted block (S210). If a return value from the decoder DRM 30 is legal ("NORMAL" in S211), the reproduction application reproduces this block (S212) . S210 to S212 are repeated until reproduction of the contents is terminated ("NO" in S214). When the reproduction of the contents is terminated ("YES" in S214), the process goes back to S206.

If a request other than the reproduction request is received ("YES" in S207), the reproduction application executes this request (S208). The process then goes back to S206. If the termination request is received ("YES" in S209), the reproduction application makes the GT 10 execute a release register (RELEASE_REG) command (S216), and terminates the process.

### <secret information management>

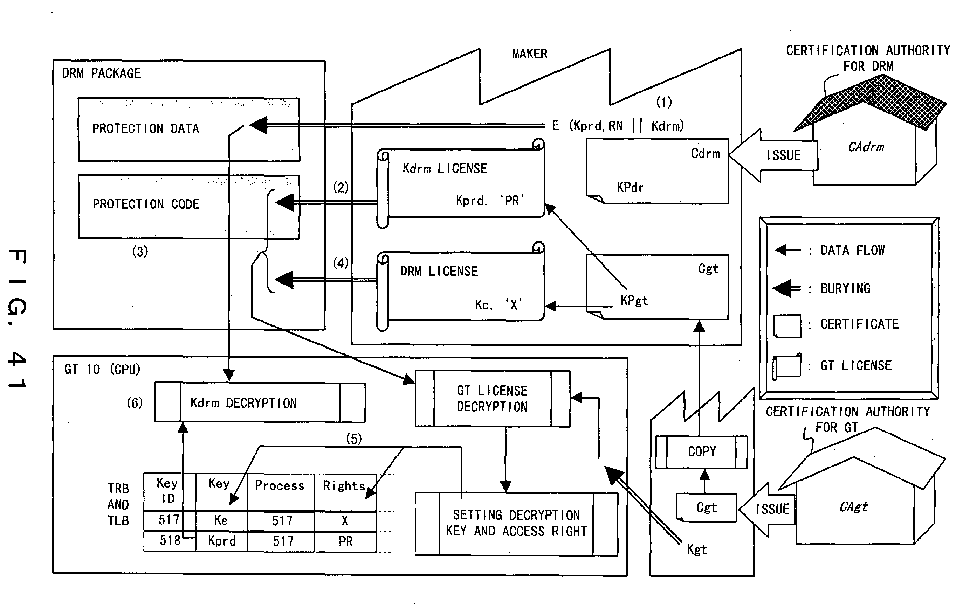

A method for holding/managing secret information generated by a DRM code package developer, such as a private key Kdrm corresponding to a public key of a public key cryptosystem, to which a certificate is issued, or the like is shown in Fig. 41. In this figure, thin arrows indicate a data flow, whereas thick hollow arrows indicate the burying of a key, etc. Furthermore, numerals enclosed by parentheses indicate a process order, and corresponds to a procedure number in the following description.

Especially, for a private key corresponding to a public key certificate, this method must be used. This is because only a set of a particular GT and a particular DRM must be suspended, for example, when a CRL is specified. Rough procedures for this method are as follows.
(1) A class/individual private key (Kdrm, etc.) generated by a developer is encrypted with a key Kprd of a symmetric key cryptosystem, which is generated by the developer, and buried in a package.
(2) Kprd and an access condition PR, which are put into a GT license, are buried in a protection code readable only in a tamper resistant mode.
(3) The entire code is encrypted with Kc, and put into a protection package as DRM.
(4) Kc is encrypted with KPgt, and buried in the DRM package as a DRM license.
(5) This GT license is entered from VHTRM into the GT 10 when the DRM is executed, and Kprd is read within the GT 10.
(6) Kdrm is decrypted with Kprd, and used.

In this way, a process other than a process specified by a developer in a GT cannot read the private key Kdrm. If a particular GT is broken, only a public key certificate of a public key cryptosystem of the broken GT may be invalidated. Accordingly, a certificate for a different GT (Cdrm2) can be legally used even if it is a certificate for the same DRM.

This method is also available as a method managing not only a private key of DRM, but also as a private key of another protection package.

### <UDAC license management>

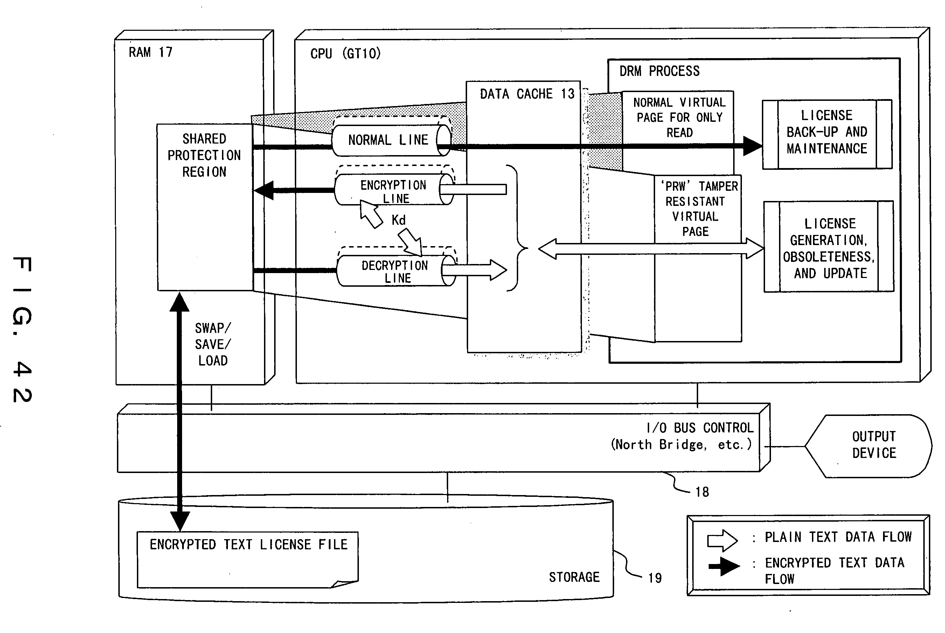

A method managing protected contents and general information for a UDAC license may inherit a UDAC-MB or UDAC-LA method. A memory access method for license management is shown in Fig. 42.

As shown in this figure, secret information of a license, such as a contents decryption key, etc. is recorded to a protection data region within the RAM 17, and managed. Information within the protection data region may be stored in a storage or a flash memory as a file. Secret information is encrypted with a data encryption key Kd when being recorded, so that the secret information of a license can be used in a safely protected state even when the CPU (GT 10) is restarted. The data encryption key Kd may be held in a normal external storage device as a line of the encryption key table in a state of being encrypted with a TRB encryption key Ktrb.

To enhance the tamper resistant abilities of Ktrb and Ktlb, their contents must be refreshed at predetermined time intervals. Prior to refresh, entire license information must be encrypted with a temporary key generated by a tamper resistant process, and must be backed up. After Ktrb and Ktlb are changed by refresh, the page table and the encryption key table are reconstructed. The entire license information may be decrypted, and restored in a reconstructed tamper resistant region.

The above described private key management can make CRL management as a premise. Additionally, a CRL control function for each license may be comprised within the above described license management function. Certificates of one DRM package are issued by the number of certificates possessed by the GT 10 in principle. If a DRM package itself is invalidated, all of its certificates are invalidated. Or, if a particular GT is invalidated, only a DRM package certificate issued for that GT is invalidated.

If program contents is superdistributed and a UDAC license is handled, a GT license may be used unchanged as a simplified superdistribution function without using DRM software. Or, a GT license may be processed as a UDAC-MB or PI license by using DRM software constructed in the GT. If DRM software is used, only basic access rights (PR, X, PRW, PWX) in a UDAC-MB/PI license are put into a GT license within the DRM, and forced with the access authorization (AUTHORIZE) command of the CPU. For other access conditions, a forcible process is performed within the DRM protected by the GT.

Naturally, not only UDAC, but also DRM of each company, which uses today's software TRM, is protected by a GT, so that tamper resistance equivalent to a hardware TRM level can be possessed.

### <modification example>

In the above description, a GT license does not move. However, a license move function between DRMs can be implemented. License move/authorization between two DRM processes executed in the same GT may be implemented via a shared tamper resistant region authenticated by the <safe sharing of protection data>, or implemented by using a protocol such as UDAC-MB, UDAC-PI, etc. If the license move function is arranged, secret information for license management must be stored in a UPL (Unreplicatable Private Locker) to be described below within the TRM so as to prevent an illegal copy made by a retransmission attack. If the UPL is desired to be implemented only with a GT, this can be implmeneted by storing secret information for license management in a tamper resistant region where both of TRB.uo (the value of the uo field within the TRB) and TRB.cl (the value of the cl field within the TRB) are set to ON. However, if a license that is managed with a UPL must be held even after the power of the GT is disconnected, at least a UPL region in which private information for license management is stored must be implemented with a nonvolatile memory element as a permanent UPL (semi-permanent UPL). A method allocating part of a tamper resistant space to a permanent UPL is identified here.

To realize a UPL which is implemented as a TRM outside the GT, a TRM authentication protocol such as UDAC-MB, etc. must be set within the UPL. As a permanent UPL that is implemented outside, a secure MMC comprising UDAC, or the like is available.

The second preferred embodiment is described next. In the first preferred embodiment, a code block and a data block are a plain text or an encrypted text (ebim=0 or 1). According to the second preferred embodiment, a block may be a combination of encrypted and plain texts, and other information.

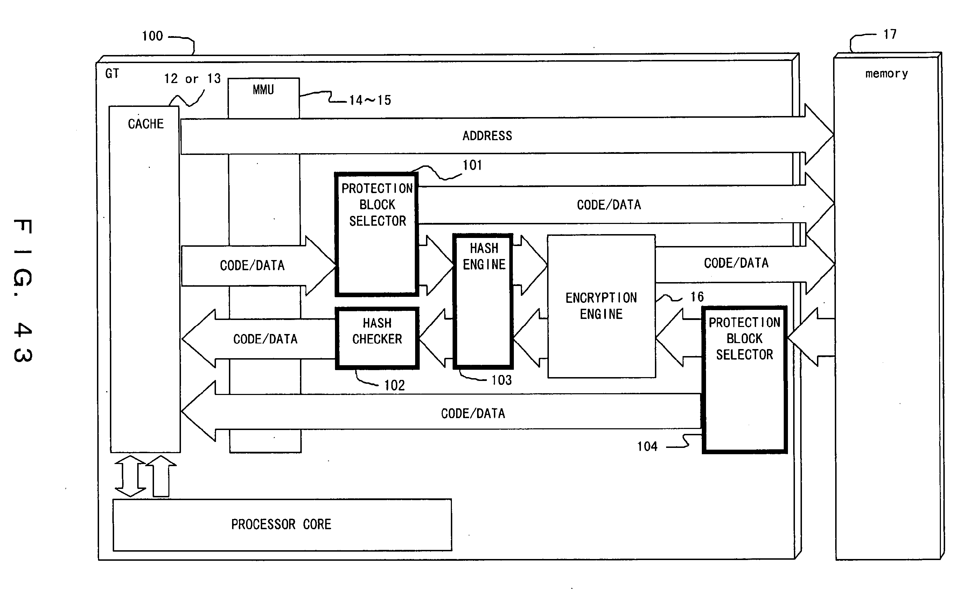

Configuration of a CPU which implements a GT according to the second preferred embodiment is described below with reference to Fig. 43.

In this figure, portions similar to those in the first preferred embodiment shown in Fig. 3 are omitted. As shown in Fig. 43, a GT 100 according to the second preferred embodiment further comprises protection block selectors 101 and 104, a hash checker 102, and a hash engine 103 in addition to the configuration according to the first preferred embodiment.

The protection block selector 101 determines whether or not a code block or a data block output from a cache 11 or 12 is a block to be protected based on the value of ebim. If the output block is a block to be protected, the protection block selector 101 outputs the block to the hash engine 103. The hash engine 103 generates a hash of the block. After the hash is generated, an encryption engine 16 encrypts the block and outputs the encrypted block to a RAM 17. Or, if the block output from the cache 11 or 12 is not a block to be protected, the protection block selector 101 outputs the block to the RAM 17.

The protection block selector 104 determines whether a code block or a data block output from the RAM 17 is either an encrypted block or a plain text block. If the output block is an encrypted block, namely, a protection block, the protection block selector 104 outputs the protection block to the encryption engine 16. The encryption engine 16 decrypts the protection block, and outputs the decrypted block to the hash engine 103. The hash engine 103 generates a hash of the block, and outputs the block to the hash checker 102. The hash checker 102 verifies the generated hash, and outputs the block to the cache 12 or 13 if it can verify that the hash is legal. Or, if the block output from the RAM 17 is not a protection block, the protection block selector 104 outputs the block to the cache 12 or 13.

In Fig. 43, the protection block selectors 101 and 104 are comprised. However, the protection block selectors 101 and 104 may be configured as one protection block selector. In this way, circuitry can be downsized.

Fields within a TLB according to the second preferred embodiment are described next. The TLB shown in Fig. 5 includes the ebim field. According to the first preferred embodiment, the value of the ebim field is 0 or 1. According to the second preferred embodiment, however, 2 to 7 are further added as values that the ebim field can take. The structure of a block according to the values of ebim is described below.
a) If ebim=0, only a plain text (dummy license. Similar to the first preferred embodiment)
b) If ebim=1, only an encrypted text (similar to the first preferred embodiment)
c) If ebim=2, a protection block head identification code is used.
d) If ebim=3, a protection block head identification code is used, and only an encrypted block.
e) If ebim=4, only a plain text block to which a signature is affixed. A signature must be verified at the time of loading into a cache.
f) If ebim=5, only a hashed encrypted protection block. A hash must be verified after decryption.
g) If ebim=6, a protection block head identification code is used. A signature/hash must be verified.
h) If ebim=7, a protection block head identification code is used, and only an encrypted block. A hash must be verified.

Namely, the bits of this field have the following meanings.
bit 0: An encryption flag. If this flag is ON, it indicates that a block is encrypted.
bit 1: A protection block head identification code flag. If this flag is ON, it indicates that a protection block head identification code is added to a block. If this flag is OFF, the GT 10 does not need to recognize a protection block head identification code.
bit 2: A hash addition/verification flag. If this flag is ON, the GT 10 adds a hash to a data block when outputting the data to its outside. Additionally, if a code or data is captured in the GT 10, a hash value added to a block is verified. If this flag is OFF, there is no need to add a hash to a block, or to verify a hash.

These ebim values are set based on the value of the ebim field within an authorized code key ACgt included in a GT license.

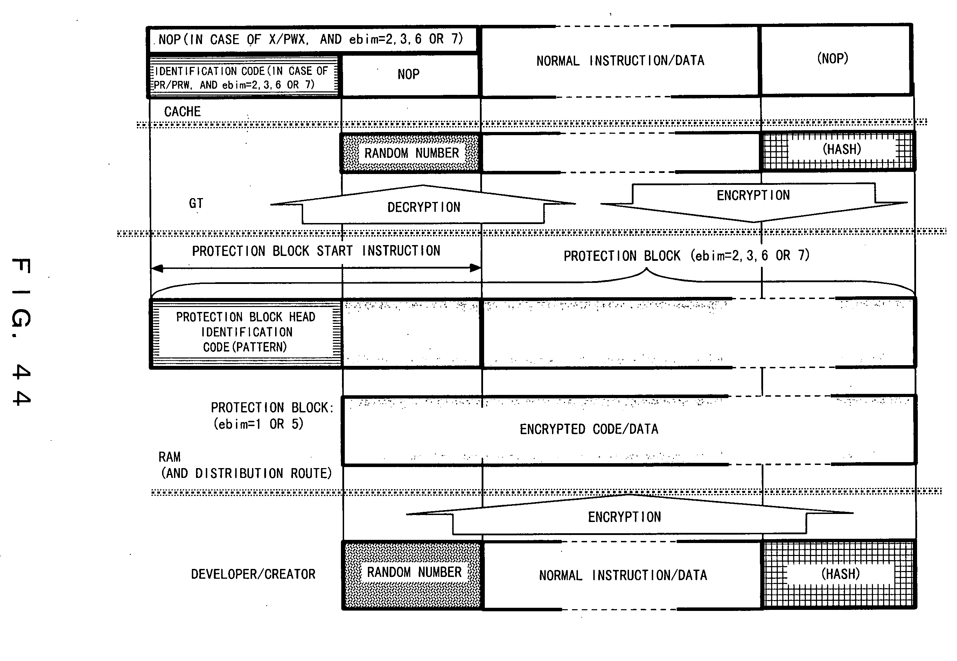

The structure of a block in the second preferred embodiment is described next with reference to Fig. 44. With the GT 10, the structure of a protection code block and that of a protection data block may be made identical. As a result, the use ratio of circuitry resources within a CPU can be improved. As shown in Fig. 44, a block generated by a developer or a creator includes a random number, a normal instruction, data, etc. The block further includes a hash if necessary. If ebim is 1 or 5, this block is encrypted, so that a protection block is generated. If ebim is 2, 3, 6, or 7, a protection block is generated by adding a protection block head identification code to the start of the block in a plain text after the block is encrypted. The protection block head identification code includes an encryption flag which indicates whether or not a block is a protection block, and a hash flag which indicates whether or not a hash is added to the end of a block. Portions of a protection block head identification code and an encrypted random number configure a protected block start command.

A protection block in the RAM 17 is decrypted within the GT 10, so that a normal instruction or data in a plain text is obtained. If ebim is 1 or 5, a random number portion or a hash portion is loaded into the instruction cache 12 or the data cache 13 after being converted into a NOP (No OPeration) instruction so as to leave an address of a code or data unchanged. If ebim is 1, its process is the same as that in the first preferred embodiment. If ebim is 2, 3, 6, or 7, a protection block head identification code as well as a random number portion and a hash portion is loaded into the instruction cache 12 or the data cache 13 after being converted into NOP (No OPeration).

Also the structure of a protection block when working data, etc. in the processor core 11 is encrypted is similar to that of a protection block when a block generated by a developer or a creator is encrypted.

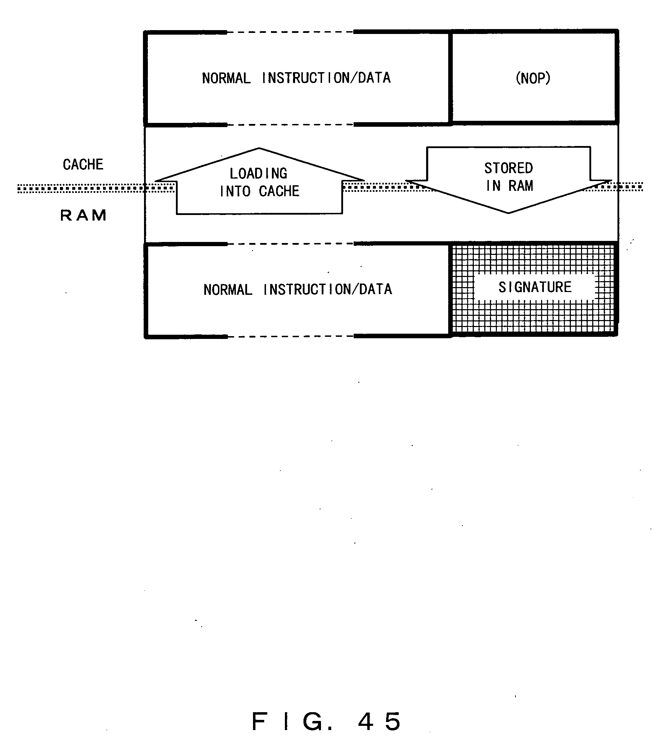

The structure of a block in the case where ebim is 4 is shown in Fig. 45. As shown in this figure, a block in the RAM has a structure where a signature is affixed to a plain text code or data, if ebim is 4. When the block is loaded into the instruction cache 12 or the data cache 13, the signature is converted into a NOP instruction. The signature may be a value obtained by encrypting a hash (SHA-1, etc.) of the code or the data with an encryption key Kc or Kd. Note that Kc and Kd are specified by a GT license, and set in the encryption key field (TRB.key) of the TRB.

Processes performed by the GT according to the second preferred embodiment are described next. Fundamental operations of the second preferred embodiment are similar to those of the first preferred embodiment. Therefore, processes performed by a configuration further added in the second preferred embodiment are mainly referred to in the following description.

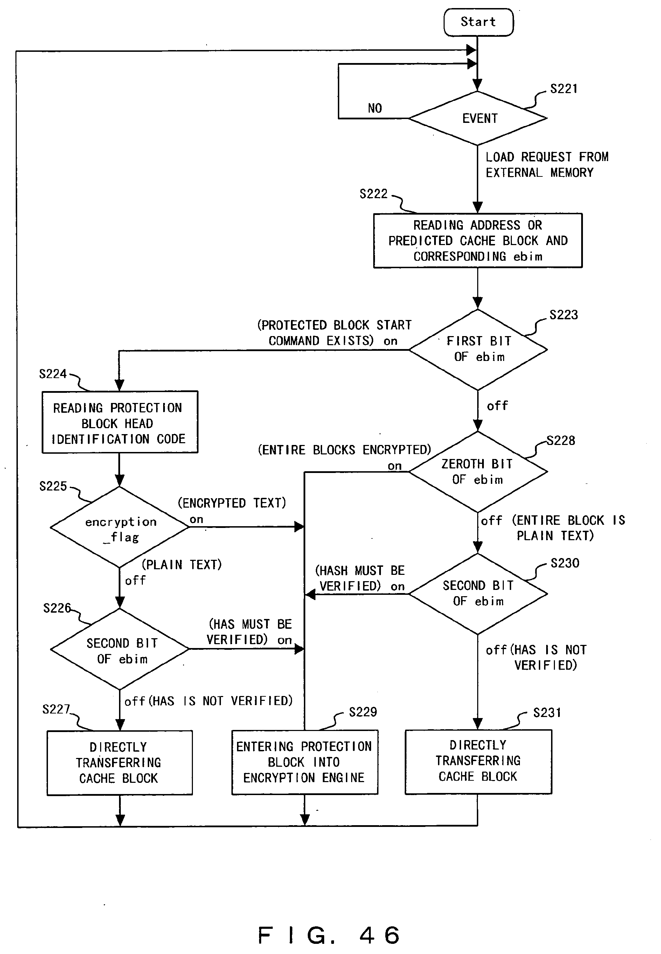

A process performed by the protection block selector 104 is first described with reference to Fig. 46.

Firstly, the protection block selector 104 waits for the issuance of a block load request from the RAM 17 (external memory) (S221) . When the block load request is issued from the RAM 17 ("load request" in S221), the protection block selector 104 reads the value of the ebim field of a line corresponding to an address of a predicted block from the TLB (S222).

The protection block selector 104 determines whether or not the first bit of ebim is ON (S223) . The first bit of ebim indicates whether or not a protected block start command is added to a block. If the first bit of ebim is ON ("ON" in S223), the protected block start command is added to the block. The protection block selector 104 reads the protected block start command added to the start of the block (S224), and determines whether or not an encryption flag is ON in the protected block start command (S225) . If the encryption flag is ON ("ON" in S225), the process proceeds to S229. In S229, the protection block selector 104 outputs the block to the encryption engine 16. The process then goes back to S221. In this case, the block is transferred to the cache 12 or 13 after being decrypted.

If the encryption flag is OFF ("OFF" in S225), the protection block selector 104 further determines whether or not the second bit of ebim is ON (S226). The second bit of ebim indicates whether or not a hash must be verified when the block is transferred. If the second bit of ebim is ON ("ON" in S226), the process proceeds to S209. If the second bit of ebim is OFF ("OFF" in S226), the protection block selector 104 transfers the block to the cache 12 or 13 (S227).

If the first bit of ebim is OFF in the determination made in S223 ("OFF" in S223), the protection block selector 104 further determines whether or not the zeroth bit of ebim is ON (S228). The zeroth bit of ebim indicates that the block must be decrypted. If the zeroth bit of ebim is ON ("ON" in S228), the process proceeds to S229. If the zeroth bit of ebim is OFF ("OFF" in S228), the protection block selector 104 further determines whether or not the second bit of ebim is ON (5230) . If the second bit of ebim is ON ("ON" in S230), the process proceeds to S229. If the second bit of ebim is OFF ("OFF" in S230), the protection block selector 104 transfers the block to the cache 12 or 13 (S231). The process then goes back to S221.

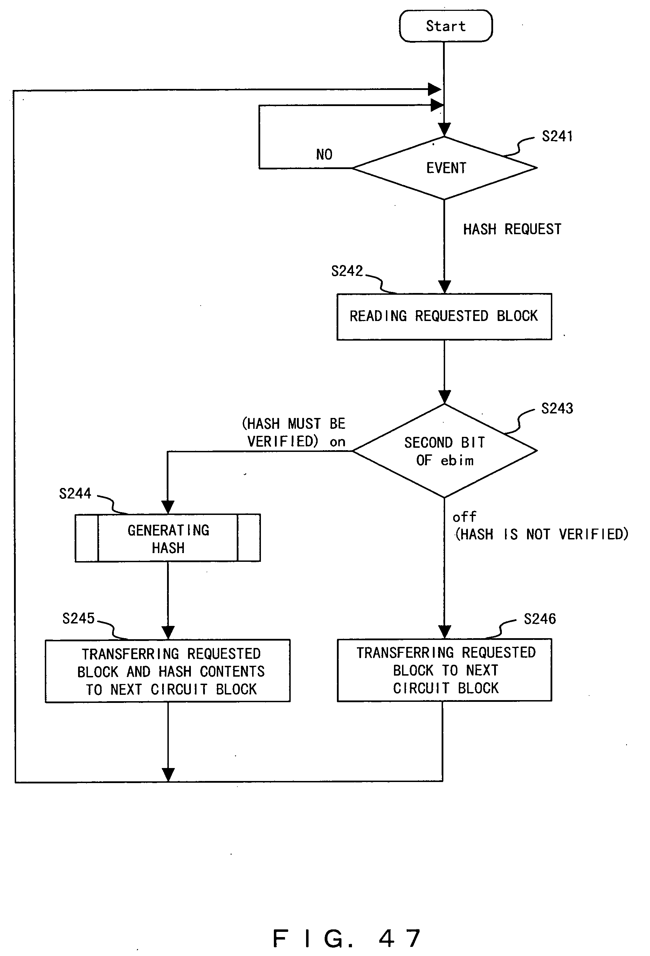

A process performed by the hash engine 103 is described next with reference to Fig. 47.

Firstly, the hash engine 103 waits for an occurrence of a hash request event. If the event occurs, the hash engine 103 reads a block requested to be hashed (S242). Furthermore, the hash engine 103 reads ebim corresponding to the address of the block, and determines whether or not the second bit of ebim is ON (5243) . If the second bit of ebim is ON ("ON" in S243), the hash engine 103 generates a hash of the block (S244), and transfers the block and the contents of the generated hash to the next circuit block (S245) . The process then goes back to S241. Or, if the second bit of ebim is OFF ("OFF" in S243), the hash engine 103 transfers the block to the next circuit block without generating a hash (S246). The process then goes back to S241.

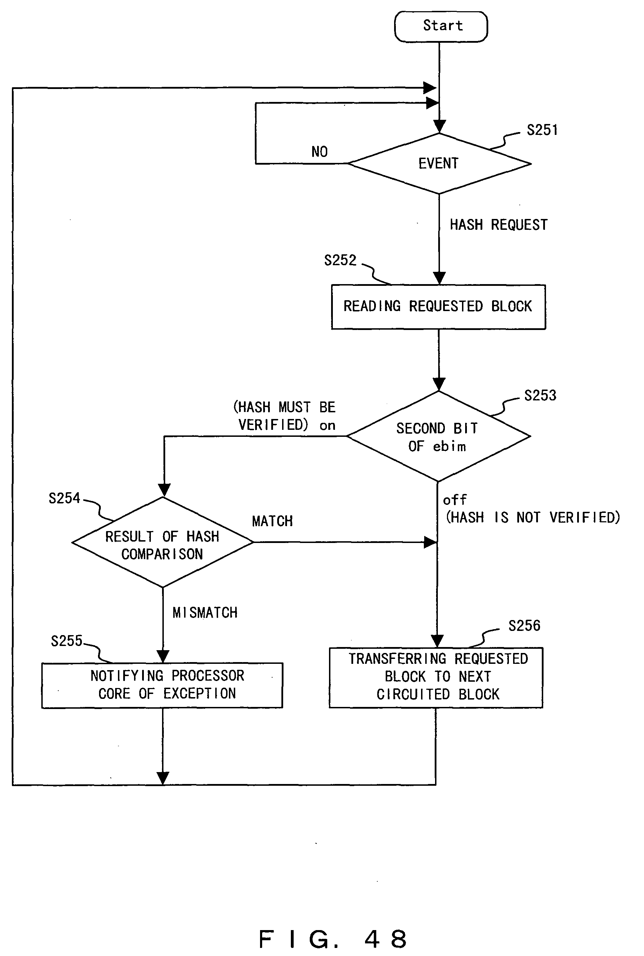

A process performed by the hash checker 102 is described next with reference to Fig. 48.

Firstly, the hash checker 102 waits for an occurrence of a hash request event (S251) . If the event occurs, the hash checker 102 reads a requested block (S252). Then, the hash checker 102 reads ebim corresponding to the address of the block, and determines whether or not the second bit of ebim is ON (S253). If the second bit of ebim is ON ("ON" in S253), the hash checker 102 makes a comparison between the hash generated by the hash engine 103 and a hash added to the block (S254) . If the two hashes mismatch as a result of the comparison ("MISMATCH" in S254), the hash checker 102 notifies the processor core 11 that a hash mismatch exception occurs (S255) . The process then goes back to S251. If the two hashes match ("MATCH" in S254), the hash checker 102 transfers the block to the next circuit block (S256). The process then goes back to S231.

A modification example of the second preferred embodiment is described next. In the second preferred embodiment, the protection block selectors select a block based on ebim. Methods other than this method are exemplified below.
1. A method burying an encrypted block bitmap in a header of an executable file. The protection block. selector first reads this bitmap, and determines whether a block is output either to a normal line or to a decryption line.
2. The start code is implemented as a plain text. Next, the number of plain text blocks, and the number of protection code blocks succeeding the plain text blocks are specified to be repeated in the start code, and the GT 100 first executes this code (instruction) . This code can be also changed on the way. With this method, the function of the protection code block selector can be reduced. If a protection code can be selected only with a low-order bit of an address, the function of the selector can be further reduced.

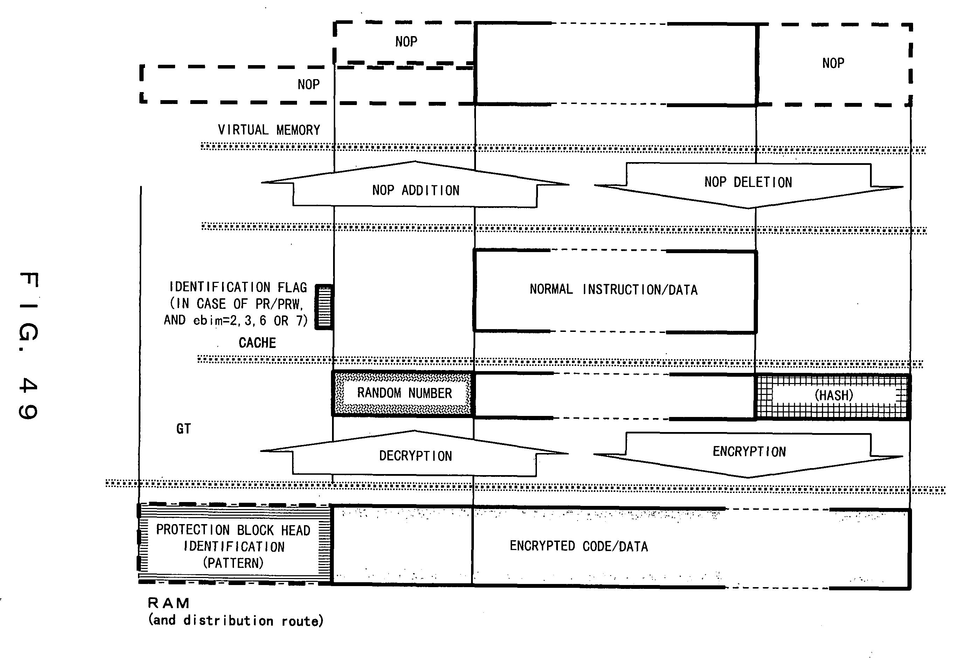

The third preferred embodiment is described next. According to the first and the second preferred embodiments, when a protection code or protection data enters the cache, NOP obtained by converting a random number exists for each cache line length. As a result, resources within the cache are used wastefully. The third preferred embodiment relates to a technique for overcoming this problem. According to the third preferred embodiment, cache resources can be effectively used with the following methods 1 to 3.
method 1) A length obtained by adding a virtual region length to a product of a random number length and the number of blocks is defined as a physical region length (virtual region length + random number length x number of blocks = physical region length). A portion overflowing the size of a virtual page is possessed in the RAM 17, so that the overflowing portion, namely, NOP obtained by converting a random number is not recorded to the cache.
method 2) A region having a length equal to the product of a random number length and the number of blocks is set as a physical region dedicated to NOP. method 3) NOP is not recorded to the cache. A NOP process implemented with this method is shown in Fig. 49. As shown in this figure, a protection code block or a protection data block in the RAM 17 is encrypted. The protection code block or the protection data block includes a protection block head identification code depending on a case. If the protection code block or the protection data block is decrypted within the GT 10, a block including a normal instruction (or normal data), a random number, and a hash is obtained. The normal instruction or the normal data among them is recorded to the cache, and data of a virtual address to which NOP is to be recorded is not recorded. If the code accesses the virtual address of the NOP, the NOP is returned to the code. Note that NOP stored in a virtual memory may be made readable or unreadable from the OS, etc.

The fourth preferred embodiment is described next. The fourth preferred embodiment relates to the case where a protection process is made to run in a CPU comprising two or more GTs 10 described above, namely, a multi-CPU.

If a protection process is made to run in the multi-CPU, the following cases must be supported.
1. The case where a protection process having only one code decryption key Kc executes a plurality of threads in multiple CPUs in parallel.
2. The case where automatic synchronization of cache contents such as a protection code, protection data, etc. with a snoop function is supported.

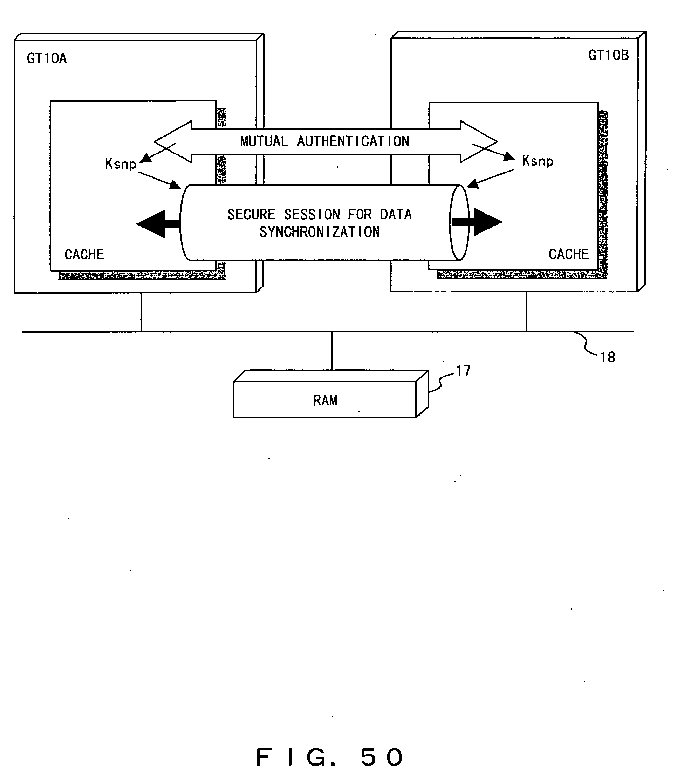

Configuration of a multi-CPU having GTs 10A and 10B is shown in Fig. 50. As shown in this figure, the GTs 10A and 10B, and the RAM 17 are interconnected via a bus. The GTs 10A and 10B respectively comprise a cache. If the GTs 10A and 10B execute a plurality of threads in parallel, they obtain a session key Ksnp by making mutual authentication such as full authentication, etc. of DCTP (Digital Transmission Content Protection) prior to the execution. When the GTs 10A and 10B exchange secret information, a protection code, and protection data, they use the session key Ksnp. In this way, the GTs 10A and 10B can safely exchange Ktrb, Kc, Kd, etc. The GTs 10A and 10B encrypt the data within the cache with the session key Ksnp, and mutually make a synchronous transfer, so that the cache contents can be synchronized.

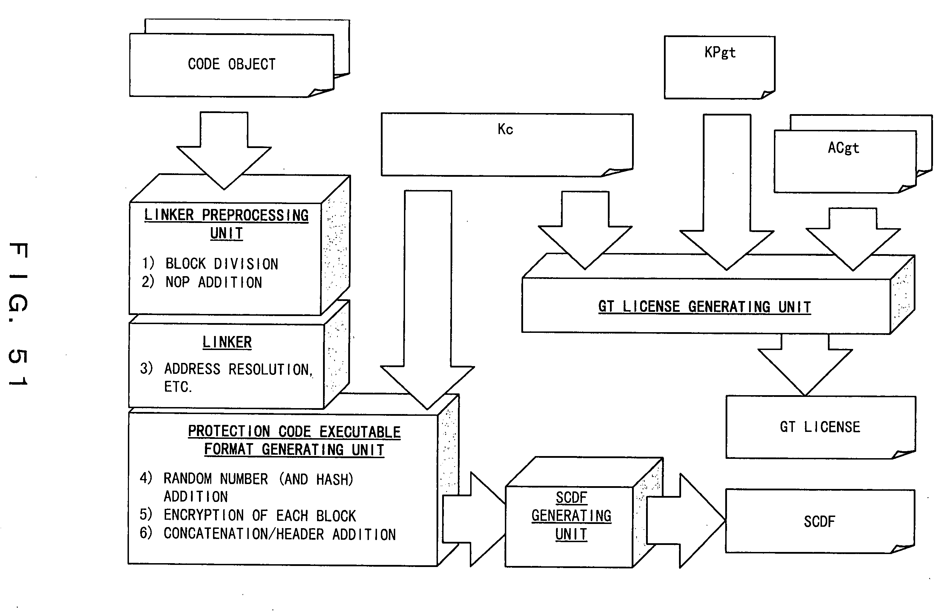

The fourth preferred embodiment is described next. A program code object created with a conventional compiler or assembler does not have information about GT protection. Such information can be converted into a protection code executable format in a GT, and further converted into an SCDF (Super Content Distribution Format) with the method shown in Fig. 51.

An example of a tool group outputting a protection code executable format from a code object is shown in Fig. 51. This figure proposes an example where a protection code executable format and a license are generated, and SCDF data is generated through an SCDF generation tool so as to superdistribute the executable format.

As shown in Fig. 51, the SCDF generation tool comprises a linker preprocessing unit, a linker, a protection code executable format generating unit, and an SCDF creating unit. Firstly, a code object is divided into a plurality of blocks by the linker preprocessing unit, and a NOP instruction is added to each of the blocks. Then, the linker makes an address resolution. After the linker, the protection code executable format generating unit generates a protection code executable format by encrypting each of the blocks with a code encryption key. In the meantime, the GT license generating unit generates a license which includes the code encryption key, and is encrypted with a public key pairing with the private key.

The fifth preferred embodiment is described next. To implement protection by the GT 10, the GT 10 and a DRM software module protected by the GT 10 are required. At the outset, however, a GT is not popularized, and an OS does not support the functions of the GT 10. Therefore, popularization must be accelerated with the following scenario.
(1) At the beginning, a hardware instruction emulator for a CPU expanded portion is developed with a software TRM, and DRM software for a conventional CPU is emulated. As a result, the DRM software for a conventional CPU can run on the GT 10 as protection software.
(2) An existing DRM module is applied as a DRM portion.
(3) Tamper resistant space management, protection context switching management, DRM, etc. must be comprised outside an OS package until the OS supports the functions of the GT 10.

Additionally, an application and a decoder DRM may be integrated into one package, and Kc and Kd may be identical at the outset.

Application examples of the GTs referred to in the above described preferred embodiments are described below as the sixth to the twelfth preferred embodiments.

Various examples can be cited as application examples of the GTs. Here, a personal computer, a workstation, a PDA (Personal Digital Assistant), a cellular phone (including a personal handyphone system), an IC card such as a smart card, etc., an RFID media, an AV (AudioVisual) appliance, a GRID calculation, a robot, etc. are cited and described as examples.

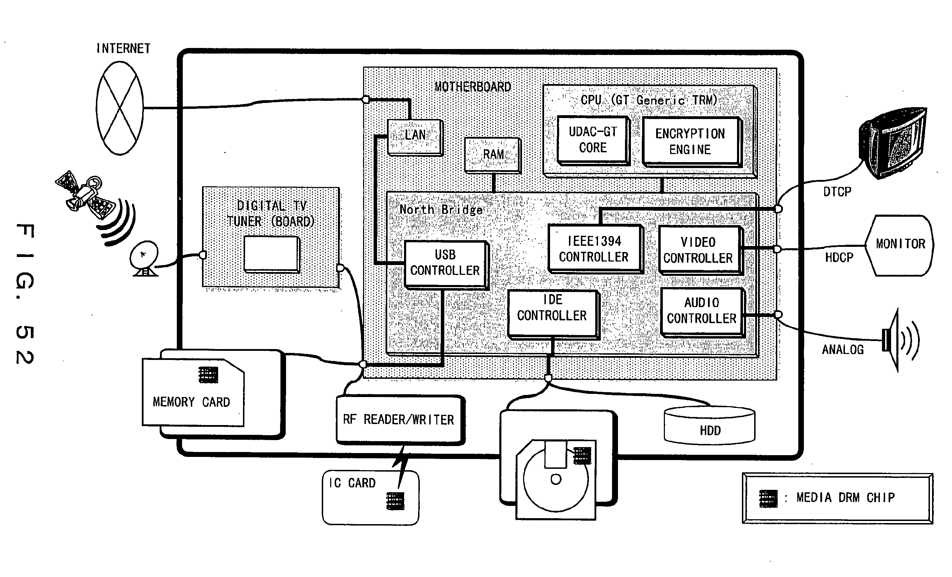

First of all, an application of the GT to a personal computer and a workstation is described as the sixth preferred embodiment. System configuration in the case where the GT 10 or 100 is mounted in a personal computer or a workstation is exemplified in Fig. 52. As shown in this figure, the GT 10 or 100 is mounted on a motherboard. A system controller includes a USB (Universal Serial Bus) controller, an IDE (Integrated Drive Electronics) controller, an IEEE1394 controller, a video controller, an audio controller, etc.

In Fig. 52, a media DRM chip is built in a recording medium, on which digital contents is recorded, such as a memory card, an IC card, a magnetic disk, a magneto-optical disk, a digital versatile disk, etc. The media DRM chip is a module protected in the GT 10 or 100. With such a configuration, the GT is adopted for a computer without specially building a chip dedicated to encryption/decryption in a recording medium, whereby digital contents can be protected as robust as a hardware TRM. In Fig. 52, although North Bridge, USB and IDE, and IEEE1394 are respectively represented as a system controller, interfaces, and a serial bus, they are not intended to limit the system configuration.

Additionally, personal authentication, TCPA, an electronic wallet, personal information protection, trusted GRID computing, etc. are implemented with a robust security level equivalent to a hardware TRM only by developing/adding software.

Furthermore, electronic voting software created as GT protection software is loaded into a PC, etc., so that electronic voting can be conducted from the PC. Still further, file management software created as GT protection software is loaded into a PC, etc., so that a secure file system can be configured.

An application to a mobile appliance such as a PDA, a cellular phone, etc. is described next as the seventh preferred embodiment.

For a TCPA (Trusted Computing Platform Alliance) function of a PC, a special hardware device must be connected to the PC with a conventional method. However, if a GT is mounted on a PC, this function can be implemented only by developing software running on the PC.

Also a terminal authentication function of a cellular phone can be similarly implemented with a security level robuster than with a conventional method. For example, a function for replacing a SIM (Subscriber Identity Module) card of a cellular phone is implemented more safely with the use of software for replacing protection data between cellular phones mounting a GT.

Also when a GT is applied to a mobile product such as a cellular phone, a PDA, etc., contents protection with a robust level equivalent to a hardware TRM can be implemented without specially mounting a chip dedicated to encryption/decryption.

As a matter of course, a personal authentication function, a credit card function, a prepaid card function, a personal information protection function, etc. can be provided to a cellular phone or a PDA by adding software. These functions are implemented with a robust security level equivalent to a hardware TRM.

An application to a security card or module such as an IC card, an RFID module, etc. is described next as the eighth preferred embodiment.

For an IC card, with a conventional method, each time its security function is customized, an individual chip implemented as a TRM must be produced. Besides, evaluation standards of a hardware TRM must be reviewed for each individual chip.

According to this preferred embodiment, however, an IC card with an added security robust level equivalent to a hardware TRM can be created only by adding a security function to be protected to a GT later. Also security evaluations of the IC card may be made only for firmware added to the GT.

If the GT 10 or 100 is mounted in a security card or module such as an IC card, an RFID module, etc., only a CPU portion may be implemented as a TRM without implementing each customized chip as a TRM. In this way, a robust media DRM equivalent to a hardware TRM level can be implemented without specially mounting a chip dedicated to encryption/decryption. Note that a personal authentication function, a credit card function, a prepaid card function, etc. can be also implemented with robust security equivalent to a hardware TRM level only by adding software.

Additionally, only a core control portion of the GT may be replaced if the lifetime of the GT is shorter than a CPU. The GT core control portion is a portion relating to a TRM, a TLB, etc. In this case, a CPU and an IC card must be connected via an ultrahigh-speed bus.

An application to an AV appliance is described next as the ninth preferred embodiment.

If the GT is mounted in an AV appliance, not each customized chip but only a CPU portion may be implemented as a TRM. In this way, DRM having a robust level equivalent to a hardware TRM can be implemented without specially mounting a chip dedicated to encryption/decryption. Furthermore, a personal authentication function, an online accounting function, etc. can be provided to an AV appliance by adding software to the AV appliance in addition to the GT. Also these functions can be implemented with a robust level equivalent to a hardware TRM.

An application to mobile agent protection is described next as the tenth preferred embodiment.

The GT can implement a protection function with which an agent fulfills its mission against an illegal attack at a move destination. Namely, the GT can provide a safe move function to a VHTRM as a tamper resistant agent. By making a mobile agent tamper resistant, a security function similar to that implemented when the GT is applied to a GRID calculation referred to in the eleventh preferred embodiment can be implemented.

An application to the GRID calculation is described next as the eleventh preferred embodiment.

The GRID calculation and a network agent conventionally have the following problems.
1. Integrity: It cannot be verified whether or not a requested executable code is properly executed by a correct CPU with correct data at a request destination of the GRID calculation. Therefore, even if a request destination user performs any illegal action, or even if a virus that rewrites an executable code invades a computer at a request destination, there are no means for securely verifying such problems.
2. Confidentiality: Leakage or an illegal copy of a code or data can possibly occur at a calculation request destination.
3. Accounting: Integrity of an accounting process or accounting data must be guaranteed, since an illegal accounting process or falsification of CPU use amount data can possibly be preformed at a calculation request destination.
4. Processing speed becomes significantly slow if a software TRM is used to overcome the above described problems. This does not meet the requisites of the GRID calculation which stresses the processing speed. Besides, a software TRM can be easily broken with particular knowledge of a computer.

Since these problems exist, a general personal computer or workstation cannot be positively used as a request destination of the GRID calculation.

However, software executed at a calculation request destination is developed as a protection code that runs on a CPU implemented as a GT, so that the following functions are realized, which overcomes the above described problems.
1. Authentication of a safe CPU (GT), and prevention and protection of an executable code.
2. A function for preventing a calculation process from being falsified.
3. Safe accounting.
4. Prevention of an illegal copy and illegal use of an executable code.
5. Optimization of a calculation request destination selection.
6. Specifiability of a TRM level, an effective date of a certificate, etc. for information that requires reliability.

An application to a robot is described next as the twelfth preferred embodiment.

Studies and announcements of an autonomous robot that performs an operation or an action of a human being or an animal as a proxy are briskly made, and also a review for their safety becomes important more and more. So far, there has been a threat that a computer as a mere information processing device is seized by a virus, etc. Also a robot that physically moves, and surpasses the force of a human being depending on its usage must be expected to create a similar situation. However, the following mechanisms are comprised in a robot, so that such a problem can be overcome.
1. A GT is implemented for all of CPUs of dangerous components of a robot, and a certificate issued by a robot acknowledgement organization is buried in the GT.
2. A CPU for a robot has a mechanism for executing only a code whose signature can be verified.
3. A CPU for a robot does not exchange information of a high security level with a CPU that does not have a certificate.
4. A "homicide/injury prohibition rule" is implemented as GT protection software, and a private key of a certificate issued by the acknowledgement organization is buried.
5. A private key of a certificate issued by the acknowledgement organization is buried only in an application that uses "homicide/injury prohibition rule" implementation software according to the rule.
6. This rule engine is used from all of program codes of all input processes of a robot, and its operational processes that can possibly do harm, and the entire program codes are protected by a GT.
7. A digital signature must be affixed to a program code to be stored without fail. Before the code is executed, the signature is checked. If execution authorization is not obtained, the execution is stopped.
8. Entire integrated software is protected by a GT.

As a result, a virus that makes a robot an atrocious culprit, or falsification of a central control function, etc. can be coped with.

An application to personal information protection is described next as the thirteenth preferred embodiment.

At present, a personal information management service which is trusted from everybody, such as ".NET", manages many pieces of personal information, and other services can obtain only personal information required to provide their own services, and their statistical information at most. Accordingly, these services must use a particular personal information management service in order to obtain client statistical information from a business strategy viewpoint, or to provide an advertisement mail service. Security problems in such a situation are as follows.
1. There is a possibility that a service that collects personal information does not comply with a "personal information protection policy" presented to a service user. Even if the policy can be replaced by using P3P (Platform for Privacy Preference), there is no technique for forcing this.
2. For a service handling personal information, an employee who processes personal information himself can possibly make an illegal personal information leak.

To overcome these problems, according to this preferred embodiment, the GT is implemented as a CPU of a server that provides each service, and server DRM software or a server application, which handles personal information, is packaged as a GT protection code for the server. As described above, in a GT license, an access condition can be set for a process that executes software. Accordingly, also for a server on which access control cannot be externally forced, an access condition for an application operation can be forced.

In this way, a reliable personal information management service can be provided to a general consumer. Furthermore, an active personal information exchange between sites by a user request can be made by promoting active provision of personal information to a service site, so that advertisement/business and consumption activities can be further activated.

An application to an anti-virus means is described next as the fourteenth preferred embodiment.

With a conventional anti-virus means, a digital signature check function of software and virus check software are used together. However, this method is incompetent for an attack that the latest virus makes by rewriting an executable file which runs until the signature check function or the virus check software is invoked.

A GT having a code signature sequential verification function can cope with such a virus. To implement this, the GT according to the second preferred embodiment is implemented as a CPU, and software (code and data) for checking an installed code is protected by the GT. Then, the GT sequentially verifies a code signature from when the system is booted up until when virus check software is invoked. Then, the virus check software is executed in a tamper resistant mode of the GT. The virus check software calculates a hash of a code or verifies a signature before each code is executed.

In this way, a security hole in a system that cannot cope with a new type virus can be destroyed. The code signature check function is already described.

As described above, a GT is adopted for an anti-virus means, whereby anti-virus software with a robust level much higher than a conventional method can be implemented.

The various application examples of the GTs are described above. A CPU implemented as a GT is adopted in this way, whereby an application to the infrastructure of each type of leading-edge information technology, which is suppressed by a threat in terms of information security, can be expected to be promoted. For example, the following technological innovations can be expected from an industrial viewpoint.
1. Contents that is not actively provided to a PC due to robustness and functional problems of contents protection is positively flowed to the Internet, and superdistribution is actively promoted with each type of P2P (Person to Person) technology.
2. An application to user authentication, an electronic wallet, etc., so that shopping using only a normal information appliance can be safely made only by adding software. As a result, a user who is afraid of Internet shopping will do shopping. Also a selling side can put a commercial product at a site, and sell the product without worry. As a result, the market expands, and a global Internet selling business is promoted.
3. A robust personal information protection function is implemented, whereby advertisement and consumption activities via the Internet can be further activated by safely and positively selling personal information.
4. A GRID calculation, to which calculation power cannot be actively provided due to the fear of use of an unknown CPU, or a sense of unfairness caused by a charge-free lease of a CPU, can be positively utilized. As a result, the use efficiency of a normal shared CPU can be expected to be improved approximately ten times or more. Accordingly, by simple arithmetic, it can be expected that the processing speed of each computer is improved approximately ten times or more on the average in comparison with the case where the GRID calculation is made only with a local CPU. Additionally, worldwide CPUs can be centralized and used for a necessary calculation.
5. "Superdistribution" of software components, and "superappropriation" that targets autonomous collaborative distribution development beyond a network are promoted with a robust anti-virus means and security of a module use charge P2P accounting.
6. Safety guaranteed by a GT positively promotes the penetration into a robust practical robot society.

Furthermore, the GT can be an infrastructure of highly trusted ubiquitous computing as a safe general-purpose calculation processing platform available to anybody in anywhere at any time in the future.

While the embodiments of the invention have been described, the scope of the invention is not limited within the embodiments, various modifications may be made to the invention.

## Claims

1. A central processing unit executing a program, comprising
encrypting means for encrypting a block, and decrypting an encrypted block, wherein:
a first private key is concealed in secrecy; and
said encrypting means obtains from a first license a code decryption key for decrypting an encrypted block which configures a first program by decrypting with the first private key the first license of the first program, which is encrypted with a public key pairing with the first private key.

2. The central processing unit according to claim 1, further comprising
a cache, wherein
said encrypting means decrypts the encrypted block in units of cache when the encrypted block which configures the first program is output from a memory region to said cache.

3. The central processing unit according to claim 1 or 2, further comprising
a tamper resistant buffer that a user cannot reference or falsify, wherein
the code decryption key is recorded to said tamper resistant buffer.

4. The central processing unit according to claim 3, wherein:
the first license includes an access condition used when an execution process of the first program accesses a memory region;
a TLB (Translation Lookaside Buffer) recording an address of the memory region, at which the encrypted block which configures the first program is recorded, and the access condition to the memory region,
a memory managing means,
a cache, and
a processor core are further comprised;
said TLB and said tamper resistant buffer are linked;
said memory managing means obtains the access condition to the memory region from said TLB based on an address of a memory region, at which an encrypted block is recorded, and further obtains the code decryption key corresponding to the memory region from said tamper resistant buffer;
said processor core determines whether or not an access to the memory region is permitted to be made from the execution process based on the access condition obtained by said memory managing means, and the access to the memory region is made from the execution process if said processor core determines that the access to the memory region is permitted to be made; and
said encrypting means writes to said cache a code obtained by decrypting the encrypted block within the memory region with the code decryption key obtained by said memory managing means.

5. The central processing unit according to claim 4, wherein
the code decryption key and the encryption key used to encrypt the encrypted block are a same key.

6. The central processing unit according to claim 4 or 5, wherein
when a memory region accessed from the execution process of the first program switches from a first memory region to a second memory region, said memory managing means further determines whether or not a code decryption key corresponding to the first memory region, which is obtained from said tamper resistant buffer, and a code decryption key corresponding to the second memory region match, and an access is made to the second memory region from the execution process if said memory managing means determines that the code decryption keys match, or the access to the second memory region is not made from the execution process if said memory managing means determines that the code decryption keys mismatch.

7. The central processing unit according to claim 1, 2, 3, 4, 5 or 6, wherein
the first license is buried in the first program.

8. The central processing unit according to claim 4, 5, 6 or 7, wherein:
a different data encryption key is recorded to said tamper resistant buffer for each code decryption key;
said encrypting means records data within said cache to the memory region that is corresponded to the data decryption key by said TLB after encrypting the data with the data decryption key when recording the data to the memory region, and writes encrypted data within the memory region to said cache after decrypting the read data with the data encryption key when reading the encrypted data within the memory region.

9. The central processing unit according to claim 8, wherein
when data obtained by executing a first code is used by a second code, said processor core sets said TLB so as to provide the second code with an access right to a memory region to which the data is recorded, and also sets said TLB and said tamper resistant buffer so that the second code uses a data encryption key for encrypting the data when reading the data from the memory region.

10. The central processing unit according to claim 4, 5, 6, 7, 8 or 9, further comprising:
a register; and
a register access control table for performing access control for said register, wherein
said processor core controls sealing and release of said register with a sealing flag within said register access control table.

11. The central processing unit according to claim 4, 5, 6, 7, 8, 9, or 10, wherein
when contents of said TLB is recorded to a page table within an external storage device, said encrypting means affixes a signature to the contents to be recorded, and verifies whether or not the signature is legal when contents of the page table is captured into said TLB.

12. The central processing unit according to claim 3, 4, 5, 6, 7, 8, 9, 10 or 11, wherein
when contents of said tamper resistant buffer is recorded to an encryption key table within an external storage device, said encrypting means encrypts the contents to be recorded.

13. The central processing unit according to claim 1, 2, 3, 4, 5, 6, 7, 8, 9, 10, 11 or 12, which is connected to a different central processing unit, wherein:
a session key is obtained by making mutual authentication with the different central processing unit; and
said encrypting means encrypts contents of said cache with the session key, and synchronously transfers the contents to the different central processing unit.

14. The central processing unit according to claim 1, 2, 3, 4, 5, 6, 7, 8, 9, 10, 11, 12 or 13, wherein
said encrypting means obtains a private key encryption key used when a second private key is encrypted by decrypting the second license added to a second program with a public key before the first program is executed, and decrypts the second private key with the obtained private key encryption key.

15. The central processing unit according to claim 14, wherein:
an access condition indicating that only a read can be made from an execution process of the first program is added to the second license; and
the second private key can be read only from the execution process of the first program.

16. The central processing unit according to claim 14 or 15, wherein
the second private key is encrypted with a data encryption key and recorded to a memory region.

17. The central processing unit according to claim 3, 4, 5, 6, 7, 8, 9, 10, 11, 12, 13, 14, 15 or 16, wherein:
said tamper resistant buffer records unable-to-output information indicating whether or not to output corresponding information within said tamper resistant buffer to an outside of said tamper resistant buffer, and cache lock information indicating whether or not to output corresponding information to an outside of said cache; and
a move of the first license between the first program and a different program is managed based on the unable-to-output information and the cache lock information.

18. The central processing unit according to claim 1, 2, 3, 4, 5, 6, 7, 8, 9, 10, 11, 12, 13, 14, 15, 16 or 17, wherein
the first program is a trusted computing module.

19. The central processing unit according to claim 1, 2, 3, 4, 5, 6, 7, 8, 9, 10, 11, 12, 13, 14, 15, 16 or 17, wherein
the first program is a program for causing the central processing unit to implement an electronic wallet.

20. The central processing unit according to claim 1, 2, 3, 4, 5, 6, 7, 8, 9, 10, 11, 12, 13, 14, 15, 16 or 17, wherein
the first program is a program handling personal information.

21. The central processing unit according to claim 1, 2, 3, 4, 5, 6, 7, 8, 9, 10, 11, 12, 13, 14, 15, 16 or 17, wherein
the first program is a virus check program of a code installed in the central processing unit.

22. The central processing unit according to claim 1, 2, 3, 4, 5, 6, 7, 8, 9, 10, 11, 12, 13, 14, 15, 16 or 17, wherein
the first program is a mobile agent that moves among a plurality of central processing units.

23. The central processing unit according to claim 1, 2, 3, 4, 5, 6, 7, 8, 9, 10, 11, 12, 13, 14, 15, 16, 17, 18, 19, 20, 21 or 22, wherein:
the block which configures the first program includes hash verification requirement/nonrequirement information indicating whether or not verification of a hash value of the block is required; and
a hash means for calculating the hash value of the block, and adding the hash value to the block based on the hash verification requirement/nonrequirement information, and
a hash verifying means for verifying the hash value of the block based on the hash verification requirement/nonrequirement information are further comprised.

24. The central processing unit according to claim 1, 2, 3, 4, 5, 6, 7, 8, 9, 10, 11, 12, 13, 14, 15, 16, 17, 18, 19, 20, 21, 22 or 23, wherein:
the block which configures the first program includes encryption requirement/nonrequirement information indicating whether or not the block requires protection; and
a protection block selecting means for determining whether the block is output either to said encrypting means or to a cache or a memory region unchanged based on the encryption requirement/nonrequirement information is further comprised.

25. The central processing unit according to claim 1, 2, 3, 4, 5, 6, 7, 8, 9, 10, 11, 12, 13, 14, 15, 16, 17, 18, 19, 20, 21, 22 or 23, wherein:
a header of an executable file of the first program includes an encrypted block bitmap indicating a configuration of the block which configures the first program; and
a protection block selecting means for determining whether the block is output either to said encrypting means or to a cache or a memory region unchanged based on the encrypted block bitmap is further comprised.

26. The central processing unit according to claim 1, 2, 3, 4, 5, 6, 7, 8, 9, 10, 11, 12, 13, 14, 15, 16, 17, 18, 19, 20, 21, 22 or 23, wherein:
a start of a code of the first program is a code which specifies that a plurality of blocks configuring the first program are a repetition of a combination of a plain text block and an encrypted block, and also specifies a number of successive plain text blocks, and a number of successive encrypted blocks in the combination; and
said processor core determines whether the block is output either to said encrypting means or to said cache or a memory region unchanged by executing the code.

27. The central processing unit according to claim 2, 3, 4, 5, 6, 7, 8, 9, 10, 11, 12, 13, 14, 15, 16, 17, 18, 19, 20, 21, 22, 23, 24, 25 or 26 further comprising
between said cache and a memory
a cache line via said encrypting means, and
a cache line not via said encrypting means.

28. A computer comprising the central processing unit according to claim 1, 2, 3, 4, 5, 6, 7, 8, 9, 10, 11, 12, 13, 14, 15, 16, 17, 18, 19, 20, 21, 22, 23, 24, 25 or 26.

29. An IC card comprising the central processing unit according to claim 1, 2, 3, 4, 5, 6, 7, 8, 9, 10, 11, 12, 13, 14, 15, 16, 17, 18, 19, 20, 21, 22, 23, 24, 25 or 26.

30. The IC card according to claim 29, wherein
the first program is a program for implementing a security function of the IC card.

31. The central processing unit according to claim 1, 2, 3, 4, 5, 6, 7, 8, 9, 10, 11, 12, 13, 14, 15, 16, 17, 18, 19, 20, 21, 22, 23, 24, 25 or 26, which is mounted in a robot, wherein
the first program is a control program for controlling the robot.

32. A program for causing a central processing unit to execute a process of a control for giving authorization to execute a protection program, wherein, the protection program is encrypted with a code encryption key, and a license, which includes the code encryption key and is encrypted with a public key pairing with a private key comprised in secrecy within the central processing unit, is provided in correspondence with the protection program, the process comprising:
entering the license into the central processing unit before the central processing unit executes the protection program;
causing encrypting means comprised by the central processing unit to obtain the code encryption key from the license by decrypting the license with the private key; and
causing the encrypting means to decrypt the protection program with the code encryption key.

33. A recording device in which is recorded a program for causing a central processing unit to execute a process of a control for giving authorization to execute a protection program, wherein, the protection program is encrypted with a code encryption key, and a license, which includes the code encryption key and is encrypted with a public key pairing with a private key comprised in secrecy within the central processing unit, is provided in correspondence with the protection program, the process comprising:
entering the license into the central processing unit before the central processing unit executes the protection program;
causing an encrypting means comprised by the central processing unit to obtain the code encryption key from the license by decrypting the license with the private key; and
causing the encrypting means to decrypt the protection program with the code encryption key.

34. A program execution authorization method giving authorization to execute a protection program to a central processing unit, wherein, the protection code program is encrypted with a code encryption key, and, a license, which includes the code encryption key and is encrypted with a public key pairing with a private key comprised within the central processing unit, is provided in correspondence with the protection program, comprising:
causing the central processing unit to obtain the license before executing the protection program;
causing the central processing unit to obtain the code encryption key from the license by decrypting the license with the private key; and
causing the central processing unit to decrypt the protection program with the code encryption key.

35. A program code executed by a computer, wherein:
the program code is encrypted with a code encryption key;
a license, which includes the code encryption key and is encrypted with a public key paring with a private key comprised in secrecy within a central processing unit comprised by the computer to execute the program code, is provided in correspondence with the program code;
the license is entered into the central processing unit before the program code is executed;
the license is decrypted with the private key by the central processing unit; and
the program code is decrypted with the code encryption key obtained from the license by the central processing unit.

36. A computer-readable storage medium on which is recorded a program code executed by a computer, wherein:
the program code is encrypted with a code encryption key;
a license, which includes the code encryption key and is encrypted with a public key paring with a private key comprised in secrecy within a central processing unit comprised by the computer to execute the program code, is provided in correspondence with the program code;
the license is entered into the central processing unit before the program code is executed;
the license is decrypted with the private key by the central processing unit; and
the program code is decrypted with the code encryption key obtained from the license by the central processing unit.

37. A program generating device generating a program executed by a computer having a private key concealed in secrecy, and an encrypting unit performing encryption and decryption, comprising
inputting means for inputting a code object,
linker preprocessing means for dividing the input code object into a plurality of blocks, and adding an NOP instruction to each of the plurality of blocks,
linker means for making an address resolution,
protection code executable format generating means for generating a protection code executable format by encrypting each of the plurality of blocks with a code encryption key, and
license generating means for generating a license that includes the code encryption key and is encrypted with a public key pairing with the private key, wherein:
the license is entered into the central processing unit before the computer executes the protection code executable format, and decrypted with the private key by the encrypting means; and
the protection code executable format is decrypted with the code encryption key obtained from the license by the encrypting means.
